(19) Europäisches Patentamt
European Patent Office
Office européen des brevets

(11) **EP 2 266 699 B1**

(12) **EUROPÄISCHE PATENTSCHRIFT**

(45) Veröffentlichungstag und Bekanntmachung des Hinweises auf die Patenterteilung:
**04.06.2014 Patentblatt 2014/23**

(51) Int Cl.:
***B01L 7/00*** *(2006.01)* ***C12Q 1/68*** *(2006.01)*

(21) Anmeldenummer: **10179369.3**

(22) Anmeldetag: **02.04.2004**

(54) **Vorrichtung zur Vervielfältigung und zum Nachweis von Nukleinsäuren**

Device for the amplification and detection of nucleic acids

Appareil pour l'amplification et la détection d'acide nucléique

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.04.2003 DE 10315074**

(43) Veröffentlichungstag der Anmeldung:
**29.12.2010 Patentblatt 2010/52**

(62) Dokumentnummer(n) der früheren Anmeldung(en) nach Art. 76 EPÜ:
**04725346.3 / 1 610 899**

(73) Patentinhaber: **Clondiag GmbH**
**07749 Jena (DE)**

(72) Erfinder:
- **Bickel, Ralf**
**07745, Jena (DE)**
- **Ellinger, Thomas**
**07743, Jena (DE)**
- **Ermantraut, Eugen**
**07745, Jena (DE)**
- **Kaiser, Thomas**
**99441, Hohstedt (DE)**
- **Schulz, Torsten**
**07749 Jena (DE)**
- **Ullrich, Thomas**
**07745 Jena (DE)**

(74) Vertreter: **Huenges, Martin**
**Maiwald Patentanwalts GmbH**
**Elisenhof**
**Elisenstrasse 3**
**80335 München (DE)**

(56) Entgegenhaltungen:
**WO-A-01/02094 WO-A-03/004699**

- **EUGEN ERMANTRAUT (CLONDIAG GMBH): "Array based integrated platform for diagnostic genotyping", DECHEMA STATUSSEMINAR CHIPTECHNOLOGIEN, 21. Januar 2002 (2002-01-21), Seiten 6-7, XP002607627, Frankfurt**

**Beschreibung**

Die Erfindung betrifft Verfahren zur Vervielfältigung von Nukleinsäuren sowie zum Nachweis von spezifischen Wechselwirkungen zwischen molekularen Target- und Sondenmolekülen.

Biomedizinische Tests basieren häufig auf dem Nachweis einer Wechselwirkung zwischen einem Molekül, das in bekannter Menge und Position vorhanden ist (der molekularen Sonde) und einem nachzuweisenden, unbekannten Molekül bzw. nachzuweisenden, unbekannten Molekülen (den molekularen Ziel- oder Targetmolekülen). Bei modernen Tests sind die Sonden in Form einer Substanzbibliothek auf Trägern, den so genannten Microarrays oder Mikroarrays oder Chips abgelegt, so dass eine Probe parallel an mehreren Sonden gleichzeitig analysiert werden kann (siehe z.B. D. J. Lockhart, E. A. Winzeler, Genomics, gene expression and DNA arrays; Nature 2000, 405, 827-836). Für die Herstellung der Microarrays werden die Sonden dabei üblicherweise in vorgegebener Art und Weise auf einer geeigneten, beispielsweise in WO 00/12575 beschriebenen Matrix immobilisiert (siehe z.B. US 5,412,087, WO 98/36827) bzw. synthetisch erzeugt (siehe z.B. US 5,143,854).

Der Nachweis einer Wechselwirkung zwischen der Sonde und dem Targetmolekül erfolgt üblicherweise folgendermaßen: Nach der Fixierung der Sonde bzw. der Sonden in vorgegebener Art und Weise an einer bestimmten Matrix in Form eines Microarrays werden die Targets in einer Lösung mit den Sonden in Kontakt gebracht und unter definierten Bedingungen inkubiert. Infolge der Inkubation findet zwischen Sonde und Target eine spezifische Wechselwirkung statt. Die dabei auftretende Bindung ist deutlich stabiler als die Bindung von Targetmolekülen an Sonden, die für das Targetmolekül nicht spezifisch sind. Zum Entfernen von Targetmolekülen, die nicht spezifisch gebunden worden sind, wird das System mit entsprechenden Lösungen gewaschen oder erwärmt.

Der Nachweis der spezifischen Wechselwirkung zwischen einem Target und seiner Sonde kann dann durch eine Vielzahl von Verfahren erfolgen, die in der Regel von der Art des Markers abhängen, der vor, während oder nach der Wechselwirkung des Targetmoleküls mit dem Mikroarray in Targetmoleküle eingebracht worden ist. Typischerweise handelt es sich bei solchen Markern um fluoreszierende Gruppen, so dass spezifische Target-Sonden-Wechselwirkungen mit hoher Ortsauflösung und im Vergleich zu anderen herkömmlichen Nachweismethoden, vor allem massensensitiven Methoden, mit geringem Aufwand fluoreszenzoptisch ausgelesen werden können (A. Marshall, J. Hodgson, DNA chips: An array of possibilities, Nature Biotechnology 1998, 16, 27-31; G. Ramsay, DNA Chips: State of the art, Nature Biotechnology 1998, 16, 40-44).

Abhängig von der auf dem Mikroarray immobilisierten Substanzbibliothek und der chemischen Natur der Targetmoleküle können anhand dieses Testprinzips Wechselwirkungen zwischen Nukleinsäuren und Nukleinsäuren, zwischen Proteinen und Proteinen sowie zwischen Nukleinsäuren und Proteinen untersucht werden (zur Übersicht siehe F. Lottspeich, H. Zorbas, 1998, Bioanalytik, Spektrum Akademischer Verlag, Heidelberg/Berlin).

Als Substanzbibliotheken, die auf Microarrays oder Chips immobilisiert werden können, kommen dabei Antikörper-Bibliotheken, Rezeptor-Bibliotheken, Peptid-Bibliotheken und Nukleinsäure-Bibliotheken in Frage.

Die Nukleinsäure-Bibliotheken nehmen die mit Abstand wichtigste Rolle ein. Es handelt sich dabei um Microarrays, auf denen Desoxyribonukleinsäure-(DNA) Moleküle oder Ribonukleinsäure- (RNA) Moleküle immobilisiert sind.

Voraussetzung für die Bindung eines beispielsweise mit einer Fluoreszenzgruppe markierten Targetmoleküls in Form eines DNA- oder RNA-Moleküls an eine Nukleinsäuresonde des Microarrays ist, dass sowohl Targetmolekül als auch Sondenmolekül in Form einer einzelsträngigen Nukleinsäure vorliegen. Nur zwischen solchen Molekülen kann eine effiziente und spezifische Hybridisierung stattfinden. Einzelsträngige Nukleinsäureziel- und Nukleinsäuresondenmoleküle erhält man in der Regel durch Hitzedenaturierung und optimale Wahl von Parametern wie Temperatur, Ionenstärke und Konzentration helixdestabilisierender Moleküle. Somit wird gewährleistet, dass nur Sonden mit nahezu perfekt komplementären, d.h. einander entsprechenden Sequenzen mit der Zielsequenz gepaart bleiben (A.A. Leitch, T. Schwarzacher, D. Jackson, I. J. Leitch, 1994, In vitro Hybridisierung, Spektrum Akademischer Verlag, Heidelberg/Berlin/Oxford).

Ein typisches Beispiel für die Verwendung von Mikroarrays in biologischen Testverfahren ist der Nachweis von Mikroorganismen in Proben in der biomedizinischen Diagnostik. Dabei macht man sich die Tatsache zunutze, dass die Gene für ribosomale RNA (rRNA) ubiquitär verbreitet sind und über Sequenzabschnitte verfügen, die für die jeweilige Spezies charakteristisch sind. Diese Spezies-charakteristischen Sequenzen werden in Form von einzelsträngigen DNA-Oligonukleotiden auf ein Mikroarray aufgebracht. Die zu untersuchenden Target-DNA-Moleküle werden zunächst aus der zu Untersuchenden Probe isoliert mit Markern, beispielsweise fluoreszierenden Markern versehen. Anschließend werden die markierten Target-DNA-Moleküle in einer Lösung mit den auf dem Mikroarray aufgebrachten Sonden inkubiert, unspezifisch auftretende Wechselwirkungen werden durch entsprechende Waschschritte entfernt und spezifische Wechselwirkungen durch fluoreszenzoptische Auswertung nachgewiesen. Auf diese Art und Weise ist es möglich, mit einem einzigen Test in einer Probe gleichzeitig z.B. mehrere Mikroorganismen nachzuweisen. Die Anzahl der nachweisbaren Mikroorganismen hängt bei diesem Testverfahren theoretisch nur von der Anzahl der spezifischen Sonden ab, die auf dem Mikroarray aufgebracht worden sind.

Zur Detektion molekularer Wechselwirkungen mit Hilfe von Mikroarrays bzw. Sonden-Arrays auf festen Oberflächen sind eine Reihe von Methoden und technischen Systemen beschrieben, von denen einige auch kommerziell erhältlich sind.

Klassische Systeme zur Detektion molekularer Wechselwirkungen beruhen auf dem Vergleich der Fluoreszenzintensitäten spektral selektiv angeregter, mit Fluorophoren markierter Targetmoleküle. Fluoreszenz ist die Eigenschaft von bestimmten Molekülen, bei Anregung mit Licht einer bestimmten Wellenlänge selber Licht zu emittieren. Dabei ergibt sich ein charakteristisches Absorptions- und Emissionsverhalten. Bei der Analyse wird mit steigender markierter Moleküldichte auf der funktionalisierten Oberfläche, z.B. durch steigende Effizienz der molekularen Wechselwirkung zwischen Target- und Sondenmolekülen, eine proportionale Zunahme des Fluoreszenzsignals angenommen.

Die insbesondere quantitative Detektion von Fluoreszenzsignalen wird mit modifizierten Verfahren der Fluoreszenzmikroskopie vorgenommen. Dabei wird das Licht der Absorptionswellenlänge von dem der Emissionswellenlänge mittels Filter oder Dichroiten getrennt und das Messsignal mittels optischer Elemente wie Objektiven und Linsen auf geeignete Detektoren wie z.B. zweidimensionale CCD-Arrays bildgebend abgebildet. Die Analyse erfolgt im Allgemeinen durch digitale Bildverarbeitung.

Die bislang bekannten technischen Lösungen unterscheiden sich hinsichtlich ihres optischen Aufbaus und der verwendeten Komponenten. Probleme und Limitationen solcher Aufbauten resultieren aus dem Signalrauschen (dem Hintergrund), das durch Effekte wie Bleichen und Quenching der verwendeten Farbstoffe, Autofluoreszenz der Medien, Assemblierungselemente und optischen Komponenten sowie Streuungen, Reflexionen und Fremdlicht im optischen Aufbau wesentlich bestimmt wird.

Daraus resultiert ein hoher technischer Aufwand zum Aufbau hochsensitiver Fluoreszenz-Detektoren zum qualitativen und quantitativen Vergleich von Sonden-Arrays. Insbesondere zum Screening mit mittleren und hohen Durchsätzen sind speziell angepasste Detektionssysteme erforderlich, die einen gewissen Automatisierungsgrad besitzen.

Zur Optimierung von Standardepifluoreszenz-Aufbauten zum Auslesen molekularer Arrays sind CCD-basierte Detektoren bekannt, die zur Diskriminierung von optischen Effekten wie Streuung und Reflexionen die Anregung der Fluorophore im Dunkelfeld durch Auflicht oder Durchlicht realisieren (siehe z.B. C. E. Hooper et al., Quantitative Photon Imaging in the Life Sciences Using Intensified CCD Cameras, Journal of Biolumnescence and Chemiluminescence (1990), S. 337-344). Die Abbildung der Arrays erfolgt dabei entweder in einer Belichtung oder durch ein Rastern unter Verwendung von höher auflösender Optik. Die Verwendung von multispektralen Belichtungsquellen ermöglicht einen relativ einfachen Zugang zu verschiedenen Fluorophoren durch die Verwendung verschiedener Anregungsfilter (-kombinationen). Nachteilig ist allerdings, dass Autofluoreszenz und systembedingte optische Effekte wie die Beleuchtungshomogenität über dem Array komplizierte Beleuchtungsoptiken und Filtersysteme erfordern.

Weitere Methoden zur quantitativen Detektion von Fluoreszenzsignalen basieren auf der konfokalen Fluoreszenzmikroskopie. In einer typischen konfokalen Anordnung wird das Objekt in der Brennebene des Objektivs durch eine Punktlichtquelle beleuchtet. Das vom Objekt zurückgestrahlte Licht wird durch einen Strahlteiler in Richtung eines optischen Punktlichtdetektors gespiegelt und nachgewiesen. Punktlichtquelle, Objekt und Punktlichtdetektor liegen dabei in exakt optisch konjugierten Ebenen. Daher wird Licht, das von außerhalb der Brennebene stammt, nicht scharf am Detektor fokussiert und damit gar nicht erst registriert. So werden Objektteile, die ober- oder unterhalb der Brennebene liegen, ausgeblendet. In dieser Eliminierung des störenden Streulichtanteils außerhalb der Brennebene liegt der Vorteil der konfokalen Methode. Das Gesamtbild entsteht dadurch, dass der Lichtpunkt zeilenförmig über das Objekt geführt wird. Dies wird auch als Scannen bezeichnet. Die bei diesem Rastervorgang aufgenommenen Bilddatensätze werden nachträglich zu einem 2D- bzw. 3D-Bild kombiniert.

Aufgabe der Scaneinheit ist es, den Lichtstrahl rasterförmig über das unter dem Mikroskop befindliche Objekt zu bewegen. Dazu gibt es prinzipiell vier Möglichkeiten:

a) Das Objekt wird auf einem beweglichen Tisch am ortsfesten Laser vorbeigeführt. Der Laser ist dabei in Ruhestellung.

b) Das Objekt ist beweglich und wird am ortsfesten Laser vorbeigeführt. Auch hierbei ist der Laser in Ruhestellung.

c) Der bewegliche Laserstrahl wird am Objekt vorbeigeführt. Das Objekt ist dabei in Ruhestellung.

d) Der Laserstrahl wird in einer Achse, das Objekt in der anderen Achse bewegt.

Beispielsweise in US 5,304,810 beschriebene konfokale Scanning-Systeme beruhen auf der Selektion der Fluoreszenzsignale entlang der optischen Achse mittels zweier Pinholes. Daraus ergibt sich ein hoher Justieraufwand der Proben bzw. die Etablierung eines leistungsfähigen Autofokussystems. Solche Systeme sind in der technischen Lösung hochkomplex. Erforderliche Komponenten wie Laser, Pinholes, gegebenenfalls gekühlte Detektoren wie z.B. PMT, Avalanche-Dioden oder CCD, komplexe hochgenaue mechanische Translationselemente und Optiken müssen mit erheblichem Aufwand aufeinander optimiert und integriert werden (siehe z.B. US 5,459,325; US 5,192,980; US 5,834,758). Der Miniaturisierungsgrad und Preis ist durch die Vielzahl und Funktionalität der Komponenten limitiert.

Analysen basierend auf Sonden-Arrays werden zum derzeitigen Zeitpunkt in der Regel fluoreszenzoptisch ausgelesen (siehe z.B. A. Marshall und J. Hodgson, DNA Chips: An array of possibilities, Nature Biotechnology, 16, 1998, 27-31; G. Ramsay, DNA Chips: State ofthe Art, Nature Biotechnology, 16, Jan. 1998, 40-44). Nachteilig an den vorstehend beschriebenen Detektionsvorrichtungen und -verfahren ist jedoch der hohe Signalhintergrund, der zu einer eingeschränkten Genauigkeit führt, der teilweise erhebliche technische Aufwand sowie die hohen Kosten, die mit den Nachweisverfahren verbunden sind.

Es sind eine Reihe insbesondere konfokaler Systeme bekannt, die für die Detektion von niederintegrierten Substanzbibliotheken im Array-Format geeignet sind, die in fluidischen Kammern angebracht sind (siehe z.B. US 5,324,633, US 6,027,880, US 5,585,639, WO 00/12759).

Zur Detektion von hochintegrierten molekularen Arrays, die insbesondere in fluidischen Systemen angebracht sind, sind die oben beschriebenen Methoden und Systeme vor allem wegen der dort auftretenden Streuungen, Reflexionen und optischen Aberrationen allerdings nur sehr bedingt adaptierbar. Ferner werden bei derartigen hochintegrierten Arrays hohe Anforderungen hinsichtlich der räumlichen Auflösung gestellt, die jedoch bislang technisch nicht realisiert werden konnten.

Es besteht folglich ein Bedarf an hoch integrierten Arrays, mit denen mit relativ geringem technischem Aufwand die Wechselwirkung zwischen Sonden und Targets mit hoher Genauigkeit qualitativ und/oder quantitativ nachgewiesen werden kann.

Die Erhöhung der Selektivität und der Zugang zu alternativen Komponenten motiviert die Etablierung alternativer Imaging-Technologien wie Fluoreszenz-Polarisation und zeitaufgelöste Fluoreszenz für festkörpergebundene Assays. Solche Lösungen insbesondere für hochintegrierte Arrays liegen derzeit jedoch nur konzeptionell vor. Der Effekt der Verdrehung der Polarisationsachse durch polarisiert angeregte Fluorophore wird zur Quantifizierung im Mikrotiter-Format angewandt. Es gibt ferner Ansätze, durch die Verwendung entsprechend modifizierter Polymerfolien als Polarisationsfilter kostengünstige Systeme mit hohem Durchsatz (HTS-Systeme) aufzubauen (siehe I. Gryczcynski et al., Polarisation sensing with visual detection, Anal. Chem. 1999, 71, 1241-1251). Die zur Verfügung stehenden Lichtmengen und Detektoren erschweren derzeit allerdings eine Umsetzung auf Mikroarrays. Ein derartiger Aufbau würde die Integration von Lichtquellen (z.B. Laser, LED, Hochdrucklampen), Polarisationsfiltern (u.U. beschichtete Polymerfolien) und Detektoren (CCD-, CMOS-Kamera) erfordern, eine entsprechende Lösung ist bislang nicht bekannt.

Neuere Entwicklungen nutzen die Fluoreszenz von anorganischen Materialien, wie zum Beispiel von Lanthaniden (M. Kwiatowski et al., Solidphase synthesis of chelate-labelled oligonucleotides: application in triplecolor ligase-mediated gene analysis, Nucleic Acids Research, 1994, 22, 13) und Quantendots (M. P. Bruchez et. al., Semiconductor nanocrystals as fluorescent biological labels, Science 1998, 281, 2013). Die Ausnutzung der spezifischen Fluoreszenzlebensdauer von Fluorophoren im Nanosekunden-Bereich zu deren selektiven Quantifizierung ist sehr aufwendig und wird trotz der Spezifität in dieser ortsaufgelösten Applikation kommerziell nicht verwendet. Farbstoffe mit langer Emissionsdauer im Mikrosekunden-Bereich wie Lanthanid-Gelate erfordern eine Umwandlung der Farbstoffe in eine mobile Phase, so dass eine ortsaufgelöste Detektion nicht möglich ist.

Die Verwendung von Mikropartikeln, die aus ihrer Verwendung in Fernsehröhren bekannt sind (siehe F. van de Rijke et al., Up-Converting Phosphors: A New Reporter Technology for Nucleic Acid Microarrays, European EC Meeting on Cytogenetics (2000) Bari, Italien), als biologische Marker hat bezüglich Sensitivität und Miniaturisierbarkeit des Aufbaus der Detektionstechnik großes Potential, zumal zur Anregung Lichtquellen aus der Datenübertragung Verwendung finden (980 nm Dioden-Laser). Diese Technologie ist jedoch derzeit nicht kommerziell zur Detektion von Target/Sonden-Wechselwirkungen auf Arrays verfügbar. Ein Detektor würde Komponenten zur Lichtemission (z.B. Laser, LED, Hochdrucklampen), ein System zur Modulierung des Anregungs- und Detektionslichtes (z.B. Chopperscheiben, elektronische Shutter) und Detektion des zeitverzögerten Signals (z.B. CCD-, CMOS-Kamera) beinhalten. Als grundsätzlich problematisch erweist sich in der Regel die geringe Kompatibilität der Partikel mit biologischen Proben.

In der internationalen Patentanmeldung WO 00/72018 sind optische Aufbauten zur Detektion von mittels Goldbeads markierten Proben und deren Sichtbarmachung mittels Silberverstärkung beschrieben. Die dortigen Vorrichtungen sind allerdings lediglich für eine Detektion bei statischer Messung geeignet. Bei der statischen Messung wird nach der Wechselwirkung der Targets mit dem auf dem Sondenarray angeordneten Sonden sowie nach Beginn der Reaktion, die zu einem Niederschlag auf Array-Elementen führt, an denen eine Wechselwirkung stattgefunden hat, ein Bild aufgenommen und den gemessenen, von dem Grad der Niederschlagsbildung abhängigen Grauwerten Konzentrationen zugeordnet.

In der internationalen Patentanmeldung WO 02/02180 wurde beschrieben, dass diese Vorgehensweise der statischen Messung für das jeweilige Array-Element nur in einem sehr schmalen Konzentrationsbereich zu zufriedenstellenden Werten führt und damit auch für die Bewertung der Spezifität von Wechselwirkungen problematisch ist, da die Niederschlagsbildung in hohem Maße nicht linear erfolgt. Insbesondere umfasst der zeitliche Verlauf der Niederschlagsbildung einen exponentiellen Anstieg der Niederschlagsbildung mit der Zeit sowie ein darauffolgendes Sättigungsniveau.

Lediglich Grauwerte aus dem Bereich des exponentiellen Anstiegs der Niederschlagsbildung mit der Zeit lassen eine Korrelation mit der Menge an gebundenen Targets zu, während das bei der Niederschlagsbildung auf einem Array-Element nach einer bestimmten, von der jeweiligen Sonden/Target-Wechselwirkung abhängigen und damit für jedes Array-Element unterschiedlichen Zeit erreichte Sättigungs-Niveau einer Quantifizierung nach Abschluss der Niederschlagsbildungs-Reaktion entgegensteht. Es ist nicht möglich, die Experimentparameter so zu gestalten, dass zweifelsfrei sichergestellt ist, dass das Sättigungsniveau auf keinem der Array-Elemente erreicht ist, da die Reaktionsgeschwindigkeit in starkem Maße von Temperatur, Licht, Salzkonzentration, pH und weiteren Faktoren abhängt.

Bei Aufnahme lediglich eines Bildes, also bei statischer Messung, kann folglich nicht gewährleistet werden, dass sich die Niederschlagsbildungs-Reaktionen auf allen Array-Elementen in dem exponentiellen Bereich der Abhängigkeit der Niederschlagsbildung von der Zeit befinden. Somit werden Signalintensitäten, beispielsweise Grauwerte, die von Array-Elementen erhalten werden, bei denen sich die Niederschlagsreaktion bereits im Sättigungsbereich befindet, im Vergleich zu Signalintensitäten von Array-Elementen, die sich noch im exponentiellen Bereich der Niederschlagsbildung befinden, verfälscht dargestellt.

Um die vorstehend beschriebenen Nachteile zu überwinden, wurde in WO 02/02810 ein Verfahren zum qualitativen und/oder quantitativen Nachweis von Targets in einer Probe durch molekulare Wechselwirkungen zwischen Sonden und Targets auf Sonden-Arrays bereitgestellt, bei dem der zeitliche Verlauf der Niederschlagsbildung an den Array-Elementen in Form von Signalintensitäten detektiert wird, d.h. eine dynamische Messung durchgeführt wird. Jedem Array-Element wird dann anhand einer Kurvenfunktion, die die Niederschlagsbildung als Funktion der Zeit beschreibt, ein Wert zugeordnet, der die Wechselwirkung zwischen Sonde und Target auf einem Array-Element und damit die Menge an gebundenen Targets quantifiziert.

Für eine derartige dynamische Messung ist die Aufnahme von Bilderserien unter z.B. bestimmten thermischen Bedingungen bzw. in einem bestimmten Verfahrensstadium, z.B. bei Vorhandensein bestimmter Lösungen zur Zeit der Aufnahme, erforderlich. Dies bedingt ein komplexes Zusammenwirken der einzelnen Bauteile eines hochintegrierten Arrays insbesondere bei Anwendungen im Bereich des Genotyping.

Bei vielen Tests in der biomedizinischen Diagnostik tritt ferner das Problem auf, dass die Targetmoleküle zunächst nicht in einer für eine Detektion ausreichenden Menge vorhanden sind und deshalb häufig zunächst vor dem eigentlichen Testverfahren aus der Probe vervielfältigt werden müssen. Die Vervielfältigung von DNA-Molekülen geschieht typischerweise durch die Polymerase-Kettenreaktion (PCR). Für die Vervielfältigung von RNA müssen die RNA-Moleküle durch reverse Transkription in entsprechend komplementäre DNA (cDNA) umgewandelt werden. Diese cDNA kann dann ebenfalls durch PCR vervielfältigt (amplifiziert) werden. Bei der PCR handelt es sich um eine Labor-Standardmethode (wie z.B. in Sambrook et al. (2001) Molecular Cloning: A laboratory manual, 3rd edition, Cold Spring Harbor, N.Y., Cold Spring Harbor Laboratory Press).

Die Vervielfältigung von DNA durch PCR ist verhältnismäßig schnell, ermöglicht durch miniaturisierte Verfahren einen hohen Probendurchsatz in geringen Ansatzvolumina und ist durch Automatisierung arbeitseffizient.

Eine Charakterisierung von Nukleinsäuren durch eine alleinige Vervielfältigung ist jedoch nicht möglich. Vielmehr ist es notwendig, nach der Amplifikation Analysemethoden wie Nukleinsäuresequenzbestimmungen, Hybridisierung und/oder elektrophoretische Trenn- und Isolationsverfahren zur Charakterisierung der PCR-Produkte einzusetzen.

Generell sollten Vorrichtungen und Verfahren zur Amplifikation von Nukleinsäuren und deren Nachweis so konzipiert sein, dass möglichst wenige Eingriffe seitens eines Experimentators notwendig sind. Die Vorteile von Verfahren, die eine Vervielfältigung von Nukleinsäuren und deren Nachweis ermöglichen und in deren Verlauf ein Experimentator nur minimal eingreifen muss, liegen auf der Hand. Zum einen werden Kontaminationen vermieden. Zum anderen ist die Reproduzierbarkeit solcher Verfahren wesentlich erhöht, da sie einer Automatisierung zugänglich sind. Dies ist auch im Hinblick auf Zulassung von diagnostischen Verfahren extrem wichtig.

Es gibt gegenwärtig eine Vielzahl von Verfahren zur Amplifikation von Nukleinsäuren und deren Nachweis, bei denen zunächst das Target-Material durch PCR-Amplifikation vervielfältigt wird und die Identität bzw. der genetische Zustand der Zielsequenzen anschließend durch Hybridisierung gegen einen Sondenarray bestimmt wird. Die Amplifikation der nachzuweisenden Nukleinsäure- bzw. Target-Moleküle ist in der Regel notwendig, um ausreichende Mengen für einen qualitativen und quantitativen Nachweis im Rahmen der Hybridisierung zur Verfügung zu haben.

Sowohl die PCR-Amplifikation von Nukleinsäuren als auch deren Nachweis durch Hybridisierung ist einer Reihe von grundlegenden Problemen unterworfen. Dies gilt in gleicher Weise für Verfahren, die eine PCR-Amplifikation von Nukleinsäuren und deren Nachweis durch Hybridisierung kombinieren.

Eines der Probleme, das bei Verfahren, die PCR und Hybridisierung kombinieren, auftritt, ist in der Doppelsträngigkeit der Target-Moleküle begründet. Klassische PCR-Amplifikationsreaktionen erzeugen ausgehend von einem doppelsträngigen Template-Molekül üblicherweise doppelsträngige DNA-Moleküle. Diese können nur nach vorhergehender Denaturierung mit den Sonden des Sondenarrays hybridisieren. Während der Hybridisierungsreaktion konkurriert die sehr schnelle Doppelstrangbildung in der Lösung mit der Hybridisierung gegen die immobilisierten Sonden des Sondenarrays. Die Intensität der Hybridisierungssignale und damit die quantitative und qualitative Auswertung der Verfahrensergebnisse werden durch diese Kompetitionsreaktion stark begrenzt.

Hinzu kommen die Probleme, die in der Hybridisierungs-Reaktion an sich bzw. den zur Hybridisierung gebrachten Sonden und Targets begründet sind. PCR-Produkte, die als Targets für Array-Hybridisierungs-Reaktionen Verwendung finden, weisen in der Regel eine Länge von mindestens circa 60 Basenpaaren auf. Dies entspricht der Summe der Längen der zur PCR-Reaktion verwendeten forward- und reverse-Primer sowie der Region, die durch die PCR amplifiziert wird und Komplementarität zur Sonde auf dem Array aufweist. Einzelsträngige Moleküle dieser Länge liegen in Lösung häufig nicht unstrukturiert, d.h. linear gestreckt vor, sondern weisen mehr oder wenig stabile Sekundärstrukturen, wie z.B. Haarnadeln oder andere helikale Strukturen, auf. Wenn diese Sekundärstrukturen den Bereich des Targets betreffen, der Komplementarität zur Sonde aufweist, verhindert die Ausbildung der genannten Sekundärstrukturen eine effiziente Hybridisierung des Targets an die Sonde. Die Ausbildung von Sekundärstrukturen kann somit ebenfalls eine effiziente Hybridisierung inhibieren und eine quantitative und qualitative Auswertung der Verfahrensergebnisse erschweren, wenn nicht gar verhindern.

Somit besteht ferner ein Bedarf an Vorrichtungen, die die Durchführung von PCR und Analysereaktion, wie z.B. einer Hybridisierungsreaktion, in einem Reaktionsraum ermöglichen.

Werden in einem Verfahren, das eine PCR-Amplifikation und deren Nachweis durch Hybridisierung kombiniert, detektierbare Marker beispielsweise in Form von Fluoreszenz-markierten Primern in die nachzuweisenden Nukleinsäuren bzw. Target-Moleküle eingebracht, wird üblicherweise vor der eigentlichen Detektion ein Waschschritt durchgeführt. Ein derartiger Waschschritt dient der Entfernung der im Vergleich zum Amplifikationsprodukt in großem Überschuss vorliegenden, nicht umgesetzten Primer sowie solcher mit einem Fluoreszenzmarker versehenen Nukleotide, die nicht an der Nachweisreaktion teilnehmen bzw. nicht spezifisch mit den Nukleinsäuresonden des Mikroarrays hybridisieren. Auf diese Weise soll der hohe Signalhintergrund vermindert werden, der durch diese Moleküle verursacht wird. Durch einen derartigen zusätzlichen Verfahrensschritt wird allerdings das Nachweisverfahren deutlich verlangsamt. Ferner wird das detektierbare Signal auch für die nachzuweisenden Nukleinsäuren deutlich verringert, die spezifisch mit den Nukleinsäuresonden des Mikroarrays hybridisieren. Letzteres beruht vor allem darauf, dass das Gleichgewicht zwischen den durch Hybridisierung gebundenen und in Lösung befindlichen Targets nach dem Waschschritt nicht mehr gegeben ist. Nukleinsäuren, die bereits mit den auf dem Array befindlichen Nukleinsäuresonden hybridisiert hatten, werden von der Bindungsstelle durch das Waschen abgelöst und somit mit den in Lösung befindlichen Molekülen weggewaschen. Es bleibt überhaupt nur dann ein detektierbares Signal zurück, wenn der Wasch- bzw. Spülschritt der in Lösung befindlichen Moleküle schneller vollzogen wird als die Ablösung der bereits hybridisierten Nukleinsäuren erfolgt.

Es besteht folglich ein Bedarf an hochintegrierten Arrays, mit denen mit relativ geringem technischem Aufwand die Wechselwirkung zwischen Sonden und Targets mit hoher Genauigkeit qualitativ und/oder quantitativ nachgewiesen werden kann.

Es besteht ferner ein Bedarf an Vorrichtungen, die die Durchführung von PCR und Analysereaktion, wie z.B. einer Hybridisierungsreaktion, in einem Reaktionsraum ermöglichen.

Des Weiteren besteht ein Bedarf an hochintegrierten Arrays, mit denen die quantitative Wechselwirkung zwischen Sonden und Targets durch Detektion des zeitlichen Verlaufs einer Niederschlagsbildung, wie z.B. durch Detektion von mittels Goldbeads markierten Proben und deren Sichtbarmachung mittels Silberverstärkung, mit hoher Genauigkeit nachgewiesen werden kann.

Aufgabe der vorliegenden Erfindung ist es somit, die vorstehend genannten Probleme des Stands der Technik, die sich insbesondere durch die mangelnde Kompatibilität des Assays mit dem Testsystem ergeben, zu überwinden.

Insbesondere ist es eine Aufgabe der vorliegenden Erfindung, ein Verfahren zur Verfügung zu stellen, mit dem molekulare Wechselwirkungen zwischen Sonden und Targets auf Sonden-Arrays mit hoher Genauigkeit und hoher Empfindlichkeit und auf einfache und kostengünstige Weise qualitativ und/oder quantitativ nachgewiesen werden können.

Ferner ist es eine Aufgabe der vorliegenden Erfindung, Verfahren zur Amplifikation und zum qualitativen und quantitativen Nachweis von Nukleinsäuren zur Verfügung zu stellen, bei dem Eingriffe seitens des Experimentators minimiert werden können.

Eine weitere Aufgabe der vorliegenden Erfindung ist es, Verfahren zur Amplifikation und zum qualitativen und quantitativen Nachweis von Nukleinsäuren zur Verfügung zu stellen, mit denen ein hohes Signal-zu-Rausch-Verhältnis bei der Detektion von Wechselwirkungen auf dem Mikroarray gewährleistet wird, ohne die Hybridisierung zwischen den nachzuweisenden Nukleinsäuren und den Nukleinsäuresonden auf dem Array zu beeinträchtigen.

Diese und weitere Aufgaben der vorliegenden Erfindung werden durch die Bereitstellung der in den Patentansprüchen gekennzeichneten Ausführungsformen gelöst.

Darüber hinaus ist eine Vorrichtung offenbart, mit der eine hohe dynamische Auflösung bei der Detektion erreicht wird, d.h. der Nachweis schwacher Sonden/Target-Wechselwirkungen neben starken Signalen gewährleistet bleibt.

Ferner wird, eine Vorrichtung offenbart, die eine nahezu gleichzeitige Vervielfältigung und Charakterisierung von Nukleinsäuren mit einem hohen Durchsatz ermöglicht.

Insbesondere wird im Rahmen der vorliegenden Erfindung ein Verfahren zur Amplifikation und zum qualitativen und quantitativen Nachweis von Nukleinsäuren in einer Probe zur Verfügung gestellt wird, das die folgenden Schritte umfasst:

a) Einbringen der Probe in eine Reaktionskammer, die zwischen einem Kammerträger und einem Mikroarray gebildet ist, wobei der Mikroarray ein Substrat mit darauf auf Array-Elementen immobilisierten Nukleinsäuresonden umfasst;

b) Amplifizieren der nachzuweisenden Nukleinsäuren in der Reaktionskammer mittels einer zyklischen Amplifikationsreaktion;

c) Detektieren einer Hybridisierung zwischen den nachzuweisenden Nukleinsäuren und den auf dem Substrat immobilisierten Nukleinsäuresonden, ohne dass Moleküle aus der Reaktionskammer entfernt werden, die nicht mit den auf dem Substrat immobilisierten Nukleinsäuren hybridisiert sind.

Die Detektion erfolgt bei oder unterhalb einer Annealing-Temperatur eines Amplifikationszyklus während der zyklischen Amplifikationsreaktion, d.h. im Verlauf eines oder mehrerer Zyklen der Amplifikationsreaktion.

Das erfindungsgemäße Verfahren zur Vervielfältigung von Nukleinsäuren und deren Nachweis ist so konzipiert, dass möglichst wenige Eingriffe seitens eines Experimentators notwendig sind. Dies bietet den wesentlichen Vorteil, dass dadurch Kontaminationen vermieden werden. Ferner ist die Reproduzierbarkeit des erfindungsgemäßen Verfahrens im Vergleich zu herkömmlichen Verfahren wesentlich erhöht, da das erfindungsgemäße Verfahren aufgrund der Minimierung externer Eingriffe einer Automatisierung zugänglich ist. Die vorstehend genannten Vorteile spielen im Hinblick auf Zulassung von diagnostischen Verfahren eine bedeutende Rolle.

Offenbart wird ferner eine Vorrichtung zur Amplifikation und zum qualitativen und quantitativen Nachweis von Nukleinsäuren mittels einem wie vorstehenden beschriebenen Verfahren, umfassend die folgenden Elemente:

a) eine Temperatursteuerungs- und/oder -regeleinheit;

b) eine Reaktionskammer, die zwischen einem Kämmerträger und einem Mikroarray gebildet ist, wobei der Mikroarray ein Substrat mit darauf auf Array-Elementen immobilisierten Nukleinsäuresonden umfasst und die Temperatur in der Reaktionskammer durch die Temperatursteuerungs- und - regeleinheit steuerbar und/oder regelbar ist;

wobei mit der Vorrichtung eine Hybridisierung zwischen den nachzuweisenden Nukleinsäuren und den auf dem Substrat immobilisierten Nukleinsäuresonden detektierbar ist, ohne dass Moleküle aus der Reaktionskammer entfernt werden, die nicht mit den auf dem Substrat immobilisierten Nukleinsäuren hybridisiert sind.

Vorzugsweise ist die Reaktionskammer der offenbarten Vorrichtung als Kapillarspalt zwischen dem Kammerträger und dem Mikroarray ausgestaltet.

Bei einem weiteren Aspekt der vorliegenden Offenbarung wird eine Vorrichtung zur Vervielfältigung und zum Nachweis von Nukleinsäuren zur Verfügung gestellt, die mindestens eine Temperatursteuerungs- und/oder - regeleinheit; eine Reaktionskammer, die eine Detektionsfläche mit einer darauf immobilisierten Sonden-Substanzbibliothek enthält; sowie vorzugsweise ein optisches System, mit dem der zeitliche Verlauf von Niederschlagsbildungen auf der Detektionsfläche detektierbar ist, umfasst.

Ein in der Reaktionskammer befindlicher Chip, der einen Träger mit einer Detektionsfläche umfasst, auf der eine Substanzbibliothek immobilisiert ist, gewährleistet die Möglichkeit der Bereitstellung einer sehr hohen Sondendichte in der Reaktionskammer.

Die elektrokalorische Steuerung bzw. Regelung durch die Temperatursteuerungs- und/oder -regeleinheit erlaubt die Einstellung von definierten Temperaturen sowohl während der Prozessierung der zu untersuchenden Probe in der Reaktionskammer als auch während der Detektion der Hybridisierungsereignisse. Somit wird sowohl eine verbesserte Kontrolle als auch eine Optimierung der Nachweisreaktion gewährleistet. Ferner erlaubt die Einstellung definierter Temperaturen über die Temperatursteuerungs- bzw. -regelungseinheit die Durchführung von komplexen Reaktionen wie zum Beispiel von Amplifikationsreaktionen durch PCR.

Die offenbarten Vorrichtungen zeichnen sich ferner dadurch aus, dass unter Anderem aufgrund des vorzugsweise integrierten optischen Systems bzw. des Readersystems eine Detektion von molekularen Wechselwirkungen auch im Handbetrieb möglich ist. Dies ist insbesondere in Bereichen wie der medizinischen Diagnostik vorteilhaft.

Dadurch, dass die offenbarte Vorrichtung bei einem Aspekt der vorliegenden Erfindung vorzugsweise ein integriertes optisches System enthält, mit dem der zeitliche Verlauf von Niederschlagsbildungen auf der Detektionsfläche detektierbar ist, wird eine exakte Bestimmung der relativen quantitativen Menge von an die Substanzbibliothek gebundenen Nukleinsäuren gewährleistet.

Allgemein erlauben die offenbarten Vorrichtungen eine nahezu gleichzeitige, zeiteffiziente und wenig störanfällige Durchführung von Aufarbeitungs- bzw. Konditionierungsreaktionen und die Chip-basierte Charakterisierung von Nukleinsäuren. Dabei wird unter einer Aufarbeitungs- bzw. Konditionierreaktion erfindungsgemäß eine Reaktion verstanden, deren Reaktionsprodukte durch Chip-basierte Experimente charakterisiert werden können.

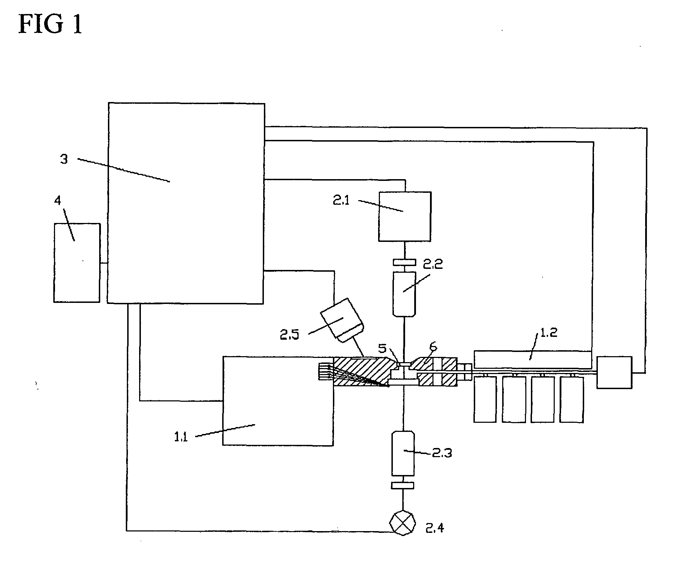

Eine offenbarte Vorrichtung zur Detektion von molekularen Wechselwirkungen in geschlossenen Reaktionskammern besteht vorzugsweise aus vier funktionellen Hauptelementen (siehe Abbildung 1). Die mechanische, elektrische und fluidische Aufnahme der Reaktionskammer erfolgt in einem Aufnahmemodul (1). Die Reaktionskammer wird im Folgenden auch als Mikroreaktor bezeichnet. Für die Detektion der Reaktionsergebnisse wird ein optisches System (2) bereitgestellt. Die Verarbeitung der Reaktionsergebnisse zu einem Analyseergebnis kann in einem Controller (3) erfolgen. Das Analyseergebnis wird gegebenenfalls durch geeignete Verbindungselemente (4) der Speicherung und/oder Weiterverarbeitung zur Verfügung gestellt.

Eine Reaktionskammer, die vorteilhaft als Bauteil der offenbarten Vorrichtung eingesetzt werden kann, ist in der internationalen Patentanmeldung WO 01/02094 ausführlich beschrieben, auf deren Inhalt hiermit ausdrücklich Bezug genommen wird.

Die ggf. durch einen Barcode identifizierbare Reaktionskammer ist in einem fluidischen Aufnahmemodul eingebracht, wo sie mit einer oder mehreren Reaktionslösungen befüllt werden kann. Die Reaktionskammer weist ferner gegebenenfalls elektrische Kontakte auf, wodurch zum Beispiel über integrierte Sensor- und/oder Heizelemente eine thermische Steuerung bzw. Regelung von Reaktionen in der Reaktionskammer gewährleistet ist. Dies ist insbesondere vorteilhaft für die Durchführung von thermisch empfindlichen Amplifikationsreaktionen für DNA oder RNA, Hybridisierungen von DNA oder RNA oder Reaktionen zur Signalverstärkung wie zum Beispiel durch Metallfällungen an entsprechend markierten und an die Substanzbibliothek gebundenen Target-Molekülen.

Die für die Durchführung der Vervielfältigungs- und Nachweisreaktionen ggf. erforderlichen Lösungen, wie Reaktions- und/oder Spüllösungen, sind über geeignete Verbindungselemente wie zum Beispiel Kanäle in die Reaktionskammer einbringbar. Geeignete Controller können der Überwachung des Reaktionsverlaufs dienen.

Das optische System gewährleistet bei einem Aspekt der vorliegenden Erfindung die bildgebende Abbildung der Substanzbibliothek während oder nach Abschluss der Vervielfältigungs- und/oder Nachweisreaktionen auf einen geeigneten Detektor, der beispielsweise als zweidimensionales elektrisch auslesbares Detektionselement ausgeführt ist. In einer Ausführungsform der erfindungsgemäßen Vorrichtung wird die Probe mittels eines Beleuchtungsmoduls bzw. einer Lichtquelle des optischen Systems beleuchtet und die entstehenden Signale entsprechend der verwendeten Markierungen gefiltert abgebildet.

Das optische System gewährleistet bei einem Aspekt der vorliegenden Offenbarung ferner eine kinetische, d.h. dynamische Aufnahme der Reaktionsergebnisse. Insbesondere ist das optische System der erfindungsgemäßen Vorrichtung vorzugsweise dazu geeignet, den zeitlichen Verlauf eines Silberniederschlags zur Verstärkung von Hybridisierungssignalen zwischen Gold-markierten Target-Molekülen und der Substanzbibliothek aufzuzeichnen. Der hochintegrierte Aufbau der erfindungsgemäßen Vorrichtung erlaubt die Übergabe von mehreren Bildern während des Reaktionsverlaufs zur Verarbeitung in einem geeigneten Datenverarbeitungsmodul oder Controller.

Die durch den zeitlichen Verlauf der Niederschlagsbildung entstehenden Veränderungen auf den jeweiligen Array-Elementen können in der erfindungsgemäßen Vorrichtung, wie u.a. in der internationalen Patentanmeldung WO 02/02810 ausführlich beschrieben ist, ausgewertet werden. Auf den Inhalt der internationalen Patentanmeldung WO 02/02810 wird hiermit ebenfalls ausdrücklich Bezug genommen.

Die erfindungsgemäße Vorrichtung gewährleistet ferner über gegebenenfalls vorhandene elektronische Schnittstellen die Übergabe der Rohdaten oder Analyseergebnisse an externe Rechner- oder Rechnernetze zum Beispiel zur Speicherung dieser Daten.

Bei einem weiteren Aspekt der vorliegenden Offenbarung wird ein Mikroarray bereitgestellt, das ein Substrat mit darauf auf vorbestimmten Bereichen immobilisierten molekularen Sonden umfasst. Das Substrat umfasst dabei im Wesentlichen keramische Materialien.

Schließlich betrifft ein weiterer Aspekt der Offenbarung die Verwendung eines Substrats aus im Wesentlichen keramischen Materialien zur Herstellung eines Mikroarrays mit darauf auf vorbestimmten Bereichen des Substrats immobilisierten molekularen Sonden.

Zur Beschreibung der vorliegenden Erfindung werden ferner unter Anderem folgende Definitionen verwendet:

Unter einer Sonde bzw. einem Sondenmolekül bzw. einer molekularen Sonde wird im Rahmen der vorliegenden Erfindung ein Molekül verstanden, das zum Nachweis anderer Moleküle durch ein bestimmtes, charakteristisches Bindungsverhalten bzw. eine bestimmte Reaktivität verwendet wird. Für die auf dem Array angeordneten Sonden kommt jede Art von Molekülen in Frage, die sich an feste Oberflächen koppeln lassen und eine spezifische Affinität aufweisen. In einer bevorzugten Ausführungsform handelt es sich um Biopolymere aus den Klassen der Peptide, Proteine, Nukleinsäuren und/oder deren Analoga. Besonders bevorzugt sind die Sonden Nukleinsäuren und/oder Nukleinsäureanaloga.

Als Sonde werden insbesondere Nukleinsäuremoleküle definierter und bekannter Sequenz bezeichnet, die benutzt werden, um in Hybridisierungsverfahren Target-Moleküle nachzuweisen. Als Nukleinsäuren können sowohl DNA- als auch RNA-Moleküle verwendet werden. Beispielsweise kann es sich bei den Nukleinsäurensonden bzw. Oligonukleotidsonden um Oligonukleotide mit einer Länge von 10 bis 100 Basen, vorzugsweise 15 bis 50 Basen und besonders bevorzugt von 20 bis 30 Basen Länge handeln. Typischerweise handelt es sich erfindungsgemäß bei den Sonden um einzelsträngige Nukleinsäuremoleküle oder Moleküle von Nukleinsäureanaloga, bevorzugt einzelsträngige DNA-Moleküle oder RNA-Moleküle, die mindestens über einen Sequenzbereich verfügen, der zu einem Sequenzbereich der Target-Moleküle komplementär ist. Je nach Nachweisverfahren und Anwendung können die Sonden auf einem festen Trägersubstrat, z.B. in Form eines Mikroarrays immobilisiert sein. Darüber hinaus können sie je nach Nachweisverfahren radioaktiv oder nicht radioaktiv markiert sein, so dass sie über die im Stand der Technik übliche Nachweisreaktion nachgewiesen werden können.

Unter einem Target bzw. einem Targetmolekül wird im Rahmen der vorliegenden Erfindung das mit einer molekularen Sonde nachzuweisende Molekül verstanden. Bei einer bevorzugten Ausführungsform der vorliegenden Erfindung handelt es sich bei den zu detektierenden Targets um Nukleinsäuren. Der erfindungsgemäße Sonden-Array kann jedoch analog auch zum Nachweis von Protein/Sonden-Wechselwirkungen, Antikörper/Sonden-Wechselwirkungen, usw. eingesetzt werden.

Falls es sich im Rahmen der vorliegenden Erfindung bei den Targets um Nukleinsäuren bzw. Nukleinsäuremoleküle handelt, die durch eine Hybridisierung gegen auf einem Sondenarray angeordnete Sonden nachgewiesen werden, umfassen diese Target-Moleküle in der Regel Sequenzen mit einer Länge von 40 bis 10.000 Basen, bevorzugt von 60 bis 2.000 Basen, ebenfalls bevorzugt von 60 bis 1.000 Basen, insbesondere bevorzugt von 60 bis 500 Basen und am meisten bevorzugt von 60 bis 150 Basen. Ihre Sequenz beinhaltet gegebenenfalls die Sequenzen von Primern, sowie die durch die Primer definierten Sequenzbereiche des Templates. Bei den Target-Molekülen kann es sich insbesondere um einzel- oder doppelsträngige Nukleinsäuremoleküle handeln, von denen ein Strang oder beide Stränge radioaktiv oder nicht radioaktiv markiert sind, so dass sie in einem der im Stand der Technik üblichen Nachweisverfahren nachgewiesen werden können.

Als Target-Sequenz wird erfindungsgemäß der Sequenzbereich des Targets bezeichnet, der durch Hybridisierung mit der Sonde nachgewiesen wird. Erfindungsgemäß wird auch davon gesprochen, dass dieser Bereich durch die Sonde adressiert wird.

Unter einer Substanzbibliothek wird im Rahmen der vorliegenden Erfindung eine Vielzahl von unterschiedlichen Sondenmolekülen verstanden, vorzugsweise mindestens zwei bis 1.000.000 unterschiedliche Moleküle, besonders bevorzugt mindestens 10 bis 10.000 unterschiedliche Moleküle und am meisten bevorzugt zwischen 100 und 1.000 unterschiedlichen Molekülen. Bei speziellen Ausgestaltungen kann eine Substanzbibliothek auch nur mindestens 50 oder weniger oder mindestens 30.000 unterschiedliche Moleküle umfassen. Die Substanzbibliothek ist vorzugsweise als Array auf einem Träger in der Reaktionskammer der offenbarten Vorrichtung angeordnet.

Unter einem Sonden-Array wird im Rahmen der vorliegenden Erfindung eine Anordnung von molekularen Sonden bzw. einer Substanzbibliothek auf einem Träger verstanden, wobei die Position einer jeden Sonde separat bestimmt ist. Vorzugsweise umfasst der Array definierte Stellen bzw. vorbestimmte Bereiche, so genannte Array-Elemente, die besonders bevorzugt in einem bestimmten Muster angeordnet sind, wobei jedes Array-Element üblicherweise nur eine Spezies an Sonden beinhaltet. Die Anordnung der Moleküle bzw. Sonden auf dem Träger kann dabei durch kovalente oder nicht kovalente Wechselwirkungen erzeugt werden. Eine Position innerhalb der Anordnung, d.h. des Arrays, wird üblicherweise als Spot bezeichnet. Der Sonden-Array bildet somit die Detektionsfläche.

Unter einem Array-Element bzw. einem vorbestimmten Bereich bzw. einem Spot bzw. einem Array-Spot wird im Rahmen der vorliegenden Erfindung ein für die Deposition einer molekularen Sonde bestimmtes Areal auf einer Oberfläche verstanden, die Summe aller belegten Array-Elemente ist das Sonden-Array.

Unter einem Trägerelement bzw. Träger bzw. Substanzbibliothekenträger bzw. Substrat wird im Rahmen der vorliegenden Erfindung ein Festkörper verstanden, auf dem das Sonden-Array aufgebaut ist. Bei dem Träger, der üblicherweise auch als Substrat oder Matrix bezeichnet wird, kann es sich z.B. um Objektträger oder Wafer oder aber auch keramische Materialien handeln.

Die Gesamtheit aus in Array-Anordnung auf dem Substrat bzw. der Detektionsfläche abgelegten Molekülen bzw. der in Array-Anordnung auf dem Substrat bzw. der Detektionsfläche abgelegten Substanzbibliothek und dem Träger bzw. Substrat wird häufig auch als "Chip", "Mikroarray", "Microarray", "DNA-Chip", Sondenarray" etc. bezeichnet.

Unter einer Detektionsfläche wird im Rahmen der vorliegenden Erfindung der Bereich des Substrats verstanden, auf dem die Substanzbibliothek, vorzugsweise in Array-Anordnung, abgelegt ist.

Unter einem Kammerträger wird im Rahmen der vorliegenden Erfindung ein Festkörper verstanden, der eine Grundfläche für die Reaktionskammer bildet. Vorzugsweise ist der Kammerträger auf der dem Substrat bzw. Substanzbibliothekenträger gegenüberliegenden Seite angeordnet. Bei einer alternativen Ausführungsform der offenbarten Vorrichtung kann der Kammerträger aber auch gleichzeitig als Substrat bzw. Substanzbibliothekenträger dienen.

Unter einem Kammerkörper wird im Rahmen der vorliegenden Erfindung der die Reaktionskammer bildende Festkörper verstanden. Der Substanzbibliothekenträger bzw. der Chip ist üblicherweise Teil des Kammerkörpers, wobei der Substanzbibliothekenträger aus einem anderen Material gebildet sein kann als der übrige Kammerkörper.

Unter einer Reaktionskammer bzw. einem Reaktionsraum wird im Rahmen der vorliegenden Erfindung der Raum bezeichnet, der zwischen Kammerträger und Mikroarray gebildet ist und vorzugsweise als Kapillarspalt ausgestaltet ist. Die Grundfläche der Reaktionskammer bzw. des Reaktionsraums wird durch die Grundfläche des Arrays bzw. des Kammerträgers definiert. Als Dicke des Reaktionsraums bzw. der Reaktionskammer bzw. des Kapillarspalts wird insbesondere der Abstand zwischen Kammerkörper und Matrix bzw. Mikroarray bezeichnet. Üblicherweise weist ein Reaktionsraum im Rahmen der vorliegenden Erfindung eine geringe Dicke auf, beispielsweise eine Dicke von höchstens 1 cm, vorzugsweise von höchstens 5 mm, besonders bevorzugt von höchstens 3 mm und am meisten bevorzugt von höchstens 1 mm.

Unter einem Kapillarspalt wird im Rahmen der vorliegenden Erfindung ein Reaktionsraum bezeichnet, der durch Kapillarkräfte, die zwischen dem Kammerträger und dem Mikroarray wirken, befüllbar ist. Üblicherweise weist ein Kapillarspalt eine geringe Dicke z.B. von höchstens 1 mm, vorzugsweise von höchstens 750 $\mu$m und besonders bevorzugt von höchstens 500 $\mu$m auf. Als Dicke des Kapillarspalts ist erfindungsgemäß ferner eine Dicke im Bereich von 10 bis 300 $\mu$m, von 15 $\mu$m bis 200 $\mu$m bzw. von 25 $\mu$m bis 150 $\mu$m bevorzugt. Bei speziellen Ausgestaltungen der vorliegenden Erfindung weist der Kapillarspalt eine Dicke von 50 $\mu$m, 60 $\mu$m, 70 $\mu$m, 80 $\mu$m oder 90 $\mu$m auf. Weist der Reaktionsraum bzw. die Reaktionskammer eine Dicke von mehr als 2 mm auf, wird der Reaktionsraum bzw. die Reaktionskammer im Rahmen der vorliegenden Erfindung nicht mehr als Kapillarspalt bezeichnet.

Unter einem konfokalen Fluoreszenzdetektionssystem wird im Rahmen der vorliegenden Erfindung ein Fluoreszenzdetektionssystem verstanden, in der das Objekt, d.h. der Miroarray, in der Brennebene des Objektivs durch eine Punktlichtquelle beleuchtet wird. Punktlichtquelle, Objekt und Punktlichtdetektor liegen dabei in exakt optisch konjugierten Ebenen. Beispiele für konfokale Systeme sind in A. Diaspro, Confocal and 2-photon-microscopy: Foundations, Applications and Advances, Wiley-Liss, 2002 beschrieben.

Unter einem das gesamte Volumen der Reaktionskammer abbildenden fluoreszenzoptischen System wird im Rahmen der vorliegenden Erfindung ein nicht-konfokales Fluoreszenzdetektionssystem verstanden, also ein Fluoreszenzdetektionssystem, in der die Beleuchtung durch die Punktlichtquelle nicht auf das Objekt, d.h. den Mikroarray, begrenzt ist. Ein derartiges Fluoreszenzdetektionssystem weist somit keine fokale Begrenzung auf.

Herkömmliche Arrays bzw. Mikroarrays im Rahmen der vorliegenden Erfindung umfassen etwa 50 bis 10.000, vorzugsweise 150 bis 2.000 unterschiedliche Spezies von Sondenmolekülen auf einer, vorzugsweise quadratischen, Fläche von z.B. 1 mm bis 4 mm x 1 mm bis 4 mm, vorzugsweise von 2 mm x 2 mm. In weiteren Ausgestaltungen umfassen Mikroarrays im Rahmen der vorliegenden Erfindung etwa 50 bis etwa 80.000, vorzugsweise etwa 100 bis etwa 65.000, besonders bevorzugt etwa 1.000 bis etwa 10.000 unterschiedliche Spezies von Sondenmolekülen auf einer Fläche von mehreren mm$^2$ bis mehreren cm$^2$, vorzugsweise etwa 1 mm$^2$ bis 10 cm$^2$, besonders bevorzugt 2 mm$^2$ bis 1 cm$^2$ und am meisten bevorzugt etwa 4 mm$^2$ bis 6,25 mm$^2$. Beispielsweise weist ein herkömmliches Mikroarray von 100 bis 65.000 unterschiedliche Spezies von Sondenmolekülen auf einer Fläche von 2 mm x 2 mm auf.

Unter einer Mikrotiterplatte wird im Rahmen der vorliegenden Erfindung eine Anordnung von Reaktionsgefäßen in einem bestimmten Raster verstanden, die die automatisierte Durchführung einer Vielzahl von biologischen, chemischen und labormedizinischen Tests gestattet.

Eine Markierung oder ein Marker bezeichnet im Rahmen der vorliegenden Erfindung eine detektierbare Einheit, beispielsweise ein Fluorophor oder eine Ankergruppe, an die eine detektierbare Einheit gekoppelt werden kann.

Als Probe bzw. Probenlösung wird im Rahmen der vorliegenden Erfindung die zum analysierenden Flüssigkeit mit den zu amplifizierenden bzw. nachzuweisenden Nukleinsäuremolekülen bezeichnet.

Eine Vervielfältigungsreaktion bzw. eine Amplifikationsreaktion umfasst im Rahmen der vorliegenden Erfindung üblicherweise 10 bis 50 oder mehr Amplifikationszyklen, vorzugsweise etwa 20 bis 40 Zyklen, besonders bevorzugt etwa 30 Zyklen. Eine zyklische Amplifikationsreaktion ist im Rahmen der vorliegenden Erfindung vorzugsweise eine Polymerase-Kettenreaktion (polymerase chain reaction, PCR).

Als Amplifikationszyklus wird im Rahmen der vorliegenden Erfindung ein einzelner Verstärkungsschritt der zyklischen Amplifikationsreaktion bezeichnet. Ein Verstärkungsschritt der PCR wird auch als PCR-Zyklus bezeichnet.

Als Amplifikationsprodukt wird im Rahmen der vorliegenden Erfindung ein Produkt aus der Verstärkung bzw. Vervielfältigung bzw. Amplifikation der zu amplifizierenden Nukleinsäuremoleküle durch die zyklische Amplifikationsreaktion, vorzugsweise durch die PCR bezeichnet. Ein durch PCR vervielfältigtes Nukleinsäuremolekül wird auch als PCR-Produkt bezeichnet.

Unter der Denaturierungstemperatur wird im Rahmen der vorliegenden Erfindung die Temperatur verstanden, bei der die doppelsträngige DNA im Amplifikationszyklus aufgetrennt wird. Die Denaturierungstemperatur beträgt, insbesondere bei einer PCR, üblicherweise mehr als 90°C, vorzugsweise etwa 95°C.

Unter der Annealing-Temperatur wird im Rahmen der vorliegenden Erfindung die Temperatur verstanden, bei der die Primer an die nachzuweisende Nukleinsäure hybridisieren. Die Annealing-Temperatur liegt, insbesondere bei einer PCR, üblicherweise im Bereich von 55°C bis 65°C und beträgt vorzugsweise etwa 60°C.

Unter der Kettenverlängerungs- bzw. Extensions-Temperatur wird im Rahmen der vorliegenden Erfindung die Temperatur verstanden, bei der die Nukleinsäure durch Einbau der Monomerbausteine synthetisiert wird. Die Extensionstemperatur liegt, insbesondere bei einer PCR, üblicherweise im Bereich von etwa 70°C bis etwa 75°C und beträgt vorzugsweise etwa 72°C.

Als Oligonukleotid-Primer bzw. Primer wird im Rahmen der vorliegenden Erfindung ein Oligonukleotid bezeichnet, das an die nachzuweisende DNA, auch Target-DNA genannt, bindet bzw. hybridisiert, wobei von der Bindungsstelle die Synthese des Gegenstrangs der nachzuweisenden DNA bei der zyklischen Amplifikationsreaktion startet. Insbesondere wird als Primer üblicherweise ein kurzes DNA- oder RNA-Oligonukleotid mit vorzugsweise etwa 12 bis 30 Basen bezeichnet, das komplementär zu einem Abschnitt eines größeren DNA- oder RNA-Moleküls ist und über eine freie 3'-OH-Gruppe an seinem 3'-Ende verfügt. Aufgrund dieser freien 3'-OH-Gruppe kann der Primer als Substrat für beliebige DNA- oder RNA-Polymerasen dienen, die in 5'-3'-Richtung Nukleotide an den Primer synthetisieren. Die Sequenz der neu synthetisierten Nukleotide ist dabei durch die Sequenz des mit dem Primer hybridisierten Templates vorgegeben, die jenseits der freien 3'-OH-Gruppe des Primers liegt. Primer üblicher Länge umfassen zwischen 12 bis 50 Nukleotide, bevorzugt zwischen 15 und 30 Nukleotide.

Als Template oder Template-Strang werden üblicherweise ein doppelsträngiges Nukleinsäuremolekül oder ein Nukleinsäurestrang bezeichnet, der als Vorlage zur Synthese von komplementaren Nukleinsäuresträngen dient.

Als Hybridisierung wird die Bildung von doppelsträngigen Nukleinsäuremolekülen oder Duplexmolekülen aus komplementären einzelsträngigen Nukleinsäuremolekülen bezeichnet. Dabei findet die Assoziation vorzugsweise immer zu Paaren von A und T bzw. G und C statt. Im Rahmen einer Hybridisierung können z.B. DNA-DNA-Duplexes, DNA-RNA- oder RNA-RNA-Duplexes gebildet werden. Durch eine Hybridisierung können auch Duplexes mit Nukleinsäureanaloga gebildet werden, wie z.B. DNA-PNA-Duplexes, RNA-PNA-Duplexes, DNA-LNA-Duplexes und RNA-LNA-Duplexes. Hybridisierungsexperimente werden üblicherweise benutzt, um die Sequenzkomplementarität und damit die Identität zwischen zwei verschiedenen Nukleinsäuremolekülen nachzuweisen.

Unter Prozessierung werden im Rahmen der vorliegenden Erfindung Aufreinigungs-, Markierungs-, Amplifikations-, Hybridisierungs- und/oder Wasch- und Spülschritte, sowie weitere beim Nachweis bzw. der Detektion von Targets mit Hilfe von Substanzbibliotheken durchgeführte Verfahrensschritte verstanden.

Unter einem im Wesentlichen aus keramischen Materialien bestehenden bzw. im Wesentlichen keramische Materialien umfassenden Substrat wird im Rahmen der vorliegenden Erfindung ein Substrat verstanden, das mindestens 75%, vorzugsweise mindestens 85% und besonders bevorzugt mindestens 90% keramische Materialien umfasst.

Unter einem im Wesentlichen aus Aluminiumoxid-Keramiken bestehenden bzw. im Wesentlichen Aluminiumoxid-Keramiken umfassenden Substrat wird im Rahmen der vorliegenden Erfindung ein Substrat verstanden, das mindestens 75%, vorzugsweise mindestens 85% und besonders bevorzugt mindestens 90% Aluminiumoxid-Keramiken umfasst.

Unter einer Aluminium-Keramik wird im Rahmen der vorliegenden Erfindung ein keramisches Material verstanden, das im Wesentlichen aus Aluminiumoxid besteht. Unter einem im Wesentlichen aus Aluminiumoxid bestehenden keramischen Material wird im Rahmen der vorliegenden Erfindung ein keramisches Material verstanden, das mindestens 75%, vorzugsweise mindestens 85% und besonders bevorzugt mindestens 90% Aluminiumoxid umfasst.

Ein Gegenstand der vorliegenden Offenbarung ist somit insbesondere eine Vorrichtung zur Vervielfältigung und zum Nachweis von Nukleinsäuren, die folgende Elemente umfasst:

a) eine Temperatursteuerungs- und/oder -regeleinheit;

b) eine Reaktionskammer, die einen Träger mit einer Detektionsfläche enthält, auf der eine Substanzbibliothek immobilisiert ist, wobei die Temperatur in der Reaktionskammer durch die Temperatursteuerungs- und -regeleinheit steuerbar und/oder regelbar ist; und

c) ein optisches System, mit dem der zeitliche Verlauf von Niederschlagsbildungen auf der Detektionsfläche detektierbar ist.

Ein wesentliches Merkmal der offenbarten Vorrichtung bei diesem Aspekt der vorliegenden Erfindung ist die Integration einer Temperatursteuerungs- und/oder -regeleinheit, einer temperaturregulierbaren Reaktionskammer sowie eines optischen Systems, das eine dynamische Messung von Signalverstärkungsreaktionen durch Niederschlagsbildung gewährleistet, in einer Vorrichtung.

Die offenbarte Vorrichtung bei diesem Aspekt der vorliegenden Erfindung zeichnet sich dadurch aus, dass aufgrund des integrierten optischen Systems bzw. des Readersystems eine Detektion von molekularen Wechselwirkungen auch im Handbetrieb möglich ist. Dies ist insbesondere in Bereichen wie der medizinischen Diagnostik vorteilhaft. Dadurch, dass die offenbarte Vorrichtung in dieser Ausführungsform ein integriertes optisches System enthält, mit dem der zeitliche Verlauf von Niederschlagsbildungen auf der Detektionsfläche detektierbar ist, wird eine exakte Bestimmung der relativen quantitativen Menge von an die Substanzbibliothek gebundenen Nukleinsäuren gewährleistet.

Das optische System gewährleistet die bildgebende Abbildung der Substanzbibliothek während oder nach Abschluss der Vervielfältigungs- und/oder Nachweisreaktionen auf einen geeigneten Detektor, der beispielsweise als zweidimensionales elektrisch auslesbares Detektionselement ausgeführt ist. In einer Ausführungsform der offenbarten Vorrichtung wird die Probe mittels eines Beleuchtungsmoduls bzw. einer Lichtquelle des optischen Systems beleuchtet und die entstehenden Signale entsprechend der verwendeten Markierungen gefiltert abgebildet.

Das optische System gewährleistet ferner eine kinetische, d.h. dynamische Aufnahme der Reaktionsergebnisse. Insbesondere ist das optische System der offenbarten Vorrichtung dazu geeignet, den zeitlichen Verlauf eines Silberniederschlags zur Verstärkung von Hybridisierungssignalen zwischen Gold-markierten Target-Molekülen und der Substanzbibliothek aufzuzeichnen. Der hochintegrierte Aufbau der offenbarten Vorrichtung erlaubt die Übergabe von mehreren Bildern während des Reaktionsverlaufs zur Verarbeitung in einem geeigneten Datenverarbeitungsmodul oder Controller.

Die durch den zeitlichen Verlauf der Niederschlagsbildung entstehenden Veränderungen auf den jeweiligen Array-Elementen können in der offenbarten Vorrichtung, wie u.a. in der internationalen Patentanmeldung WO 02/02810 ausführlich beschrieben ist, ausgewertet werden. Auf den diesbezüglichen Inhalt der internationalen Patentanmeldung WO 02/02810 wird hiermit ebenfalls ausdrücklich Bezug genommen.

Die offenbarte Vorrichtung kann beispielsweise so ausgeführt sein, dass der Kammerkörper der Reaktionskammer, der den Chip mit der Detektionsfläche enthält, dichtend auf einem Kammerträger so aufgebracht ist, dass ein Probenraum mit einem Kapillarspalt zwischen dem Kammerträger und der Detektionsfläche bzw. dem Substrat des Chips gebildet wird, der temperaturregulierbar und durchflusssteuerbar ist. Diese Art der Konstruktion erlaubt es, Reaktionen durchzuführen, die nur in bestimmten Temperaturbereichen effizient ablaufen, und die Reaktionsprodukte vorzugsweise gleichzeitig durch Chip-basierte Experimente zu detektieren.

Die offenbarte Vorrichtung kann somit zum Beispiel verwendet werden, um nahezu gleichzeitig durch PCR Nukleinsäuremoleküle zu vervielfältigen und die PCR-Produkte durch Chip-basierte Experimente nachzuweisen. Die Probenflüssigkeit für derartige Reaktionen kann durch entsprechende Mittel zur Temperaturregulation effizient beheizt und gekühlt werden.

Die offenbarte Vorrichtung kann auch verwendet werden, um eine reverse Transkription-Reaktion durchzuführen und auf diese Weise mRNA in cDNA zu überführen und die Reaktionsprodukte durch Hybridisierung am Chip zu charakterisieren. Auf diese Weise kann ein so genanntes "gene profiling durchgeführt werden. Da sowohl die reverse Transkription als auch die Hybridisierung in einer Kammer durchgeführt werden, ist dieses Verfahren äußerst zeiteffizient und wenig störanfällig.

Mit der offenbarten Vorrichtung kann ferner zum Beispiel ein Restriktionsverdau bei gewünschten Temperaturen in der Reaktionskammer durchgeführt werden und die Reaktionsprodukte durch Hybridisierung an einem Chip charakterisiert werden. Die Denaturierung der Enzyme kann durch Hitzedeaktivierung erfolgen. Damit ermöglicht die offente Vorrichtung eine zeiteffiziente Restriktions-Fragment-Längen-Polymorphismus-Kartierung (RFLP-Kartierung).

Mit einer offenbarten Vorrichtung kann ferner zum Beispiel auch eine Ligation durchgeführt werden.

Des Weiteren kann mit der offenbarten Vorrichtung das Schmelzverhalten von Nukleinsäuretarget-/Nukleinsäuresonde-Komplexen in Abhängigkeit von der Temperatur untersucht werden.

Offenbarte Vorrichtungen können ferner verwendet werden, um das Bindungsverhalten von Proteinen in Abhängigkeit von der Temperatur durchzuführen. Zum Beispiel kann auf diese Weise getestet werden, ob Antikörper nach Erhitzen über einen längeren Zeitraum noch in der Lage sind, ihre entsprechenden Antigene zu binden. Voraussetzung hierfür ist, dass in diesem Fall der Chip nicht durch Nukleinsäuremoleküle, sondern durch die entsprechenden Proteine bzw. Peptide funktionalisiert ist.

Der Kammerkörper der Reaktionskammer besteht vorzugsweise aus Materialien wie Glas, Kunststoff und/oder Metallen wie Edelstahl, Aluminium und Messing. Zu seiner Herstellung können beispielsweise Spritzguss-geeignete Kunststoffe verwendet werden. Unter anderem sind Kunststoffe wie Makrolon, Nylon, PMMA und Teflon denkbar. Alternativ kann der Reaktionsraum zwischen Substanzbibliothekenträger und Kammerträger aber auch durch Septen abgeschlossen sein, die beispielsweise ein Befüllen des Reaktionsraums mittels Spritzen ermöglichen. Bei einer bevorzugten Ausführungsform besteht der Kammerkörper aus optisch durchlässigen Materialien wie Glas, PMMA, Polycarbonat, Polystyrol und/oder Topas. Dabei ist die Wahl der Materialien dem Verwendungszweck der Vorrichtung anzupassen. Zum Beispiel sind die Temperaturen, denen die Vorrichtung ausgesetzt sein wird, bei der Wahl der Materialien zu beachten. Soll die Vorrichtung zum Beispiel für die Durchführung einer PCR verwendet werden, dürfen z.B. nur solche Kunststoffe eingesetzt werden, die über längere Zeiträume bei Temperaturen wie 95°C stabil sind.

Der Kammerträger besteht vorzugsweise aus Glas, Kunststoffen, Silizium, Metallen und/oder keramischen Materialien. Zum Beispiel kann der Kammerträger aus Aluminiumoxid-Keramiken, Nylon und/oder Teflon bestehen.

Bei einer Ausführungsform besteht der Kammerträger aus transparenten Materialien wie Glas und/oder optisch durchlässigen Kunststoffen, z.B. PMMA, Polycarbonat, Polystyrol oder Acryl.

Vorzugsweise ist der Kammerträger und/oder das Substrat mit in der offenbarten Vorrichtung integrierten Mitteln zur Temperaturbeaufschlagung verbunden und sollte dann bevorzugt aus Materialien bestehen, die gut wärmeleitend sind. Derartige wärmeleitfähige Materialien bieten den wesentlichen Vorteil, dass sie ein homogenes Temperaturprofil über die gesamte Fläche des Reaktionsraums gewährleisten und somit temperaturabhängige Reaktionen wie beispielsweise eine PCR in der gesamten Reaktionskammer homogen, mit hoher Ausbeute und mit hoher Genauigkeit steuerbar bzw. regelbar durchführbar sind.

Somit bestehen der Kammerträger und/oder das Substrat bei einer bevorzugten Ausführungsform aus Materialien mit einer hohen Wärmeleitfähigkeit, vorzugsweise mit einer Wärmeleitfähigkeit im Bereich von 15 bis 500 $Wm^{-1}K^{-1}$, besonders bevorzugt im Bereich von 50 bis 300 $Wm^{-1}K^{-1}$ und am meisten bevorzugt im Bereich von 100 bis 200 $Wm^{-1}K^{-1}$, wobei die Materialien üblicherweise nicht optisch transparent sind. Beispiele für geeignete wärmeleitfähige Materialien sind Silizium, keramische Materialien wie Aluminiumoxid-Keramiken und/oder Metalle wie Edelstahl, Aluminium oder Messing.

Bei einer Ausführungsform der Offenbarung besteht das Substrat aus Materialien mit einer hohen Wärmeleitfähigkeit wie beispielsweise keramischen Materialien. Bei dieser Ausführungsform wird das Substrat mit einem Mittel zur Temperaturbeaufschlagung verbunden, wodurch die gegenüberliegende Seite, der Kammerträger, aus einem Material ausgeführt sein kann, dass nicht über eine ausgeprägte Wärmeleitfähigkeit verfügt, wie z.B. einem Material, das auch für den übrigen Kammerkörper eingesetzt wird. Somit wird im Gegensatz zu einer Ausführungsform, bei der sowohl der Kammerträger als auch das Substrat aus einem kostenintensiven Material besteht, bei dieser Ausführungsform ein kostenintensives Bauteil eingespart.

Besteht das Substrat bzw. der Träger der offenbarten Vorrichtung im Wesentlichen aus keramischen Materialien, so werden vorzugsweise Aluminiumoxid-Keramiken eingesetzt. Beispiele für derartige Aluminiumoxid-Keramiken sind die Keramiken A-473, A-476 sowie A-493 der Firma Kyocera (Neuss, Deutschland). Die Keramiken unterscheiden sich im Wesentlichen im jeweiligen Anteil an Aluminiumoxid (A-473: 93%, A-476: 96% und A-493: 99,%) sowie in ihrer Oberflächenrauigkeit. Besonders bevorzugt werden Aluminium-Oxid-Keramiken eingesetzt, die eine möglichst geringe Oberflächenrauigkeit aufweisen.

Vorzugsweise ist der Kammerträger und/oder das Substrat auf seiner Rückseite, d.h. der der Reaktionskammer abgewandten Seite mit ggf. miniaturisierten Temperaturfühlern und/oder Elektroden versehen bzw. weist dort Heizerstrukturen auf, so dass ein Temperieren der Probenflüssigkeit sowie eine Durchmischung der Probenflüssigkeit durch einen induzierten elektroosmotischen Fluss möglich ist.

Die Temperaturfühler können beispielsweise als Nickel-Chrom-Dünnfilm-Widerstandstemperaturfühler ausgeführt sein.

Die Elektroden können beispielsweise als Gold-Titan-Elektroden und insbesondere als Quadrupol ausgeführt sein.

Die Mittel zur Temperaturbeaufschlagung können vorzugsweise so gewählt werden, dass ein schnelles Erhitzen und Abkühlen der Flüssigkeit im Kapillarspalt möglich ist. Unter schnellem Erhitzen und Abkühlen wird dabei verstanden, dass durch die Mittel zur Temperaturbeaufschlagung Temperaturänderungen in einem Bereich von 0,2°K/s bis 30°K/s, vorzugsweise von 0,5°K/s bis 15°K/s, besonders bevorzugt von 2°K/s bis 15° K/s und am meisten bevorzugt von 8°K/s bis 12°K/s oder etwa 10 °K/s vermittelt werden können. Vorzugsweise können durch die Mittel zur Temperaturbeaufschlagung auch Temperaturänderungen von 1°K/s bis 10°K/s vermittelt werden.

Die Mittel zur Temperaturbeaufschlagung, zum Beispiel in Form von Heizern, können beispielsweise als Nickel-Chrom-Dünnfilm-Widerstandsheizer ausgeführt sein.

Für weitere Einzelheiten über die Spezifikation und Dimension der Temperaturfühler, Mittel zur Temperaturbeaufschlagung und der Elektroden wird auf den Inhalt der internationalen Patentanmeldung WO 01/02094 verwiesen.

Der Chip bzw. das Substrat kann vorzugsweise aus Borofloat-Gläsern, Quarzglas, einkristallinem $CaF_2$, Saphir-Scheiben, Topas, PMMA, Polycarbonat und/oder Polystyrol bestehen. Die Wahl der Materialien ist ebenfalls am späteren Verwendungszweck der Vorrichtung bzw. des Chips auszurichten. Wird der Chip zum Beispiel für die Charakterisierung von PCR-Produkten verwendet, dürfen nur solche Materialien eingesetzt werden, die einer Temperatur von 95°C standhalten können.

Die Chips sind bevorzugt durch Nukleinsäuremoleküle, insbesondere durch DNA- oder RNA-Moleküle funktionalisiert. Sie können aber auch durch Peptide und/oder Proteine, wie zum Beispiel Antikörper, Rezeptormoleküle, pharmazeutisch aktive Peptide und/oder Hormone funktionalisiert werden.

Erfolgt die Detektion des zeitlichen Verlaufs von Niederschlagsbildungen auf der Detektionsfläche im Dunkelfeld, d.h. werden Änderungen der Streuungseigenschaften der Detektionsfläche detektiert, sind bevorzugte Materialien für den Substanzbibliothekenträger optische transparente Materialien wie Glas, besonders bevorzugt Borosilikatglas, und transparente Polymere wie z.B. PMMA, Polycarbonat und/oder Acryl; für den Kammerträger optisch transparente Materialien, wie Glas und/oder Kunststoffe, und insbesondere optisch nicht transparente Materialien wie Silizium, keramische Materialien; und für die Reaktionskammer Kunststoffe wie Makrolon, PMMA, Polycarbonat, Teflon und dergleichen, Metalle wie Edelstahl, Aluminium, und/oder Messing sowie Glas. Alternativ kann bei Durchführung von Dunkelfeldmessungen der offenbarten Vorrichtung der Kammerträger aus optisch transparenten Materialien bestehen, während der Substanzbibliothekenträger aus optisch nicht transparenten Materialien besteht.

Bei einer Ausführungsform umfasst die offenbarte Vorrichtung zusätzlich mindestens einen Fluidbehälter, der mit der Reaktionskammer verbunden ist, sowie gegebenenfalls eine Einheit zur Steuerung des Be- und Entladens der Reaktionskammer mit Fluiden. Unter Fluiden werden im Rahmen der vorliegenden Erfindung Flüssigkeiten oder Gase verstanden. Die Verbindung der Fluidbehälter mit der Reaktionskammer kann beispielsweise wie in der internationalen Patentanmeldung WO 01/02094 ausgeführt sein.

Bei einer weiteren Ausführungsform umfasst die offenbarte Vorrichtung eine mit dem optischen System verbundene Einheit zur Verarbeitung von durch das optische System aufgenommenen Signalen. Diese Kopplung von Detektiereinheit und Verarbeitungseinheit, die die Umwandlung der Reaktionsergebnisse in das Analyseergebnis gewährleistet, erlaubt u.a. den Einsatz der offenbarten Vorrichtung als Handgerät beispielsweise in der medizinischen Diagnostik.

Vorzugsweise umfasst die Vorrichtung ferner eine Schnittstelle für externe Rechner. Dies erlaubt die Übertragung von Daten zur Speicherung außerhalb der Vorrichtung.

Das optische System, mit dem der zeitliche Verlauf von Niederschlagsbildungen auf der Detektionsfläche des Chips detektierbar ist, umfasst vorzugsweise einen zweidimensional auslesbaren Detektor. Der Detektor ist vorzugsweise eine Kamera, insbesondere eine CCD- oder CMOS-Kamera oder eine ähnliche Kamera. Durch Verwendung von Kameras mit elektrischen Bildwandlern wie zum Beispiel CCD- oder CMOS-Chips können hohe örtliche Auflösungen realisiert werden.

Die im optischen System der offenbarten Vorrichtung eingesetzten Kameras gewährleisten, dass die Beleuchtungsintensität homogen auf der abzubildenden Fläche verteilt ist und die zu detektierenden Signale durch Reflexion, Transmissionsmodulation, Streuung, Polarisationsmodulation und dergleichen mit der eingesetzten Detektionstechnik im Rahmen der zur Verfügung stehenden Dynamik abbildbar ist. Derartige Beleuchtungsverfahren sind beispielsweise in der internationalen Patentanmeldung WO 00/72018 beschrieben sowie auch kommerziell verfügbar (zum Beispiel von Vision & Control GmbH (Suhl, Deutschland) für Dunkelfeldbeleuchtungen und von Edmund Industrieoptik GmbH (Karlsruhe, Deutschland) für LED-Ringlicht).

Eine hohe örtliche Auflösung der zu detektierenden Fläche kann beispielsweise auch durch die Abbildung auf Detektoren wie Spiegel-Arrays oder LCD-Elemente und deren Verstellung gemäß eines zu detektierenden Musters oder einer zu definierenden Fläche erreicht werden, wie es beispielsweise für Fluoreszenzanwendungen in der deutschen Offenlegungsschrift DE 199 14 279 beschrieben ist. Der Vorteil eines derartigen Detektors bei der Messung von Reflexions- oder Transmissionsmodulationen besteht in der Integration der thermischen, elektrischen und fluidischen Steuerung bzw. Regelung in der Möglichkeit der optischen Signalverarbeitung und somit in geringeren technischen Anforderungen an die involvierte Rechentechnik.

Die Detektoren zeichnen üblicherweise den gesamten Bereich des Sonden-Arrays auf.

Alternativ können auch scannende Detektoren zum Auslesen des Chips eingesetzt werden. Bei der Verwendung von scannenden Punktlichtquellen und/oder scannenden Detektoren umfasst die offenbarte Vorrichtung bewegliche optische Komponenten zur Lichtführung bzw. bewegliche mechanische Komponenten zur Halterung der Reaktionskammern, so dass die Führung der jeweiligen Komponenten über die einzelnen abzutastenden Positionen, das heißt die jeweiligen Messpunkte, gewährleistet ist. Die Bildaufnahme erfolgt bei dieser Ausführungsform durch eine rechnerische Rekonstruktion des Bildes aus den jeweiligen Messpunkten. Insbesondere ist die Kamera bei dieser Ausführungsform eine bewegbare Zeilenkamera.

Ferner umfasst das optische System vorzugsweise zusätzlich eine Lichtquelle, besonders bevorzugt eine multispektrale oder eine kohärente Lichtquelle. Beispiele für Lichtquellen im Rahmen der vorliegenden Erfindung sind Laser, Licht-emittierende Dioden (LED) und/oder Hochdrucklampen. Die Lichtquelle des optischen Systems gewährleistet vorzugsweise eine homogene Beleuchtung des Trägers.

Neben punktförmigen Lichtquellen können auch Lichtquellen in Form von Beleuchtungs-Arrays in der offenbarten Vorrichtung Verwendung finden. Eine homogene Beleuchtung des Trägers kann in dieser Ausgestaltung beispielsweise dadurch gewährleistet werden, dass die Lichtquelle mehrere diffus strahlende Lichtquellen umfasst, deren Überlagerung in einer homogenen Beleuchtung resultiert. So ermöglichen beispielsweise diffus streuende LED, die matrixförmig angeordnet sind, auf kurze Entfernungen zur Probe eine homogene Beleuchtung.

Wie bereits vorstehend erwähnt, kann die offenbarte Vorrichtung derart ausgeführt sein, dass die Detektionsfläche durch die Lichtquelle zeilenförmig abtastbar ist. Falls eine rasterförmige bzw. scannende Führung des Lichtstrahls über die Detektionsfläche gewünscht ist, sind folgende Ausführungsmöglichkeiten für die offenbarte Vorrichtung denkbar:

Z.B. kann die Detektionsfläche bzw. die Reaktionskammer beweglich ausgeführt sein und an einer ortsfesten Lichtquelle vorbeigeführt werden. Ist die Lichtquelle ein Laser, ist der Laser dabei in Ruhestellung. Ferner kann die Detektionsfläche in Ruhestellung vorliegen und ein beweglicher Laserstrahl über die Detektionsfläche geführt werden. Schließlich ist es auch möglich, dass die Lichtquelle in einer Achse und die Detektionsfläche in der anderen Achse bewegt werden.

Bei einer weiteren vorteilhaften Ausgestaltung der offenbarten Vorrichtung umfasst die Vorrichtung zusätzlich Linsen, Spiegel und/oder Filter. Der Einsatz von Filtern ermöglicht zum einen die spektrale Eingrenzung der homogenen Beleuchtung und zum anderen die Beleuchtung der Proben mit verschiedenen Wellenlängen. Bei einer weiteren Variante umfasst die offenbarte Vorrichtung zusätzlich Filterwechsler. Mit diesen Filterwechslern können die optischen Filter schnell gewechselt werden und somit mögliche Fehlinformationen, die zum Beispiel durch Verunreinigungen auftreten, eindeutig erkannt und eliminiert werden.

Wie bereits vorstehend erwähnt, ist das optische System vorzugsweise derart ausgestaltet, dass die Detektionsfläche homogen beleuchtbar ist, vorzugsweise mit einer Beleuchtungsintensitäts-Homogenität von mindestens 50%, besonders bevorzugt von mindestens 60% und am meisten bevorzugt von mindestens 70%.

Bei einer weiteren Ausführungsform der offenbarten Vorrichtung ist das optische System derart ausgestaltet, dass der zeitliche Verlauf der Änderung von Transmissionseigenschaften der Detektionsfläche detektierbar ist. Dies kann beispielsweise dadurch gewährleistet werden, dass Lichtquelle und Detektor auf entgegengesetzten Seiten in der Reaktionskammer angeordnet sind und die Reaktionskammer einschließlich des Trägers für die Detektionsfläche zumindest im Bereich des Strahlengangs von der Lichtquelle zum Detektor optisch transparent ist.

Bei einer weiteren Ausführungsform ist das optische System derart angeordnet, dass der zeitliche Verlauf der Änderung von Reflexionseigenschaften der Detektionsfläche detektierbar ist. Bei einer bevorzugten Ausführungsform zur Messung der Reflektivität befindet sich zusätzlich ein Oberflächenspiegel auf der Unterseite des Trägerelements. Der Nachteil der schlechten Reflexion der Probe wird in dieser Ausgestaltung durch Transmissionseffekte ergänzt, in denen das Beleuchtungslicht über eine Spiegelschicht hinter der Probe, entweder als eigenständiger Spiegel oder als auf der Rückseite des Probenträgers aufgetragene Schicht, reflektiert. Dabei kann beispielsweise ein Flächenstrahler auf der gegenüberliegenden Seite des Trägerelements und damit auch zum Sensor beispielsweise einer CCD-Kamera angeordnet werden. Auf diese Weise wird eine sehr kompakte Anordnung ermöglicht. Bei einer weiteren bevorzugten Ausgestaltung, insbesondere wenn die Reflektivität des Trägerelements gemessen wird, umfasst die Vorrichtung zusätzlich einen halbdurchlässigen Spiegel zwischen Lichtquelle und Trägerelement. Bei dieser Ausführungsform gelangt das Licht der Lichtquelle durch einen halbdurchlässigen Spiegel auf die Probe und das Bild wird in Reflexion durch den halbdurchlässigen Spiegel und gegebenenfalls eine Ausleseoptik auf eine Kamera abgebildet.

Bei einer besonders bevorzugten Ausführungsform der offenbarten Vorrichtung ist das optische System derart angeordnet, dass der zeitliche Verlauf der Änderung von Streuungseigenschaften der Detektionsfläche detektierbar ist. Dabei sind Lichtquelle und Detektor vorzugsweise auf derselben Seite der zu detektierenden Fläche angeordnet. Das optische System kann bei dieser Ausführungsform beispielsweise derart angeordnet sein, dass die Probe bzw. der Chip in einem bestimmten Winkel, der vorzugsweise kleiner 45°C und besonders bevorzugt kleiner 30°C ist, beleuchtbar ist. Der Beleuchtungswinkel wird so gewählt, dass das eingestrahlte Licht ohne das Vorhandensein lokaler Streuzentren, d.h. z.B. vor einer Niederschlagsbildung auf der Detektionsfläche, nicht direkt in den Detektionsstrahlengang reflektiert wird und somit kein Signal detektierbar ist. Treten lokale Streuzentren auf der Detektionsfläche auf, z.B. durch Bildung eines Niederschlags, gelangt ein Teil des eingestrahlten Lichtes in den Detektionsstrahlengang und führt somit zu einem messbaren Signal in dem optischen System der offenbarten Vorrichtung.

Besonders bevorzugt ist der Kammerträger oder der Substanzbibliothekenträger zumindest im Bereich der Detektionsfläche bei dieser Ausführungsform optisch nicht transparent. Geeignete nicht optisch transparente Materialien sind beispielsweise Silizium, keramische Werkstoffe oder Metalle. Der Einsatz eines nicht optisch transparenten Kammerträgers hat den Vorteil, dass aufgrund von vorteilhaften physikalischen Eigenschaften der Trägermaterialien eine leichtere, exaktere und homogenere Temperatursteuerung der Reaktionskammer gewährleistet ist, so dass eine erfolgreiche Durchführung von temperatursensitiven Reaktionen wie eine PCR gewährleistet ist.

Bei einer weiteren bevorzugten Ausführungsform der offenbarten Vorrichtung ist der Anregungsstrahlengang der Lichtquelle derart gestaltet, dass Bereiche parallelen Lichtes vorliegen und somit Interferenzfilter ohne Verschiebung ihrer Transmissionsfenster in das optische System eingebracht werden können.

Bei einer weiteren bevorzugten Ausführungsform der offenbarten Vorrichtung ist der Detektionsstrahlengang derart gestaltet, dass Bereiche parallelen Lichtes vorliegen und somit Interferenzfilter ohne Verschiebung ihrer Transmissionsfenster in das optische System einbringbar sind.

Interferenzfilter verändern ihre spektrale Selektivität bei nichtparallelen Strahlengängen stark. Ermöglicht das optische System durch das Vorhandensein von Bereichen parallelen Lichtes die Einbringung bzw. Anordnung von Interferenzfiltern in der offenbarten Vorrichtung, ohne deren spektrale Selektivität zu verändern, so ist die offenbarte Vorrichtung auch zur Detektion molekularer Wechselwirkungen von mit Fluorochromen markierten Substanzen geeignet. Somit kann eine universelle CCD-basierte Reaktions- und Detektionsvorrichtung realisiert werden.

Bei dieser Ausführungsform der offenbarten Vorrichtung, die auch zur Detektion von Fluoreszenzmarkierung geeignet ist, kann das optische System, bei der Verwendung von weißem oder multispektralem Licht wie z.B. Halogenbeleuchtung, Xenon, Weißlicht-LED und dergleichen, z.B. zwei Filter im Beleuchtungs- und Detektionsstrahlengang oder, bei der Verwendung monochromer Lichtquellen wie z.B. LED oder Laser, z.B. einen Filter im Detektionstrahlengang aufweisen.

Bei einer weiteren bevorzugten Ausführungsform der Offenbarung ist die Reaktionskammer über eine Datenmatrix individuell gekennzeichnet. Dazu wird bei der Herstellung der offenbarten Vorrichtung ein Datensatz in einer Datenbank gespeichert, welcher Informationen über die Substanzbibliothek, die Durchführung der Nachweisreaktion und dergleichen enthält. So kann der Datensatz insbesondere Informationen über die Anordnung der Sonden auf dem Array sowie Informationen darüber enthalten, wie die Auswertung am vorteilhaftesten zu erfolgen hat. Der Datensatz bzw. die Datenmatrix kann ferner Informationen über das Temperatur-Zeit-Regime einer ggf. durchzuführenden PCR zur Vervielfältigung der Zielmoleküle enthalten. Der so erstellte Datensatz erhält vorzugsweise eine Nummer, die in Form der Datenmatrix auf der Halterung angebracht wird. Über die in der Datenmatrix verzeichnete Nummer kann dann ggf. beim Auslesen der Substanzbibliothek der angelegte Datensatz aufgerufen werden. Schließlich kann die Datenmatrix von der Temperatursteuerungs- bzw. -regeleinheit und anderen Controllern wie z.B. einer Steuerung für die Be- und Entfüllung der Reaktionskammer über die Fluidbehälter ausgelesen werden und so eine automatische Durchführung von Vervielfältigungs- und Nachweisreaktion gewährleistet werden.

Bei einem weiteren Aspekt der vorliegenden Offenbarung wird eine Vorrichtung zur Vervielfältigung und zum Nachweis von Nukleinsäuren bereit gestellt, die ebenfalls eine wie vorstehend beschriebene Temperatursteuerungs- und/oder -regeleinheit; sowie eine wie vorstehend beschriebene Reaktionskammer enthält, die einen Träger mit einer Detektionsfläche, auf der eine Substanzbibliothek immobilisiert ist, umfasst, wobei die Temperatur in der Reaktionskammer durch die Temperatursteuerungs- und -regeleinheit steuerbar und/oder regelbar ist.

Anstelle eines optischen Systems weist die Vorrichtung bei diesem Aspekt der vorliegenden Offenbarung jedoch elektrische Kontakte an den jeweiligen Array-Spots auf. Diese elektrischen Kontakte können beispielsweise über Elektroden kontaktiert werden. Durch die Bildung eines metallischen Niederschlags auf den Array-Elementen zur Signalverstärkung der an die Substanzbibliothek gebundenen, beispielsweise Gold-markierten Targets wächst auf den Array-Spots, an denen eine derartige Bindung stattgefunden hat, ein leitfähiges Material auf, das zu einer Veränderung des lokalen Widerstands führt. Somit ist über die elektrischen Kontakte an den Array-Spots eine Modulation bestimmter elektrischer Parameter wie beispielsweise Leitfähigkeit, Widerstand und Permeabilität möglich.

Vorzugsweise weist der Substanzbibliothekenträger der offenbarten Vorrichtung bei diesem Aspekt der vorliegenden Erfindung eine dreidimensionale Struktur auf, die zum Beispiel durch Erhebungen, Grund- und/oder Durchgangsbohrungen gebildet wird, wodurch der Effekt in der Verschmelzung des aufwachsenden leitfähigen Materials durch den sich bildenden Niederschlag mit den elektrischen Kontakten und die daraus resultierende Änderung elektrischer Parameter unterstützt wird.

Die auf der optischen Detektion basierende offenbarte Vorrichtung weist vorzugsweise eine Fluidikeinheit zum Austausch von Lösungen in der Reaktionskammer, eine Temperatursteuer- oder -regeleinheit, sowie ein für dynamische Messungen geeignetes optisches System auf. Die vorstehend genannten Einheiten können gegebenenfalls gerätetechnisch durch die Realisierung entsprechender Schnittstellen auch separat ausgeführt sein.

Substanzbibliotheken, die auf den Microarrays oder Chips immobilisiert sind, sind insbesondere Proteinbibliotheken wie Antikörper-, Rezeptorprotein- oder Membranproteinbibliotheken, Peptidbibliotheken wie Rezeptorligandenbibliotheken, Bibliotheken pharmakologisch aktiver Peptide oder Bibliotheken von Peptidhormonen, und Nukleinsäurebibliotheken wie DNA- oder RNA-Molekülbibliotheken. Besonders bevorzugt sind es Nukleinsäurebibliotheken.

Wie bereits vorstehend erwähnt, ist die Substanzbibliothek vorzugsweise in Form eines Microarrays, besonders bevorzugt mit einer Dichte von 2 bis 10,000 Array-Spots pro cm$^2$, am meisten bevorzugt mit einer Dichte von 50 bis 5000 Array-Spots pro cm$^2$, auf dem Substanzbibliothekenträger bzw. der Detektionsfläche immobilisiert.

Die Reaktionskammer der offenbarten Vorrichtung ist bei sämtlichen vorstehend beschriebenen Ausführungsformen vorzugsweise als Kapillarspalt ausgestaltet. Der Kapillarspalt weist vorzugsweise eine Dicke im Bereich von 10 $\mu$m bis 200 $\mu$m, besonders bevorzugt im Bereich von 25 $\mu$m bis 150 $\mu$m und am meisten bevorzugt im Bereich von 50 $\mu$m bis 100 $\mu$m auf. Bei speziellen Ausgestaltungen weist der Kapillarspalt eine Dicke von 60 $\mu$m, 70 $\mu$m, 80 $\mu$m oder 90 $\mu$m auf.

Bei einer alternativen Ausführungsform der offenbarten Vorrichtung weist der Reaktionsraum bzw. die Reaktionskammer beispielsweise eine Dicke von 0,7 mm bis 2,5 mm, vorzugsweise von 1,0 mm bis 2,0 mm und besonders bevorzugt von 1,2 mm bis 1,8 mm auf. Bei einer speziellen Ausgestaltung beträgt die Dicke des Reaktionsraums 1,5 mm.

Ferner ist bei sämtlichen vorstehend beschriebenen Ausführungsformen der offenbarten Vorrichtung eine Voramplifikation des zu analysierenden Materials nicht erforderlich. Von dem aus Bakterien, Blut oder anderen Zellen extrahierten Probenmaterial können gezielte Teilbereiche mit Hilfe einer PCR (Polymerase-Kettenreaktion) insbesondere in Anwesenheit der offenbarten Vorrichtung bzw. des Substanzbibliothekenträgers wie in DE 102 53 966 beschrieben amplifiziert und an den Träger hybridisiert werden. Dies stellt eine wesentliche Vereinfachung des Arbeitsaufwands dar.

Die offenbarte Vorrichtung ist somit insbesondere zur Verwendung bei der parallelen Durchführung von Amplifikation der zu analysierenden Zielmoleküle durch PCR und Nachweis durch Hybridisierung der Zielmoleküle mit dem Substanzbibliothekenträger geeignet. Dabei wird die nachzuweisende Nukleinsäure zunächst durch eine PCR amplifiziert, wobei der Reaktion zu Anfang vorzugsweise mindestens ein Kompetitor zugesetzt wird, der die Bildung eines der beiden durch die PCR amplifizierten Template-Stränge inhibiert. Insbesondere wird bei der PCR ein DNA-Molekül zugesetzt, das mit einem der zur PCR-Amplifikation des Templates verwendeten Primer um die Bindung an das Template konkurriert, und nicht enzymatisch verlängert werden kann. Die durch die PCR amplifizierten einzelsträngigen Nukleinsäuremoleküle werden dann durch Hybridisierung mit einer komplementären Sonde nachgewiesen. Alternativ wird die nachzuweisende Nukleinsäure zunächst im Einzelstrangüberschuss durch eine PCR amplifiziert und durch eine anschließende Hybridisierung mit einer komplementären Sonde nachgewiesen, wobei der PCR-Reaktion zu Anfang ein Kompetitor zugesetzt wird, bei dem es sich um ein DNA-Molekül oder ein Molekül eines Nukleinsäure-Analogons handelt, das an einen der beiden Stränge des Templates hybridisieren kann, aber nicht an den Bereich, der durch die Sonden-Hybridisierung nachgewiesen wird, und das enzymatisch nicht verlängerbar ist.

Als Kompetitor in der PCR kann jedes Molekül eingesetzt werden, das eine bevorzugte Amplifikation nur eines der beiden in der PCR-Reaktion vorhandenen Template-Stränge bewirkt. Bei Kompetitoren kann es sich daher erfindungsgemäß um Proteine, um Peptide, um DNA-Liganden, um Interkalatoren, um Nukleinsäuren oder deren Analoga handeln. Als Kompetitoren werden bevorzugt Proteine bzw. Peptide eingesetzt, die in der Lage sind, einzelsträngige Nukleinsäuren mit Sequenz-Spezifität zu binden und über die oben definierten Eigenschaften verfügen. Besonders bevorzugt werden als Sekundärstrukturbrecher Nukleinsäuremoleküle und Nukleinsäure-Analoga-Moleküle eingesetzt.

Durch anfängliche Zugabe des Kompetitors zur PCR während der Amplifikation wird die Bildung eines der beiden Template-Stränge im Wesentlichen inhibiert. "Im Wesentlichen inhibiert" bedeutet, dass im Rahmen der PCR ein ausreichender Einzelstrangüberschuss und eine ausreichende Menge des anderen Template-Strangs hergestellt werden, um einen effizienten Nachweis des amplifizierten Strangs durch die Hybridisierung zu gewährleisten. Die Amplifikation erfolgt damit nicht einer exponentiellen Kinetik der Form $2^n$ (mit n = Anzahl der Zyklen), sondern einer gedämpften Amplifikationskinetik der Form $<2^n$.

Der durch die PCR erzielte Einzelstrangüberschuss beträgt gegenüber dem nicht-amplifizierten Strang den Faktor 1,1 bis 1000, bevorzugt den Faktor 1,1 bis 300, ebenfalls bevorzugt den Faktor 1,1 bis 100, besonders bevorzugt den Faktor 1,5 bis 100, ebenfalls besonders bevorzugt den Faktor 1,5 bis 50, insbesondere bevorzugt den Faktor 1,5 bis 20 und am meisten bevorzugt den Faktor 1,5 bis 10.

Typischerweise wird die Funktion eines Kompetitors darin bestehen, dass er selektiv an einen der beiden Template-Stränge bindet und damit die Amplifikation des entsprechenden komplementären Stranges behindert. Als Kompetitoren kommen daher einzelsträngige DNA- oder RNA-bindende Proteine mit Spezifität für einen der beiden in einer PCR zu amplifizierenden Template-Stränge in Frage. Ebenso kann es sich um Aptamere handeln, die Sequenz-spezifisch nur an bestimmte Bereiche eines der beiden zu amplifizierenden Template-Stränge binden.

Bevorzugt werden Nukleinsäuren oder Nukleinsäure-Analoga als Kompetitoren eingesetzt. Üblicherweise werden die Nukleinsäuren bzw. Nukleinsäure-Analoga dadurch als Kompetitor der PCR wirken, dass sie entweder mit einem der zur PCR verwendeten Primer um die Primer-Bindungsstelle konkurrieren oder, aufgrund einer Sequenz-Komplementarität mit einem Bereich eines nachzuweisenden Template-Strangs hybridisieren können. Bei diesem Bereich handelt es sich nicht um die Sequenz, die durch die Sonde nachgewiesen wird. Solche Nukleinsäure-Kompetitoren sind enzymatisch nicht verlängerbar.

Bei den Nukleinsäure-Analoga kann es sich z.B. um sogenannte Peptid-Nukleinsäuren (peptide nucleic acids, PNA) handeln. Bei Nukleinsäure-Analoga kann es sich aber auch um Nukleinsäuremoleküle handeln, bei denen die Nukleotide über eine Phosphothioat-Bindung anstelle einer Phosphat-Bindung miteinander verknüpft sind. Ebenso kann es sich um Nukleinsäure-Analoga handeln, bei denen die natürlich vorkommenden Zuckerbausteine Ribose bzw. Deoxyribose gegen alternative Zucker wie z.B. Arabinose oder Trehalose etc. ausgetauscht wurden. Weiterhin kann es sich bei dem Nukleinsäurederivat um "locked nucleic acid" (LNA) handeln. Weitere übliche Nukleinsäure-Analoga sind dem Fachmann bekannt.

Bevorzugt werden als Kompetitoren DNA- oder RNA-Moleküle, insbesondere bevorzugt DNA- oder RNA-Oligonukleotide bzw. deren Analoga eingesetzt.

Abhängig von der Sequenz der als Kompetitoren eingesetzten Nukleinsäuremoleküle bzw. Nukleinsäure-Analoga beruht die Inhibierung der Amplifikation eines der beiden Template-Stränge im Rahmen der PCR-Reaktion auf unterschiedlichen Mechanismen. Dies wird im Folgenden beispielhaft anhand eines DNA-Moleküls diskutiert.

Wenn als Kompetitor z.B. ein DNA-Molekül verwendet wird, kann dies eine Sequenz aufweisen, die mit der Sequenz eines der zu PCR verwendeten Primer zumindest teilweise derart identisch ist, dass eine spezifische Hybridisierung des DNA-Kompetitor-Moleküls mit dem entsprechenden Template-Strang unter stringenten Bedingungen möglich ist. Da das zur Kompetition verwendete DNA-Molekül erfindungsgemäß in diesem Fall nicht durch eine DNA-Polymerase verlängerbar ist, kompetiert das DNA-Molekül mit dem jeweiligen Primer während der PCR-Reaktion um die Bindung an das Template. Je nach Mengenverhältnis des DNA-Kompetitor-Moleküls zum Primer kann auf diese Weise die Amplifikation des durch den Primer definierten Template-Strangs derart inhibiert werden, dass die Herstellung dieses Template-Strangs deutlich reduziert ist. Die PCR verläuft dabei nach einer exponentiellen Kinetik, die höher ist, als bei den verwendeten Kompetitor-Mengen zu erwarten wäre. Auf diese Weise entsteht ein Einzelstrangüberschuss in einer Menge, die ausreichend für einen effizienten Nachweis der amplifizierten Target-Moleküle durch Hybridisierung ist.

Bei dieser Ausführungsform dürfen die zur Kompetition verwendeten Nukleinsäuremoleküle bzw. Nukleinsäureanaloga enzymatisch nicht verlängerbar sein. "Enzymatisch nicht verlängerbar" bedeutet, dass die zur Amplifikation verwendete DNA- oder RNA-Polymerase den Nukleinsäure-Kompetitor nicht als Primer verwenden kann, d.h. nicht in der Lage ist, 3' von der durch den Kompetitor definierten Sequenz den jeweiligen Gegenstrang zum Template zu synthetisieren.

Alternativ zu der oben dargestellten Möglichkeit kann das DNA-Kompetitor-Molekül auch über eine Sequenz verfügen, die zu einem Bereich des nachzuweisenden Template-Strangs komplementär ist, der nicht durch eine der Primer-Sequenzen adressiert wird, und die enzymatisch nicht verlängerbar ist. Im Rahmen der PCR wird das DNA-Kompetitor-Molekül dann an diesem Template-Strang hybridisieren und die Amplifikation dieses Stranges entsprechend blockieren.

Dem Fachmann ist bekannt, dass die Sequenzen von DNA-Kompetitor-Molekülen oder allgemein Nukleinsäure-Kompetitor-Molekülen entsprechend gewählt werden können. Wenn die Nukleinsäure-Kompetitor-Moleküle eine Sequenz aufweisen, die nicht mit der Sequenz eines der zur PCR verwendeten Primer im Wesentlichen identisch, sondern zu einem anderen Bereich des nachzuweisenden Template-Strangs komplementär ist, ist diese Sequenz so zu wählen, dass sie nicht in den Bereich der Template-Sequenz fällt, der im Rahmen der Hybridisierung mit einer Sonde nachgewiesen wird. Dies ist deswegen notwendig, da zwischen der PCR und der Hybridisierungsreaktion keine Aufarbeitungsreaktion stattfinden muss. Würde als Kompetitor ein Nukleinsäuremolekül verwendet, das in den nachzuweisenden Bereich fällt, würde dies mit dem einzelsträngigen TargetMolekül um die Bindung an die Sonde kompetieren.

Bevorzugt hybridisieren solche Kompetitoren in der Nähe der Template-Sequenz, die durch die Sonde nachgewiesen wird. Die Positionsangabe "in der Nähe" ist dabei erfindungsgemäß so zu verstehen, wie sie für Sekundärstrukturbrecher angegeben ist. Allerdings können die erfindungsgemäßen Kompetitoren auch in unmittelbarer Nachbarschaft der nachzuweisenden Sequenz hybridisieren, d.h. exakt ein Nukleotid von der nachzuweisenden Target-Sequenz entfernt.

Wenn als kompetitierende Moleküle enzymatisch nicht verlängerbare Nukleinsäuren oder Nukleinsäure-Analoga verwendet werden, sind diese hinsichtlich ihrer Sequenz oder Struktur so zu wählen, dass sie nicht enzymatisch durch DNA- oder RNA-Polymerasen verlängert werden können. Bevorzugt ist das 3'-Ende eines Nukleinsäure-Kompetitors so ausgelegt, dass es keine Komplementarität zum Template aufweist und/oder anstelle der 3-OH-Gruppe am 3'-Ende einen anderen Substituenten trägt.

Weist das 3'-Ende des Nukleinsäure-Kompetitors keine Komplementarität zum Template auf, unabhängig davon, ob der Nukleinsäure-Kompetitor an eine der Primer-Bindungsstellen des Templates oder an eine der durch die PCR zu amplifizierenden Sequenzen des Templates bindet, kann der Nukleinsäure-Kompetitor wegen der fehlenden Basen-Komplementarität am 3'-Ende nicht durch die gängigen DNA-Polymerasen verlängert werden. Diese Art der Nicht-Verlängerbarkeit von Nukleinsäure-Kompetitoren durch DNA-Polymerasen ist dem Fachmann bekannt. Bevorzugt weist der Nukleinsäure-Kompetitor an seinem 3'-Ende bezüglich der letzten 4 Basen, besonders bevorzugt bezüglich der letzten 3 Basen, insbesondere bevorzugt bezüglich der letzten 2 Basen und am meisten bevorzugt bezüglich der letzten Base keine Komplementarität zu seiner Zielsequenz auf. Solche Kompetitoren können an den genannten Positionen auch nicht-natürliche Basen aufweisen, die keine Hybridisierung erlauben.

Nukleinsäure-Kompetitoren, die enzymatisch nicht verlängerbar sind, können auch eine 100%-ige Komplementarität zu ihrer Zielsequenz aufweisen, wenn sie in ihrem Rückgrat oder an ihrem 3'-Ende derart modifiziert sind, dass sie enzymatisch nicht verlängerbar sind.

Weist der Nukleinsäure-Kompetitor an seinem 3'-Ende eine andere Gruppe als die OH-Gruppe auf, handelt es sich bei diesen Substituenten bevorzugt um eine Phosphat-Gruppe, um ein Wasserstoff-Atom (Dideoxynukleotid), eine Biotingruppe oder eine Aminogruppe. Diese Gruppen können durch die gängigen Polymerasen nicht verlängert werden.

Besonders bevorzugt wird bei einem derartigen Verfahren als Kompetitor ein DNA-Molekül verwendet, das mit einem der beiden zur PCR verwendeten Primer um die Bindung an das Template kompetiert und welches am 3'-Ende während der chemischen Synthese mit einem Aminolink versehen wurde. Solche Kompetitoren können 100%-ige Komplementarität zu ihrer Zielsequenz haben.

Nukleinsäure-Analoga-Kompetitoren wie z.B. PNAs müssen dagegen nicht über eine blockierte 3'-OH-Gruppe oder eine nicht-komplementäre Base an ihrem 3'-Ende verfügen, da sie aufgrund des durch die Peptid-Bindung veränderten Rückgrats nicht durch die DNA-Polymerasen erkannt und somit auch nicht verlängert werden. Entsprechende andere Modifikationen der Phosphatgruppe, die durch die DNA-Polymerasen nicht erkannt werden, sind dem Fachmann bekannt. Dazu gehören u.a. Nukleinsäuren mit Rückgratmodifikationen wie z.B. 2'-5' Amid-Bindungen (Chan et al. (1999) J. Chem. Soc., Perkin Trans. 1, 315-320), Sulfid-Bindungen (Kawai et al. (1993) Nucleic Acids Res., 1 (6), 1473-1479), LNA (Sorensen et al. (2002) J. Am. Chem. Soc., 124 (10), 2164-2176) und TNA (Schoning et al. (2000) Science, 290 (5495), 1347-1351).

Es können auch mehrere Kompetitoren, die an unterschiedliche Bereiche des Templates (z.B. u.a. die Primer-Bindungsstelle) hybridisieren, gleichzeitig in einer PCR eingesetzt werden. Wenn die Kompetitoren über Sekundärstrukturbrechereigenschaften verfügen, kann dadurch die Effizienz der Hybridisierung zusätzlich gesteigert werden.

In einer alternativen Ausführungsform kann das DNA-Kompetitor-Molekül über eine zu einem der Primer komplementäre Sequenz verfügen. Solche z.B. Antisense-DNA-Kompetitor-Moleküle können dann je nach Mengenverhältnis zwischen Antisense-DNA-Kompetitor-Molekül und Primer dazu verwendet werden, den Primer in der PCR-Reaktion zu titrieren, so dass dieser nicht mehr mit dem jeweiligen Template-Strang hybridisiert und entsprechend nur der durch den anderen Primer definierte Template-Strang amplifiziert wird. Dem Fachmann ist bewusst, dass bei dieser Ausführungsform der Erfindung der Nukleinsäure-Kompetitor enzymatisch verlängerbar sein kann, aber nicht muss.

Wenn im Rahmen dieser Erfindung von Nukleinsäure-Kompetitoren gesprochen wird, schließt dies Nukleinsäure-Analoga-Kompetitoren mit ein, wenn sich nicht aus dem Kontext etwas anderes ergibt. Der Nukleinsäure-Kompetitor kann an den entsprechenden Strang des Templates reversibel oder irreversibel binden. Die Bindung kann durch kovalente bzw. nicht kovalente Wechselwirkungen erfolgen.

Bevorzugt erfolgt die Bindung des Nukleinsäure-Kompetitors über nichtkovalente Wechselwirkungen und ist reversibel. Insbesondere bevorzugt erfolgt die Bindung an das Template durch Ausbildung von Watson-Crick Basenpaarungen.

Die Sequenzen der Nukleinsäure-Kompetitoren richten sich in der Regel nach der Sequenz des Template-Strangs, der nachgewiesen werden soll, bei antisense-Primern dagegen nach den zu titrierenden Primer-Sequenzen, die aber wiederum durch die Template-Sequenzen definiert sind.

Bei der PCR-Amplifikation von Nukleinsäuren handelt es sich um eine Labor-Standardmethode, mit deren vielfältigen Variations- und Ausgestaltungsmöglichkeiten der Fachmann vertraut ist. Prinzipiell ist eine PCR dadurch charakterisiert, dass das doppelsträngige Nukleinsäure-Template, üblicherweise ein doppelsträngiges DNA-Molekül, zuerst einer Hitze-Denaturierung für 5 Minuten bei 95° C unterworfen wird, wodurch die beiden Stränge voneinander getrennt werden. Nach einer Abkühlung auf die sogenannte "annealing"-Temperatur (definiert durch den Primer mit der niedrigeren Schmelztemperatur) lagern sich die in der Reaktionslösung vorhandenen "forward"- und "reverse"-Primer an die zu ihrer Sequenz komplementären Stellen in den jeweiligen Template-Strängen an. Die "annealing"-Temperatur der Primer richtet sich dabei nach der Länge und Basenzusammensetzung der Primer. Sie kann aufgrund theoretischer Überlegungen kalkuliert werden. Angaben zur Kalkulation von "annealing"-Temperaturen finden sich z.B. in Sambrook et al. (*vide supra*).

Nach dem Annealen der Primer, das typischerweise in einem Temperaturbereich von 40-75 °C, bevorzugt von 45-72 °C und insbesondere bevorzugt von 50-72 °C erfolgt, folgt ein Elongationsschritt, bei dem durch die Aktivität der in der Reaktionslösung vorhandenen DNA-Polymerase Desoxyribonukleotide mit dem 3'-Ende der Primer verknüpft werden. Die Identität der eingefügten dNTPs richtet sich dabei nach der Sequenz des mit dem Primer hybridisierten Template-Strangs. Da in der Regel thermostabile DNA-Polymerasen eingesetzt werden, läuft der Elongationsschritt üblicherweise zwischen 68-72° C ab.

Bei der symmetrischen PCR wird durch eine Wiederholung dieses beschriebenen Zyklus aus Denaturierung, Annealing der Primer und Elongation der Primer eine exponentielle Vermehrung des durch die Primersequenzen definierten Nukleinsäureabschnitts des Targets erreicht. Hinsichtlich der Pufferbedingungen bei der PCR, der verwendbaren DNA-Polymerasen, der Herstellung von doppelsträngigen DNA-Templates, des Designs von Primern, der Wahl der Annealing-Temperatur und Variationen der klassischen PCR steht dem Fachmann zahlreiche Literatur zur Verfügung.

Dem Fachmann ist geläufig, dass als Template auch z.B. einzelsträngige RNA, wie z.B. mRNA, eingesetzt werden kann. Diese wird in der Regel vorher durch eine Reverse Transkription in eine doppelsträngige cDNA überführt.

In einer bevorzugten Ausführungsform wird als Polymerase eine thermostabile DNA-abhängige DNA-Polymerase verwendet. In einer besonders bevorzugten Ausführungsform wird eine thermostabile DNA-abhängige DNA-Polymerase ausgewählt aus der Gruppe bestehend aus Taq-DNA-Polymerase (Eppendorf, Hamburg, Deutschland sowie Qiagen, Hilden, Deutschland), Pfu-DNA-Polymerase (Stratagene, La Jolla, USA), Tth-DNA-Polymerase (Biozym Epicenter Technol., Madison, USA), Vent-DNA-Polymerase, DeepVent-DNA-Polymerase (New England Biolabs, Beverly, USA), Expand-DNA-Polymerase (Roche, Mannheim, Deutschland) verwendet.

Die Verwendung von Polymerasen, die aus natürlich vorkommenden Polymerasen durch gezielte oder evolutive Veränderang optimiert worden sind, ist ebenfalls bevorzugt. Bei der Durchführung der PCR in Gegenwert des Substanzbibliothekenträgers ist insbesondere die Verwendung der Taq-Polymerase der Firma Eppendorf (Deutschland) bzw. des Advantage-cDNA-Polymerase-Mix von Clontech (Palo Alto, CA, USA) bevorzugt.

Bei einem weiteren Aspekt der vorliegenden Erfindung wird ein Verfahren zum Nachweis von Nukleinsäuren bereitgestellt, das die folgenden Schritte umfasst:

> a) Bereitstellung einer wie vorstehend offenbarten Vorrichtung;
> b) Wechselwirkung der nachzuweisenden Nukleinsäuren mit der auf der Detektionsfläche immobilisierten Substanzbibliothek; und
> c) Detektion der Wechselwirkung.

Die zu untersuchenden Targets können in jeder Art von Probe, vorzugsweise in einer biologischen Probe vorliegen.

Vorzugsweise werden die Targets vor ihrer Detektion und Quantifizierung durch das erfindungsgemäße Verfahren isoliert, gereinigt, kopiert und/oder amplifiziert.

Die Amplifikation erfolgt üblicherweise durch herkömmliche PCR-Methoden oder durch ein wie vorstehend beschriebenes Verfahren zur parallelen Durchführung von Amplifikation der zu analysierenden Zielmoleküle durch PCR und Nachweis durch Hybridisierung der Zielmoleküle mit dem Substanzbibliothekenträger.

Bei einer weiteren Ausführungsform wird die Amplifikation als Multiplex-PCR in einem zweistufigen Prozess ausgeführt (siehe auch WO 97/45559). In einer ersten Stufe wird eine Multiplex-PCR durchgeführt, indem Fusionsprimer eingesetzt werden, deren 3'-Enden genspezifisch sind und deren 5'-Enden eine universelle Region darstellen. Letztere ist bei allen in der Multiplex-Reaktion eingesetzten forward- und reverse-Primern gleich. In dieser ersten Stufe ist die Primermenge limitierend. Dadurch können alle Multiplex-Produkte bis zu einem einheitlichen molaren Niveau amplifiziert werden, vorausgesetzt, dass die Zyklenzahl hinreichend ist, um für alle Produkte Primerlimitation zu erreichen. In einer zweiten Stufe sind universelle Primer zugegen, die identisch mit den 5'-regionen der Fusionsprimer sind. Es erfolgt Amplifikation bis zur gewünschten DNA-Menge.

Der Nachweis erfolgt bei dem erfindungsgemäßen Verfahren vorzugsweise dadurch, dass die gebundenen Targets mit mindestens einer Markierung versehen sind, die in Schritt c) detektiert wird.

Wie bereits vorstehend erwähnt, ist die Markierung, die an die Targets oder Sonden gekoppelt ist, vorzugsweise eine detektierbare Einheit oder eine über eine Ankergruppe an die Targets oder Sonden gekoppelte detektierbare Einheit. Hinsichtlich der Möglichkeiten der Detektion bzw. der Markierung ist das erfindungsgemäße Verfahren äußerst flexibel. So ist das erfindungsgemäße Verfahren mit einer Vielzahl physikalischer, chemischer oder biochemischer Detektionsverfahren kompatibel. Voraussetzung ist lediglich, dass die zu detektierende Einheit bzw. Struktur direkt an eine Sonde oder ein Target, beispielsweise ein Oligonukleotid gekoppelt bzw. über eine mit dem Oligonukleotid koppelbare Ankergruppe verknüpft werden kann.

Die Detektion der Markierung kann auf Fluoreszenz, Magnetismus, Ladung, Masse, Affinität, enzymatischer Aktivität, Reaktivität, einer Goldmarkierung u.dgl. beruhen. So kann die Markierung beispielsweise auf der Verwendung von Fluorophor-markierten Strukturen bzw. Bausteinen basieren. In Verbindung mit der Fluoreszenz-Detektion kann die Markierung ein beliebiger an Targets oder Sonden während oder nach deren Synthese koppelbarer Farbstoff sein. Beispiele hierfür sind Cy-Farbstoffe (Amersham Pharmacia Biotech, Uppsala, Schweden), Alexa-Farbstoffe, Texas-Rot, Fluorescein, Rhodamin (Molecular Probes, Eugene, Oregon, USA), Lanthanide wie Samarium, Ytterbium und Europium (EG&G, Wallac, Freiburg, Deutschland).

Neben Fluoreszenz-Markern können im Rahmen der vorliegenden Erfindung als Markierung bzw. als Detektiereinheit, die mit den Targets bzw. Sonden gekoppelt ist, auch Lumineszenz-Marker, Metall-Marker, Enzym-Marker, radioaktive Marker und/oder polymere Marker eingesetzt werden.

Ebenso kann eine Nukleinsäure als Markierung (Tag) genutzt werden, die durch Hybridisierung mit einem markierten Reporter detektiert werden kann (Sandwich-Hybridisierung). Einsatz zum Nachweis des Tags finden diverse molekularbiologische Nachweisreaktionen wie Primer-Extension, Ligation und RCA.

Bei einer alternativen Ausführungsform des erfindungsgemäßen Verfahrens ist die detektierbare Einheit über eine Ankergruppe mit den Targets oder Sonden gekoppelt. Bevorzugt verwendete Ankergruppen sind Biotin, Digoxygenin u.dgl. Die Ankergruppe wird in einer anschließenden Reaktion mit spezifisch bindenden Komponenten, beispielsweise Streptavidin-Konjugaten oder Antikörper-Konjugaten umgesetzt, die selbst detektierbar sind oder eine detektierbare Reaktion auslösen. Bei Einsatz von Ankergruppen kann die Umsetzung der Ankergruppen in detektierbare Einheiten vor, während oder nach Zugabe der Probe umfassend die Targets bzw. ggf. vor, während oder nach der Spaltung der selektiv spaltbaren Bindung in den Sonden erfolgen.

Die Markierung kann erfindungsgemäß auch durch Wechselwirkung eines markierten Moleküls mit den Sonden-Molekülen erfolgen. Beispielsweise kann die Markierung durch Hybridisierung eines wie vorstehend beschrieben markierten Oligonukleotids mit einer Oligonukleotid-Sonde bzw. einem Oligonukleotid-Target erfolgen.

Weitere im Rahmen der vorliegenden Erfindung geeignete Markierungsverfahren und Nachweissysteme sind beispielsweise in Lottspeich und Zorbas, Bioanalytik, Spektrum Akademischer Verlag, Heidelberg, Berlin, 1998, Kapitel 23.3 und 23.4 beschrieben.

Bei einer bevorzugten Ausführungsform des erfindungsgemäßen Verfahrens werden Nachweisverfahren eingesetzt, die im Ergebnis ein Addukt mit einem bestimmten Löslichkeitsprodukt, das eine Präzipitation zur Folge hat, liefern. Zur Markierung werden insbesondere Substrate bzw. Edukte eingesetzt, die in ein schwer lösliches, üblicherweise gefärbtes Produkt umgesetzt werden können. Beispielsweise können bei dieser Markierungsreaktion Enzyme verwendet werden, die den Umsatz eines Substrats in ein schwer lösliches Produkt katalysieren. Reaktionen, die geeignet sind, um zu einem Niederschlag an Array-Elementen zu führen, sowie Möglichkeiten für die Detektion des Niederschlags sind beispielsweise in der internationalen Patentanmeldung WO 00/72018 und in der internationalen Patentanmeldung WO 02/02810 beschrieben, auf deren Inhalt hiermit ausdrücklich Bezug genommen wird.

Bei einer besonders bevorzugten Ausführungsform des erfindungsgemäßen Verfahrens sind die gebundenen Targets mit einer Markierung versehen, die die Reaktion eines löslichen Substrats bzw. Edukts zu einem schwer löslichen Niederschlag auf dem Array-Element katalysiert, an dem eine Sonden/Target-Wechselwirkung stattgefunden hat bzw. die als Kristallisationskeim für die Umwandlung eines löslichen Substrats bzw. Edukts zu einem schwer löslichen Niederschlag auf dem Array-Element wirkt, an dem eine Sonden/Target-Wechselwirkung stattgefunden hat.

Der Einsatz des erfindungsgemäßen Verfahrens erlaubt auf diese Weise die simultane qualitative und quantitative Analyse einer Vielzahl von Sonden/Target-Wechselwirkungen, wobei einzelne Array-Elemente mit einer Größe von $\leq 1000 \ \mu m$, vorzugsweise von $\leq 100 \ \mu m$ und besonders bevorzugt von $\leq 50 \ \mu m$ realisiert werden können.

In der Immunzytochemie und bei immunologischen Mikrotiterplattenbasierten Tests ist der Einsatz von enzymatischen Markierungen bekannt (siehe E. Lidell und I. Weeks, Antibody Technology, BIOS Scientific Publishers Limited, 1995). So katalysieren beispielsweise Enzyme den Umsatz eines Substrats in ein schwerlösliches, in aller Regel gefärbtes Produkt.

Besonders bevorzugt ist die zur Bildung eines Niederschlags an den Array-Elementen führende Reaktion eine durch ein Enzym katalysierte Umsetzung eines löslichen Substrats bzw. Edukts in ein schwer lösliches Produkt. Bei einer speziellen Ausführungsform ist die zur Bildung eines Niederschlags an den Array-Elementen führende Reaktion eine durch eine Peroxidase katalysierte Oxidation von 3,3',5,5'-Tetramethylbenzidin.

Vorzugsweise wird als Peroxidase für die Oxidation von 3,3', 5,5'-Tetramethylbenzidin Meerrettichperoxidase eingesetzt. Dem Fachmann sind jedoch weitere Peroxidasen bekannt, die zur Oxidation von 3,3',5,5'-Tetramethylbenzidin eingesetzt werden können.

Es wird angenommen, dass 3,3',5,5'-Tetramethylbenzidin unter der katalytischen Einwirkung einer Peroxidase in einem ersten Schritt zu einem blau gefärbten Radikalkation oxidiert wird (siehe z.B. Gallati und Pracht, J. Clin. Chem. Clin. Biochem. 1985, 23, 8, 454). Dieses blau gefärbte Radikalkation wird mittels eines Polyanions wie z.B. Dextransulfat als Komplex ausgefällt. Die Fällungsreaktion durch Peroxidase-katalysierte Oxidation von 3,3',5,5'-Tetramethylbenzidin ist beispielsweise in EP 0 456 782 beschrieben.

Die nachfolgende Tabelle 1 gibt, ohne den Anspruch zu erheben, vollständig zu sein, einen Überblick über eine Reihe von in Frage kommenden Reaktionen, die geeignet sind, um zu einem Niederschlag an Array-Elementen zu führen, an denen eine Wechselwirkung zwischen Target und Sonde erfolgt ist:

Tabelle 1

| Katalysator bzw. Kristallisationskeim | Substrat bzw. Edukt |
|---|---|
| Meerrettichperoxidase | DAB (3,3'-Diaminobenzidin)<br>4-CN (4-Chlor-1-Napthol)<br>AEC (3-Amino-9-Ethylcarbazol)<br>HYR (p-Phenylendiamin-HCl und Pyrocatechol)<br>TMB (3,3',5,5'-Tetramethylbenzidin)<br>Naphtol/Pyronin |
| Alkalische Phosphatase | Bromchlorindoylphosphat (BCIP) und Nitrotetrazoliumblau (NBT) |
| Glucoseoxidase | t-NBT und m-PMS<br>(Nitrotetrazoliumblauchlond und Phenazinmethosulfat |
| Goldpartikel | Silbernitrat<br>Silbertartrat |

Die Markierung von biologischen Proben mit Enzymen bzw. Gold, insbesondere nanokristallinem Gold ist hinlänglich beschrieben (siehe u.a. F. Lottspeich und H. Zorbas, Bioanalytik, Spektrum Akademischer Verlag, Heidelberg, Berlin, 1998; E. Lidell und I. Weeks, Antibody Technology, BIOS Scientific Publishers Limited, 1995).

Weitere Möglichkeiten für den Nachweis der Sonde/Target-Wechselwirkungen über unlösliche Präzipitate bei dem erfindungsgemäßen Verfahren sind beschrieben in: Immunogold-Silver Staining, Principles, Methods and Applications, Hrsg.: M.A.Hayat, 1995, CRC Press; Eur J Immunogenet 1991 Feb-Apr;18(1-2):33-55 HLA-DR, DQ and DP typing using PCR amplification and immobilized probes. Erlich H, Bugawan T, Begovich AB, Scharf S, Griffith R, Saiki R, Higuchi R, Walsh PS. Department of Human Genetics, Cetus Corp., Emeryville, California 94608; Mol Cell Probes 1993 Jun;7(3):199-207 A combined modified reverse dot-blot and nested PCR assay for the specific non-radioactive detection of Listeria monocytogenes. Bsat N, Batt CA. Department of Food Science, Comell University, Ithaca, NY 14853. Immunogenetics 1990;32(4):231-41 Erratum in: Immunogenetics 1991;34(6):413 Rapid HLA-DPB typing using enzymatically amplified DNA and nonradioactive sequence-specific oligonucleotide probes. Bugawan TL, Begovich AB, Erlich HA. Department of Human Genetics, Cetus Corporation, Emeryville, CA 94608. Hum Immunol 1992 Dec;35(4):215-22 Generic HLA-DRB1 gene oligotyping by a nonradioactive reverse dot-blot methodology. Eliaou JF, Palmade F, Avinens O, Edouard E, Ballaguer P, Nicolas JC, Clot J. Laboratory of Immunology, Saint Eloi Hospital, CHU Montpellier, France. J Immunol Methods 1984 Nov 30;74(2):353-60 Sensitive visualization of antigen-antibody reactions in dot and blot immune overlay assays with immunogold and immunogold/silver staining. Moeremans M, Daneels G, Van Dijck A, Langanger G, De Mey J. Histochemistry 1987;86(6):609-15 Non-radioactive in situ hybridization. A comparison of several immunocytochemical detection systems using reflection-contrast and electron microscopy. Cremers AF, Jansen in de Wal N, Wiegant J, Dirks RW, Weisbeek P, van der Ploeg M, Landegent JE.

Im Rahmen der vorliegenden Erfindung sind bei den erfindungsgemäßen Verfahren u.a. folgende Varianten für den Nachweis der Sonde/Target-Wechselwirkungen über unlösliche Präzipitate denkbar.

Bei einer Ausführungsform der erfindungsgemäßen Verfahren werden die Targets mit einem Katalysator, vor einem Enzym versehen, das die Umwandlung eines löslichen Substrats bzw. Edukts in ein unlösliches Produkt katalysiert. Die Reaktion, die zur Bildung eines Niederschlags an den Array-Elementen führt, ist in diesem Fall die Umwandlung eines löslichen Substrats bzw. Edukts in ein unlösliches Produkt in Gegenwart eines mit den Targets gekoppelten Katalysators, vorzugsweise Enzyms. Das Enzym wird vorzugsweise ausgewählt aus der Gruppe, bestehend aus Meerrettichperoxidase, alkalischer Phosphatase und Glucoseoxidase. Das lösliche Substrat bzw. Edukt wird vorzugsweise ausgewählt aus der Gruppe, bestehend aus 3,3'-Diaminobenzidin, 4-Chlor-1-naphthol, 3-Amino-9-ethylcarbazol, p-Phenylendiamin-HCl/Pyrocatechol, 3,3',5,5'-Tetramethylbenzidin, Naphthol/Pyronin, Bromchlorindoylphosphat, Nitrotetraazoliumblau und Phenazinmethosulfat. Beispielsweise wird ein farbloser löslicher Wasserstoffdonor, z.B. 3,3'-Diaminobenzidin, in Anwesenheit von Wasserstoffperoxid in ein unlösliches farbiges Produkt umgewandelt. Das Enzym Meerrettichperoxidase überträgt Wasserstoffionen aus den Donoren auf Wasserstoffperoxid unter Bildung von Wasser.

Weitere Möglichkeiten des Nachweis von Sonde/Target-Wechselwirkungen über unlösliche Präzipitate sind insbesondere in WO 02/02810 beschrieben.

Bei einer bevorzugten Ausführungsform der vorliegenden Erfindung ist die Reaktion, die zur Bildung eines Niederschlags an den Array-Elementen führt, die Bildung eines metallischen Niederschlags ist. Besonders bevorzugt ist die zur Bildung eines Niederschlags an den Array-Elementen führende Reaktion die chemische Reduktion einer Silberverbindung, vorzugsweise Silbernitrat, Silberlactat, Silberacetat oder Silbertartrat, zu elementarem Silber. Als Reduktionsmittel wird vorzugsweise Formaldehyd und/oder Hydrochinon eingesetzt.

Eine weitere Möglichkeit des Nachweises molekularer Wechselwirkungen auf Arrays besteht somit im Einsatz von Metallmarkierungen. Hierbei werden beispielsweise kolloidales Gold oder definierte Goldcluster mit den Targets gekoppelt, ggf. über bestimmte Vermittlermoleküle wie Streptavidin. Die durch die Goldmarkierung entstehende Färbung wird vorzugsweise durch nachfolgende Reaktion mit unedleren Metallen wie z.B. Silber verstärkt, wobei die mit den Targets gekoppelte Goldmarkierung als Kristallisationskeim bzw. Katalysator beispielsweise für die Reduktion von Silberionen zu einem Silberniederschlag wirkt. Die mit Goldmarkierungen gekoppelten Targets werden im Folgenden auch als Goldkonjugate bezeichnet.

Bei dieser Ausführungsform des erfindungsgemäßen Verfahrens kann auch eine relative Quantifizierung der Sonden-/Target-Wechselwirkung erfolgen. Die relative Quantifizierung der Konzentration der gebundenen Targets auf einem Sonden-Array durch Nachweis eines Präzipitats bzw. eines Niederschlags erfolgt über die Konzentration der mit den Targets gekoppelten Markierungen, die die Reaktion eines löslichen Substrats zu einem schwerlöslichen Niederschlag auf dem Array-Element, an dem eine Sonden/Target-Wechselwirkung stattgefunden hat, katalysieren bzw. als Kristallisationskeim für derartige Reaktionen wirken. Beispielsweise beträgt im Fall von mit Nanogold markierten HPLC-gereinigten Oligonukleotidsonden das Verhältnis von gebundenem Target zu Goldpartikel 1:1. In anderen Ausführungsformen der vorliegenden Erfindung kann es ein Vielfaches oder auch einen Bruchteil davon betragen.

Die Detektion bei dieser Ausführungsform des erfindungsgemäßen Nachweisverfahrens erfolgt somit durch Messung der Transmissionsänderung, Reflexion oder Streuung, die durch den Niederschlag hervorgerufen wird, der auf den Array-Elementen, an denen eine Sonden/Target-Wechselwirkung stattgefunden hat, durch die katalytische Wirkung der mit den gebundenen Targets gekoppelten Markierung erzeugt wird.

Die Lichtabsorption wird im Fall der Kopplung von kolloidalem Gold oder definierten Goldcluster mit den Targets bereits durch die Gegenwart dieser metallischen Markierungen hervorgerufen. Zur Verstärkung der Lichtabsorption wird allerdings vorzugsweise katalytisch durch derartige Wechselwirkungshybride, d.h. die mit einer Markierung wie beispielsweise kolloidalem Gold oder definierten Goldclustern versehene Targets, ein nicht transparentes Präzipitat abgeschieden. Als besonders vorteilhaft hat sich im Fall von Goldkonjugaten die Verwendung von Silber als Präzipitat herausgestellt.

Bei einer weiteren bevorzugten Ausführungsform des erfindungsgemäßen Verfahrens wird somit in Schritt c) der zeitliche Verlauf der Niederschlagsbildung an den Array-Elementen in Form von Signalintensitäten detektiert. Auf diese Weise kann eine genaue Bestimmung der relativen quantitativen Menge an gebundenen Targets gewährleistet werden. Eine derartige Vorgehensweise ist ausführlich in der internationalen Patentanmeldung WO 02/02810 beschrieben, auf deren Inhalt hiermit ausdrücklich Bezug genommen wird.

Im Folgenden wird der qualitative und/oder quantitative Nachweis der Sonden-/Target-Wechselwirkung durch Messung der Durchlichtabsorption anhand eines Beispiel erläutert. Selbstverständlich ist die im Folgenden beschriebene Vorgehensweise nicht auf die vorstehend beschriebene Silber/Gold-Färbung beschränkt, sondern kann entsprechend auf alle Nachweisverfahren angewendet werden, bei denen die gebundenen Targets mit einer Markierung versehen sind, die die Reaktion eines löslichen Substrats bzw. Edukts zu einem schwer löslichen Niederschlag auf dem Array-Element katalysiert, an dem eine Sonden/Target-Wechselwirkung stattgefunden hat bzw. die als Kristallisationskeim für die Umwandlung eines löslichen Substrats zu einem schwer löslichen Niederschlag auf dem Array-Element wirkt, an dem eine Sonden/Target-Wechselwirkung stattgefunden hat.

Zunächst wird das Targetmolekül z.B. mittels PCR biotinyliert. Das PCR-Produkt wird gegen eine Substanzbibliothek, beispielsweise eine DNA-Bibliothek, hybridisiert. Anschließend werden der Reaktionskammer Streptavidin-funktionalisierte Goldkügelchen zugegeben, die mit den biotinylierten Hybriden, beispielsweise DNA-Hybriden reagieren.

An den nun spezifisch an der Oberfläche gebundenen Goldkügelchen kann ein Silberniederschlag erzeugt werden, indem beispielsweise Silbernitrat mit Hydrochinon unter der katalytischen Wirkung von Gold reduziert wird (siehe u.a. WO 00/72018, DE 100 33 334.6, M.A. Hayat, Immunogold-Silver Staining, CRC Press, New York, 1995).

Die Lichtabsorption durch das Silberpräzipitat hängt von der Menge des abgeschiedenen Silbers ab. Folglich kann die Lichtintensität I, die das Präzipitat durchstrahlt, nach einem dem Lambert-Beerschen Gesetz ähnlichen Funktion berechnet werden:

$$I = I_0 * \exp(-a * b) \qquad (I)$$

Dabei ist 1 die Lichtintensität nach der Absorption, $I_0$ die Lichtintensität vor der Absorption, a ein Absorptionskoeffizient multipliziert mit der Abschattung pro Flächeneinheit b durch das Silberpräzipitat. Als Messgrößen stehen die Intensität I und die Zeit t zur Verfügung. Diese Messgrößen erhält man, indem das Trägerelement mit der Substanzbibliothek beleuchtet wird und das durchstrahlte Licht mit einer Kamera aufgenommen wird. Diese Aufnahme wird in regelmäßigen Abständen wiederholt, während die Silberabscheidung durchgeführt wird. Die Helligkeitswerte der einzelnen Bibliotheksregionen (Spots) werden für jede Aufnahme ausgewertet, wodurch die Intensität I eines jeden Spots erhalten wird. Diese Helligkeitswerte können mittels Standardsoftware, wie zum Beispiel IconoClust® (Clondiag, Jena, Deutschland) automatisch berechnet werden. Durch Auftragen von $I/I_0$ gegen die Zeit t erhält man Messkurven. Das Lambert-Beersche Gesetz entsprechend der Gleichung (I) kann mit den derart erhaltenen Silberabscheidungszeitreihen auf folgende Weise in Zusammenhang gebracht werden.

Die Fläche $F$, die ein Silberkügelchen abschattet, beträgt:

$$F = \pi * r^2 \qquad (II)$$

Da die Abscheidungsgeschwindigkeit pro Flächenelement für einen Spot als konstant angenommen werden kann, wächst der Radius $r$ der Silberkügelchen ebenfalls mit konstanter Geschwindigkeit:

$$r = dr/dt * t \qquad (III)$$

Die Abschattung pro Flächeneinheit b durch das Silberpräzipitat ist proportional zur der Zahl der Silberkügelchen pro Flächeneinheit N, der Abschattungsfläche pro Silberkügelchen F und einer Konstante k.

$$b = N * F * k \qquad (III)$$

Damit berechnet sich die Funktion für die Intensität I in Abhängigkeit von der Zeit t zu

$$I = I_0 * \exp(-a' * t^2), \qquad (IV)$$

wobei a' eine unbekannte zusammengesetzte Silberabsorptionskonstante ist.

Für jede Silberabscheidungsreaktion muss eine eigene Abscheidungsrate angenommen werden, so auch für die unspezifische Reaktion an der Oberfläche:

$$I = I_0 * \exp(-a'_H * t^2), \qquad (V)$$

wobei $a'_H$ die unspezifische Silberabsorptionskonstante ist.

An jedem Spot i, findet also sowohl eine spezifische Abscheidungsreaktion als auch eine unspezifische Abscheidungsreaktion statt:

$$I_i = I_{0i} * (\exp(-a'_i * t^2) + \exp(-a'_H * t^2)) + O_i, \qquad (VI)$$

wobei O ein geräteabhängiger Offsetwert ist.

Die Zahl der Goldkügelchen, die pro Flächeneinheit abgeschieden werden, hängt einerseits von der Menge an mit Goldkügelchen markierten Targets und andererseits von der Bindungsstärke der Targets, beispielsweise der Target-DNA, mit den Sonden, beispielsweise der Spot-DNA, ab. Liegt kein Target in der Probe vor, das mit einer Sonde auf dem entsprechenden Array-Element wechselwirkt, so kommt es auch nicht zur Abscheidung von Goldkügelchen auf der Oberfläche dieses Array-Elements bzw. Spots. Ist die Bindung zwischen Sonde und Target schwach, so werden sich nur sehr wenige Goldkügelchen an der Oberfläche dieses Array-Elements absetzen.

Da $b$ und damit $a'$ direkt proportional zur Goldkügelchen- und damit Silberkügelchenanzahl $N$ ist, stellt $a'$ ein Maß für die Konzentration der Target-DNA und der Bindungsstärke der Target-DNA am Array-Element bzw. Spot $i$ da.

Aus den erhaltenen Messkurven lässt sich durch nicht-lineare Regression mit Hilfe der Gleichung (VI) die Silberabsorptionskonstante $a'$ berechnen. Die Berechnung der Konstanten $a'$ kann als signifikante Messgröße für die Bindungsstärke und die Konzentration der Target-DNA an einem Spot genutzt werden. Des Weiteren kann man aus der Konstanten $a'$ die Zeitkonstante $\tau$ der Abscheidungsreaktion bestimmen:

$$\tau_t = (1 / a'_i)^{0.5} \qquad\qquad (VII)$$

Durch die Regression können als weitere Parameter $I_0$ und O ermittelt werden. Mit der Lichtintensität $I_0$ können Beleuchtungsinhomogenitäten der DNA-Bibliothek korrigiert werden. Alternativ kann mittels des Abbildes der gesamten DNA-Bibliothek zum Zeitpunkt t = 0 eine Flatfieldkorrektur aller weiteren Bilder, die für die Zeitreihe zu einem späteren Zeitpunkt aufgenommen wurden, vorgenommen werden. Anhand des Parameters O lässt sich die Validität einer Messung abschätzen.

Da die korrekte Anpassung einer Exponentialfunktion an die Messwerte einen nicht-linearen Regressionsalgorithmus, beispielsweise eine nicht-lineare Regression nach Marquardt (H.R. Schwarz, Numerische Mathematik, Teubner Verlag, Stuttgart, Deutschland, 1998) erfordert, kann es vorteilhaft sein, auf eine weniger genaue, aber dafür robustere und daher lineare Methode zur Bestimmung der Messwerte aus den Zeitreihen zuzugreifen. Dazu werden die Zeitwerte quadriert und die Intensitätsmesswerte logarithmiert. Die so erhaltenen Werte werden dann an eine lineare Gleichung 1. Grades angepasst. Die dabei erhaltenen Regressionsparameter können als Messwert und zur Testung der Validität herangezogen werden. Beleuchtungsinhomogenitäten lassen sich bei Verwendung einer linearen Methode über $I_0$ nicht mehr korrigieren, es verbleibt aber die Möglichkeit der Flatfieldkorrektur.

Eine weitere Variante der Auswertung besteht darin, nach einer festgelegten Zeit die Grauwerte der einzelnen Spots direkt als Messwerte zu verwenden. Dieses Verfahren hat allerdings die Nachteile, dass nicht im Voraus beurteilt werden kann, welcher Zeitpunkt zur Auswertung optimal ist und dass die Messwerte eine geringere statistische Sicherheit aufweisen. Darüber hinaus lässt sich eine etwaige Beleuchtungsinhomogenität nur über eine Flatfieldkorrektur durchführen.

Ein weiterer Aspekt der vorliegenden Erfindung betrifft ein Verfahren zur Amplifikation und zum qualitativen und quantitativen Nachweis von Nukleinsäuren in einer Probe, umfassend die folgenden Schritte:

a) Einbringen der Probe in eine Reaktionskammer, die zwischen einem Kammerträger und einem Mikroarray gebildet ist, wobei der Mikroarray ein Substrat mit darauf auf Array-Elementen immobilisierten Nukleinsäuresonden umfasst;

b) Amplifizieren der nachzuweisenden Nukleinsäuren in der Reaktionskammer mittels einer zyklischen Amplifikationsreaktion;

c) Detektieren einer Hybridisierung zwischen den nachzuweisenden Nukleinsäuren und den auf dem Substrat immobilisierten Nukleinsäuresonden, vorzugsweise ohne dass Moleküle aus der Reaktionskammer entfernt werden, die nicht mit den auf dem Substrat immobilisierten Nukleinsäuren hybridisiert sind.

Ein wesentliches Merkmal einer bevorzugten Ausführungsform des erfindungsgemäßen Verfahrens bei diesem Aspekt der vorliegenden Erfindung ist, dass die Detektion einer Hybridisierung zwischen den nachzuweisenden Nukleinsäuren und den auf dem Substrat des Mikroarrays immobilisierten Nukleinsäuresonden erfolgt, ohne dass solche Moleküle aus der Reaktionskammer entfernt werden, die nicht mit den auf dem Substrat immobilisierten Nukleinsäuren hybridisiert sind. Derartige Moleküle können beispielsweise mit einem detektierbaren Marker versehene Primer sein, die nicht während der Amplifikationsreaktion umgesetzt wurden, oder mit einem detektierbaren Marker versehene Nukleotide bzw. Nukleinsäuremoleküle, zu denen keine komplementäre Nukleinsäuresonde auf dem Array vorliegt, die spezifisch mit dieser Nukleinsäure hybridisiert. D.h., das Detektieren der Wechselwirkung bzw. Hybridisierung zwischen Nukleinsäuretargets und Nukleinsäuresonden kann erfolgen, ohne dass im Anschluss an die Hybridisierung Spül- bzw.

Waschschritte erforderlich sind.

Obwohl bei dem erfindungsgemäßen Verfahren bei diesem Aspekt der vorliegenden Erfindung vor der Detektion vorzugsweise kein Waschschritt zur Entfernung von Molekülen durchgeführt wird, die nicht mit den auf dem Substrat immobilisierten Nukleinsäuren hybridisiert sind, hat sich überraschenderweise gezeigt, dass trotz des durch diese nicht entfernten Moleküle verursachten Hintergrunds der Lösung eine genaue und empfindliche Detektion der spezifischen Hybridisierung zwischen Targetnukleinsäuren und auf dem Substrat immobilisierten Nukleinsäuresonden gewährleistet ist.

Das erfindungsgemäße Verfahren ermöglicht somit bei diesem Aspekt der vorliegenden Erfindung die Amplifikation und den qualitativen und quantitativen Nachweis von Nukleinsäuren in einer Reaktionskammer, wobei der Nachweis von molekularen Wechselwirkungen bzw. Hybridisierungen unmittelbar nach Abschluss einer zyklischen Amplifikationsreaktion erfolgen kann, vorzugsweise ohne dass ein Wechsel der Proben- bzw. Reaktionsflüssigkeiten erforderlich ist. Ferner gewährleistet das erfindungsgemäße Verfahren auch eine zyklische Detektion von Hybridisierungsereignissen bei der Amplifikation, d.h. einen Nachweis der Hybridisierung auch während der zyklischen Amplifikationsreaktion. Schließlich können mit Hilfe des erfindungsgemäßen Verfahrens die Amplifikationsprodukte während der Amplifikationsreaktion sowie nach Ablauf der Amplifikationsreaktion quantifiziert werden.

Bei einer bevorzugten Ausführungsform des erfindungsgemäßen Verfahrens erfolgt die Detektion somit während der zyklischen Amplifikationsreaktion und/oder nach Abschluss der zyklischen Amplifikationsreaktion. Vorzugsweise erfolgt die Detektion während der Amplifikationsreaktion bei jedem Amplifikationszyklus. Alternativ kann die Detektion aber auch bei jedem zweiten Zyklus oder jedem dritten Zyklus oder in beliebigen anderen Intervallen bestimmt werden.

Vorzugsweise ist die zyklische Amplifikationsreaktion eine PCR. Bei der PCR werden für jeden PCR-Zyklus herkömmlicherweise drei Temperaturen durchfahren. Vorzugsweise lösen sich die hybridisierten Nukleinsäuren bei der höchsten Temperatur, d.h. der Denaturierungstemperatur von dem Mikroarray ab. Ein bevorzugter Wert für die Denaturierungstemperatur beträgt 95°C. Somit kann bei dieser Denaturierungstemperatur ein Messwert bestimmt werden, der als Nullwert bzw. Bezugswert für die bei dem jeweiligen PCR-Zyklus detektierten Nukleinsäuren dienen.

Bei der im PCR-Zyklus nachfolgenden Temperatur, einer Annealing-Temperatur von beispielsweise etwa 60°C, wird eine Hybridisierung zwischen nachzuweisenden Nukleinsäuren und den auf dem Substrat des Mikroarrays immobilisierten Nukleinsäuren ermöglicht. Bei einer Ausführungsform des erfindungsgemäßen Verfahrens erfolgt deswegen der Nachweis bzw. die Detektion von bei einem PCR-Zyklus vorliegenden Oligonukleotiden bei der Annealing-Temperatur.

Um die Empfindlichkeit des erfindungsgemäßen Verfahrens zu erhöhen, kann es ferner vorteilhaft sein, die Temperatur unter die Annealing-Temperatur zu senken, so dass die Detektion bevorzugt bei einer Temperatur unterhalb der Annealing-Temperatur eines Amplifikationszyklus erfolgt. Beispielsweise kann die Detektion bei einer Temperatur im Bereich von 25°C bis 50°C und vorzugsweise im Bereich von 30°C bis 40°C erfolgen.

Bei einer weiteren alternativen Ausführungsform des erfindungsgemäßen Verfahrens wird die Hybridisierung zwischen nachzuweisenden Nukleinsäuren und den auf dem Substrat des Mikroarrays immobilisierten Nukleinsäuren zunächst bei einer niedrigen Temperatur durchgeführt, um anschließend die Hybridisierungstemperatur zu erhöhen. Eine derartige Ausführungsform bietet den Vorteil, dass die Hybridisierungszeit gegenüber Hybridisierungen bei Temperaturen von unter 50°C vermindert wird, ohne dabei an Spezifität in den Wechselwirkungen einzubüßen.

Wird von dem bei der bzw. unterhalb der Annealing-Temperatur bestimmten Messwert der bei der Denaturierungstemperatur bestimmte Nullwert bzw. Bezugswert abgezogen, so erhält man ein von Störeinflüssen freies Messergebnis, in dem Schwankungen und Drift eliminiert sind.

Der Nachweis einer Wechselwirkung zwischen der Sonde und dem Targetmolekül erfolgt im Rahmen der vorliegenden Erfindung üblicherweise folgendermaßen: Nach der Fixierung der Sonde bzw. der Sonden in vorgegebener Art und Weise an einer bestimmten Matrix in Form eines Mikroarrays werden die Targets in einer Lösung mit den Sonden in Kontakt gebracht und unter definierten Bedingungen inkubiert. Infolge der Inkubation findet zwischen Sonde und Target eine spezifische Wechselwirkung bzw. Hybridisierung statt. Die dabei auftretende Bindung ist deutlich stabiler als die Bindung von Targetmolekülen an Sonden, die für das Targetmolekül nicht spezifisch sind.

Der Nachweis bzw. die Detektion der spezifischen Wechselwirkung zwischen einem Target und seiner Sonde kann dann durch eine Vielzahl von Methoden erfolgen, die in der Regel von der Art des Markers abhängen, der vor, während oder nach der Wechselwirkung des Targetmoleküls mit dem Mikroarray in Targetmoleküle eingebracht worden ist. Typischerweise handelt es sich bei solchen Markern um fluoreszierende Gruppen, so dass spezifische Target-Sonden-Wechselwirkungen mit hoher Ortsauflösung und im Vergleich zu anderen herkömmlichen Nachweismethoden, vor allem massensensitiven Methoden, mit geringem Aufwand fluoreszenzoptisch ausgelesen werden können (siehe z.B. A. Marshall, J. Hodgson, DNA chips: An array of possibilities, Nature Biotechnology 1998, 16, 27-31; G. Ramsay, DNA Chips: State of the art, Nature Biotechnology 1998, 16, 40-44).

In Abhängigkeit von der auf dem Mikroarray immobilisierten Substanzbibliothek und der chemischen Natur der Targetmoleküle können anhand dieses Testprinzips Wechselwirkungen zwischen Nukleinsäuren und Nukleinsäuren, zwischen Proteinen und Proteinen sowie zwischen Nukleinsäuren und Proteinen untersucht werden (zur Übersicht siehe F. Lottspeich, H. Zorbas, 1998, Bioanalytik, Spektrum Akademischer Verlag, Heidelberg/Berlin).

Als Substanzbibliotheken, die auf Mikroarrays oder Chips immobilisiert werden können, kommen dabei Antikörper-Bibliotheken, Rezeptor-Bibliotheken, Peptid-Bibliotheken und Nukleinsäure-Bibliotheken in Frage.

Die Nukleinsäure-Bibliotheken nehmen die mit Abstand wichtigste Rolle ein. Es handelt sich dabei um Mikroarrays, auf denen Desoxyribonukleinsäure-(DNA) Moleküle oder Ribonukleinsäure- (RNA) Moleküle immobilisiert sind.

Vorzugsweise sind die nachzuweisenden Nukleinsäuren mit einem detektierbaren Marker versehen. Besonders bevorzugt ist der detektierbare Marker ein Fluoreszenzmarker. Das Signal der in Lösung befindlichen Moleküle, die nicht mit den Nukleinsäuresonden des Arrays hybridisiert sind, also der Hintergrund, kann im Vergleich zum Signal der mit den Nukleinsäuresonden hybridisierten Nukleinsäuren insbesondere dadurch gering gehalten werden, dass bei dem erfindungsgemäßen Verfahren besonders dünne Reaktionskammern, insbesondere in Form eines Kapillarspaltes, verwendet werden. Die durch die spezifische Bindung von Sonde und Target bedingte Anreicherung der Target-Moleküle auf der Array-Oberfläche ermöglicht es, bei entsprechend dünner Ausgestaltung der Reaktionskammer, vorzugsweise als Kapillarspalt, die Signale auf dem Mikroarray beispielsweise auch mit einem das gesamte Volumen der Reaktionskammer abbildenden fluoreszenzoptischen System darzustellen.

Bei einer bevorzugten Ausführungsform des erfindungsgemäßen Verfahrens wird somit die Probe in eine Reaktionskammer eingebracht, als Kapillarspalt zwischen dem Kammerträger und dem Mikroarray ausgestaltet ist. Der Kapillarspalt weist vorzugsweise eine Dicke im Bereich von 10 $\mu$m bis 200 $\mu$m, besonders bevorzugt im Bereich von 25 $\mu$m bis 150 $\mu$m und am meisten bevorzugt im Bereich von 50 $\mu$m bis 100 $\mu$m auf. Bei speziellen Ausgestaltungen weist der Kapillarspalt eine Dicke von 60 $\mu$m, 70 $\mu$m, 80 $\mu$m oder 90 $\mu$m auf.

Das erfindungsgemäße Verfahren wird bei einer alternativen Ausführungsform in einem Reaktionsraum bzw. einer Reaktionskammer mit einer Dicke beispielsweise von 0,7 mm bis 2,5 mm, vorzugsweise von 1,0 mm bis 2,0 mm und besonders bevorzugt von 0,8 mm bis 1,8 mm durchgeführt. Bei einer speziellen Ausgestaltung beträgt die Dicke des Reaktionsraums 1,1 mm.

Überraschenderweise hat sich gezeigt, dass bei dem erfindungsgemäßen Verfahren ein Signal-zu-Rausch-Verhältnis erzielt wird, welches trotz des durch die gegebenenfalls nicht entfernten in Lösung befindlichen markierten Moleküle verursachten Hintergrunds eine genaue und empfindliche Detektion zulässt. Ohne daran gebunden sein zu wollen, wird von folgender Hypothese ausgegangen. Mit zunehmender Konzentration der nachzuweisenden Nukleinsäuren in Lösung wird die Oberfläche des Chips bzw. Mikroarrays abgesättigt. Dies schlägt sich entsprechend in der Sättigung des zu detektierenden Signals nieder. Aus der Abhängigkeit der Konzentration der in Lösung befindlichen Target-Molekülen von der Dicke der Reaktionskammer ergibt sich, dass insbesondere bei Ausgestaltung der Reaktionskammer als Kapillarspalt, beispielsweise bei Kammerdicken von vorzugsweise 200 $\mu$m oder weniger, eine sinnvolle Detektion der Amplifikations-produkte gegen den Hintergrund durchgeführt werden kann. Durch Einsatz derartig dünner Reaktionskammern wird der Einsatz einer einfachen Detektionstechnik ermöglicht, ohne dass Wasch- bzw. Spülschritte im Anschluss an die Hybridisierung zwischen Nukleinsäuresonden und Targetnukleinsäuren erforderlich sind. Ferner wird auch die Durchführung von dynamischen Experimenten, wie sie beispielsweise bei Untersuchungen des Schmelzverhaltens von Sonde-Targetkomplexen oder bei der Durchführung einer Echtzeit-Detektion erforderlich sind, ermöglicht.

Aufgrund ihres einfachen Aufbaus sind für das Detektieren einer Hybridisierung, insbesondere bei Verwendung von Reaktionskammern, die als Kapillarspalt ausgestaltet sind, epifluoreszenztechnische Aufbauten mit bildgebender Detektionstechnik, z.B. auf Basis von CCD, CMOS, JFIT oder scannender PMT, sowie wellenlängenselektierter flächiger oder punktförmig scannender Beleuchtung, z.B. mittels Weißlichtquellen, LED, organischen LED (OLED) und dgl., besonders geeignet. Daneben sind selbstverständlich auch fokiselektive Detektionsmethoden bei dem erfindungsgemäßen Verfahren einsetzbar, wie z.B. konfokale Techniken oder auf der Anwendung einer tiefenselektiven Beleuchtung aufgrund der z.B. auf totaler Reflexion beruhenden evaneszenten Auskopplung von Anregungslicht (TIRF) im Probensubstrat oder der Verwendung von Wellenleitern beruhende Methoden. Derartige fokiselektive Verfahren sind insbesondere dann zu bevorzugen, wenn eine weitere Ausgrenzung der durch die in der Flüssigkeit vorhandenen, d.h. nicht hybridsierten Fluoreszenzmoleküle verursachten Hintergrundsignale erforderlich ist, um die Sensitivität zu erhöhen.

Bei der Verwendung von sehr dünnen Reaktionsräumen bzw. Reaktionskammern, insbesondere in der Form eines Kapillarspalts, sind somit alle herkömmlichen Vorrichtungen bzw. Verfahren zur bildgebenden Fluoreszenzdetektion, die für die Messungen von Fluoreszenzsignalen auf planaren Oberflächen beschrieben sind, einsetzbar.

Beispiele hierfür sind CCD-basierte Detektoren, die zur Diskriminierung von optischen Effekten wie Streuung und Reflexionen die Anregung der Fluorophore im Dunkelfeld durch Auflicht oder Durchlicht realisieren (siehe z.B. C. E. Hooper et al., Quantitative Photone Imaging in the Life Sciences Using Intensified CCD Cameras, Journal of Bioluminescence and Chemoluminescence (1990), 337-344). Weitere Alternativen für Fluoreszenzdetektionssysteme, die bei dem erfindungsgemäßen Verfahren eingesetzt werden können, sind Weißlichtaufbauten wie sie z.B. in WO 00/12759, WO 00/25113 und WO 96/27025 beschrieben sind; konfokale Systeme, wie sie z.B. in US 5,324,633, US 6,027,880, US 5,585,639 und WO 00/12759 beschrieben sind; auf Nipkow-Scheiben basierende konfokale Anregungssysteme bei bildgebender konfokaler Abbildung, wie z.B. in US 5,760,950 beschrieben sind; auf strukturierter Anregungsverteilung basierende Systeme, wie sie z.B. in WO 98/57151 beschrieben sind; Fluoreszenzdetektionssysteme in hoher Integration unter Verwendung von Mikrooptiken, wie sie z.B. in WO 99/27140 beschrieben sind; und Laserscanningsysteme, wie sie z.B. in WO 00/12759 beschrieben sind. Ein allgemeiner Ablauf von Fluoreszenzdetektionsverfahren unter Verwendung derartiger herkömmlicher Fluoreszenzdetektionssysteme ist z.B. in US 5,324,633 beschrieben.

Die Detektion der Hybridisierung zwischen Targetnukleinsäuren und den auf dem Substrat immobilisierten Nukleinsäuren während der zyklischen Amplifikationsreaktion ermöglicht eine kontinuierliche Detektion der Signalzunahme auf dem Sonden-Array bzw. Mikroarray. Bei einer weiteren Ausführungsform des erfindungsgemäßen Verfahrens wird die Ausgangskonzentration den nachzuweisenden Nukleinsäuren in der Probe durch Korrelation mit der Anzahl an Amplifikationszyklen bestimmt, die erforderlich ist, damit die Hybridisierung zwischen den nachzuweisenden Nukleinsäuren und den auf dem Substrat immobilisierten Nukleinsäuresonden detektierbar ist.

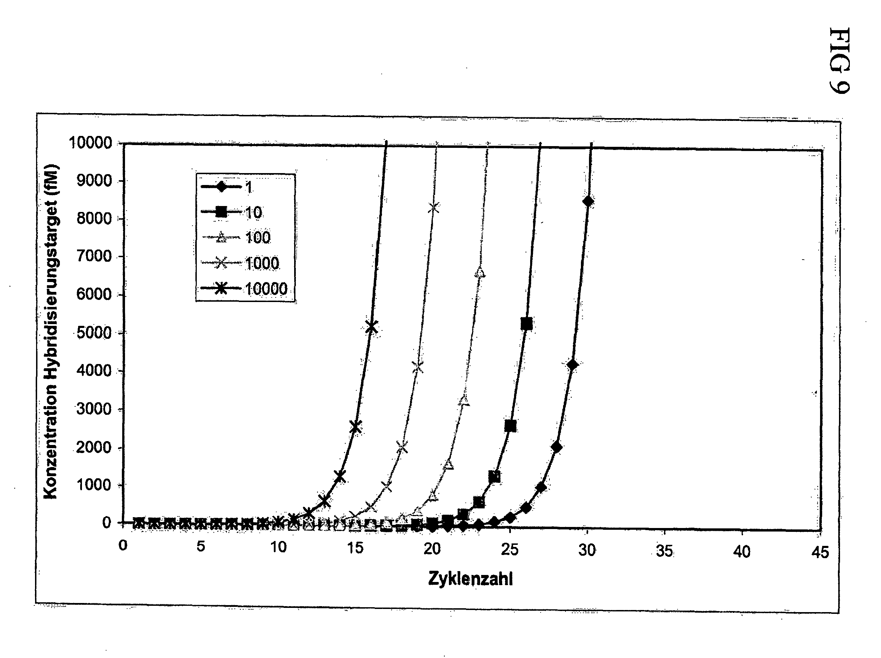

In Abbildung 9 ist der Verlauf der exponentiellen Amplifikation eines Targets bei unterschiedlicher Ausgangskonzentration von Target-Molekülen in der Probe dargestellt. Eine typische Nachweisgrenze bei der Durchführung des erfindungsgemäßen Verfahrens unter Verwendung herkömmlicher Fluoreszenzdetektion liegt bei einer Target-Konzentration im Bereich von 1 pM bis 10 pM. In Abbildung 9 ist gezeigt, dass dieser Bereich in Abhängigkeit von der Ausgangskonzentration an nachzuweisenden Nukleinsäuren in der Probe nach einer unterschiedlichen Zahl von Amplifikationszyklen erreicht wird. Folglich kann aus der Zahl an Amplifikationszyklen, die erforderlich ist, um diese Nachweisgrenze zu erreichen, auf die Ausgangskonzentration der nachweisenden Nukleinsäuren in der Probe geschossen werden.

Bei einer besonders bevorzugten Ausführungsform des erfindungsgemäßen Verfahrens enthält die Probe eine Nukleinsäure in bekannter Konzentration, die mit einer Nukleinsäuresonde des Mikroarrays wechselwirkt bzw. hybridisiert. Eine derartige Nukleinsäure in bekannter Konzentration wird im Rahmen der vorliegenden Erfindung auch als Kontroll-Nukleinsäure oder Kontrolle bezeichnet.

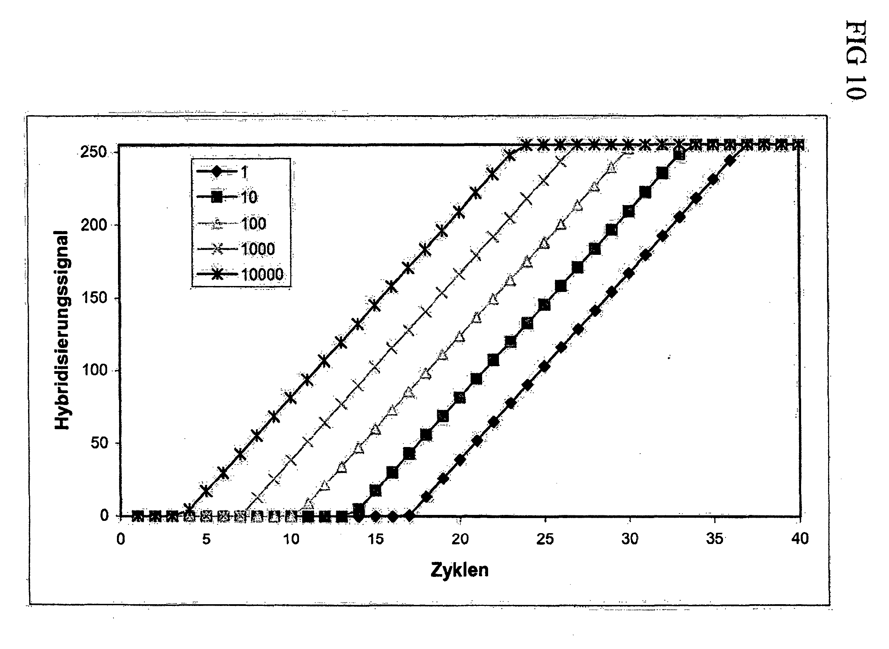

In Abbildung 10 ist die Entwicklung eines Hybridisierungssignals in Abhängigkeit von der Anzahl an Amplifikationszyklen sowie von der Ausgangskonzentration der Target-Nukleinsäuren in Lösung in Folge der exponentiellen Amplifikation gezeigt. Auch aus Abbildung 10 geht hervor, dass bereits durch bloßes Feststellen des Zeitpunkts des Erreichens der Nachweisgrenze eine Quantifizierung der Targetmenge möglich ist, insbesondere dann, wenn eine entsprechende Kontroll-Nukleinsäure in bekannter Konzentration in der Probe mitgeführt wird und eine entsprechende Kalibrierung durchgeführt wird.

Die zu untersuchenden Targets können in jeder Art von Probe, vorzugsweise in einer biologischen Probe vorliegen.

Vorzugsweise werden die Targets vor ihrer Detektion und Quantifizierung durch das erfindungsgemäße Verfahren isoliert, gereinigt, kopiert und/oder amplifiziert.

Die Amplifikation erfolgt üblicherweise durch herkömmliche PCR-Methoden oder durch ein wie vorstehend beschriebenes Verfahren zur parallelen Durchführung von Amplifikation der zu analysierenden Zielmoleküle durch PCR und Nachweis durch Hybridisierung der Zielmoleküle mit dem Substanzbibliothekenträger.

Bei einer weiteren Ausführungsform des erfindungsgemäßen Verfahrens wird die Amplifikation als Multiplex-PCR in einem zweistufigen Prozess ausgeführt (siehe auch WO 97/45559). In einer ersten Stufe wird eine Multiplex-PCR durchgeführt, indem Fusionsprimer eingesetzt werden, deren 3'-Enden genspezifisch sind und deren 5'-Enden eine universelle Region darstellen. Letztere ist bei allen in der Multiplex-Reaktion eingesetzten forward- und reverse-Primem gleich. In dieser ersten Stufe ist die Primermenge limitierend. Dadurch können alle Multiplex-Produkte bis zu einem einheitlichen molaren Niveau amplifiziert werden, vorausgesetzt, dass die Zyklenzahl hinreichend ist, um für alle Produkte Primerlimitation zu erreichen. In einer zweiten Stufe sind universelle Primer zugegen, die identisch mit den 5'-Regionen der Fusionsprimer sind. Es erfolgt Amplifikation bis zur gewünschten DNA-Menge.

Der Nachweis erfolgt bei dem erfindungsgemäßen Verfahren vorzugsweise dadurch, dass die gebundenen Targets mit mindestens einer Markierung versehen sind, die in Schritt c) detektiert wird.

Wie bereits vorstehend erwähnt, ist die Markierung, die an die Targets oder Sonden gekoppelt ist, vorzugsweise eine detektierbare Einheit oder eine über eine Ankergruppe an die Targets oder Sonden gekoppelte detektierbare Einheit. Hinsichtlich der Möglichkeiten der Detektion bzw. der Markierung ist das erfindungsgemäße Verfahren äußerst flexibel. So ist das erfindungsgemäße Verfahren mit einer Vielzahl physikalischer, chemischer oder biochemischer Detektionsverfahren kompatibel. Voraussetzung ist lediglich, dass die zu detektierende Einheit bzw. Struktur direkt an eine Sonde oder ein Target, beispielsweise ein Oligonukleotid gekoppelt bzw. über eine mit dem Oligonukleotid koppelbare Ankergruppe verknüpft werden kann.

Die Detektion der Markierung kann auf Fluoreszenz, Magnetismus, Ladung, Masse, Affinität, enzymatischer Aktivität, Reaktivität, einer Goldmarkierung u.dgl. beruhen. So kann die Markierung beispielsweise auf der Verwendung von Fluorophor-markierten Strukturen bzw. Bausteinen basieren. In Verbindung mit der Fluoreszenz-Detektion kann die Markierung ein beliebiger an Targets oder Sonden während oder nach der Amplifikation bzw. Synthese koppelbarer Farbstoff sein. Beispiele hierfür sind Cy-Farbstoffe (Amersham Pharmacia Biotech, Uppsala, Schweden), Alexa-Farbstoffe, Texas-Rot, Fluorescein, Rhodamin (Molecular Probes, Eugene, Oregon, USA), Lanthanide wie Samarium, Ytterbium und Europium (EG&G, Wallac, Freiburg, Deutschland).

Neben Fluoreszenz-Markern können im Rahmen der vorliegenden Erfindung als Markierung bzw. als Detektiereinheit, die mit den Targets bzw. Sonden gekoppelt ist, auch Lumineszenz-Marker, Metall-Marker, Enzym-Marker, radioaktive Marker und/oder polymere Marker eingesetzt werden.

Ebenso kann eine Nukleinsäure als Markierung (Tag) genutzt werden, die durch Hybridisierung mit einem markierten Reporter detektiert werden kann. Dies wird auch als Sandwich-Hybridisierung bezeichnet. Einsatz zum Nachweis des Tags finden diverse molekularbiologische Nachweisreaktionen wie Primer-Extension, Ligation und RCA.

Bei einer alternativen Ausführungsform des erfindungsgemäßen Verfahrens ist die detektierbare Einheit über eine Ankergruppe mit den Targets oder Sonden gekoppelt. Bevorzugt verwendete Ankergruppen sind Biotin, Digoxygenin u. dgl. Die Ankergruppen werden in einer anschließenden Reaktion mit spezifisch bindenden Komponenten, beispielsweise Streptavidin-Konjugaten oder Antikörper-Konjugaten umgesetzt, die selbst detektierbar sind oder eine detektierbare Reaktion auslösen. Bei Einsatz von Ankergruppen kann die Umsetzung der Ankergruppen in detektierbare Einheiten vor, während oder nach Zugabe der Probe umfassend die Targets bzw. ggf. vor, während oder nach der Spaltung der selektiv spaltbaren Bindung in den Sonden erfolgen.

Die Markierung kann erfindungsgemäß auch durch Wechselwirkung eines markierten Moleküls mit den Sonden-Molekülen erfolgen. Beispielsweise kann die Markierung durch Hybridisierung eines wie vorstehend beschrieben markierten Oligonukleotids mit einer Oligonukleotid-Sonde bzw. einem Oligonukleotid-Target erfolgen.

Weitere im Rahmen der vorliegenden Erfindung geeignete Markierungsverfahren und Nachweissysteme sind beispielsweise in Lottspeich und Zorbas, Bioanalytik, Spektrum Akademischer Verlag, Heidelberg, Berlin, 1998, Kapitel 23.3 und 23.4 beschrieben.

Bei einer bevorzugten Ausführungsform des erfindungsgemäßen Verfahrens werden Nachweisverfahren eingesetzt, die im Ergebnis ein Addukt mit einem bestimmten Löslichkeitsprodukt, das eine Präzipitation zur Folge hat, liefern. Zur Markierung werden insbesondere Substrate bzw. Edukte eingesetzt, die in ein schwer lösliches, üblicherweise gefärbtes Produkt umgesetzt werden können. Beispielsweise können bei dieser Markierungsreaktion Enzyme verwendet werden, die den Umsatz eines Substrats bzw. Edukts in ein schwer lösliches Produkt katalysieren. Reaktionen, die geeignet sind, um zu einem Niederschlag an Array-Elementen zu führen, sowie Möglichkeiten für die Detektion des Niederschlags sind beispielsweise in der internationalen Patentanmeldung WO 00/72018 und in der internationalen Patentanmeldung WO 02/02810 beschrieben, auf deren diesbezüglichen Inhalt hiermit ausdrücklich Bezug genommen wird.

Bei einer besonders bevorzugten Ausführungsform des erfindungsgemäßen Verfahrens sind die gebundenen Targets mit einer Markierung versehen, die die Reaktion eines löslichen Substrats bzw. Edukts zu einem schwer löslichen Niederschlag auf dem Array-Element katalysiert, an dem eine Sonden/Target-Wechselwirkung stattgefunden hat bzw. die als Kristallisationskeim für die Umwandlung eines löslichen Substrats zu einem schwer löslichen Niederschlag auf dem Array-Element wirkt, an dem eine Sonden/Target-Wechselwirkung stattgefunden hat.

Der Einsatz des erfindungsgemäßen Verfahrens erlaubt auf diese Weise die simultane qualitative und quantitative Analyse einer Vielzahl von Sonden/Target-Wechselwirkungen, wobei einzelne Array-Elemente mit einer Größe von ≤ 1000 μm, vorzugsweise von ≤ 100 μm und besonders bevorzugt von ≤ 50 μm realisiert werden können.

In der Immunzytochemie und bei immunologischen Mikrotiterplattenbasierten Tests ist der Einsatz von enzymatischen Markierungen bekannt (siehe E. Lidell und I. Weeks, Antibody Technology, BIOS Scientific Publishers Limited, 1995). So katalysieren beispielsweise Enzyme den Umsatz eines Substrats bzw. Edukts in ein schwer lösliches, in aller Regel gefärbtes Produkt.

Besonders bevorzugt ist die zur Bildung eines Niederschlags an den Array-Elementen führende Reaktion eine durch ein Enzym katalysierte Umsetzung eines löslichen Substrats bzw. Edukts in ein schwer lösliches Produkt. Bei einer speziellen Ausführungsform ist die zur Bildung eines Niederschlags an den Array-Elementen führende Reaktion eine durch eine Peroxidase katalysierte Oxidation von 3,3',5,5'-Tetramethylbenzidin.

Vorzugsweise wird als Peroxidase für die Oxidation von 3,3', 5,5'-Tetramethylbenzidin Meerrettichperoxidase eingesetzt. Dem Fachmann sind jedoch weitere Peroxidasen bekannt, die zur Oxidation von 3,3',5,5'-Tetramethylbenzidin eingesetzt werden können.

Es wird angenommen, dass 3,3',5,5'-Tetramethylbenzidin unter der katalytischen Einwirkung einer Peroxidase in einem ersten Schritt zu einem blau gefärbten Radikalkation oxidiert wird (siehe z.B. Gallati und Pracht, J. Clin. Chem. Clin. Biochem. 1985, 23, 8, 454). Dieses blau gefärbte Radikalkation wird mittels eines Polyanions wie z.B. Dextransulfat als Komplex ausgefällt. Die Fällungsreaktion über eine durch eine Peroxidasekatalysierte Oxidation von 3,3',5,5'-Tetramethylbenzidin ist beispielsweise in EP 0 456 782 beschrieben.

Die vorstehende Tabelle 1 gibt, ohne den Anspruch zu erheben, vollständig zu sein, einen Überblick über eine Reihe von in Frage kommenden Reaktionen, die geeignet sind, um zu einem Niederschlag an Array-Elementen zu führen, an denen eine Wechselwirkung zwischen Target und Sonde erfolgt ist.

Die Markierung von biologischen Proben mit Enzymen bzw. Gold, insbesondere nanokristallinem Gold ist hinlänglich beschrieben (siehe u.a. F. Lottspeich und H. Zorbas, Bioanalytik, Spektrum Akademischer Verlag, Heidelberg, Berlin, 1998; E. Lidell und I. Weeks, Antibody Technology, BIOS Scientific Publishers Limited, 1995).

Weitere Möglichkeiten für den Nachweis der Sonde/Target-Wechselwirkungen über unlösliche Präzipitate bei dem erfindungsgemäßen Verfahren sind beschreiben in: Immunogold-Silver Staining, Principles, Methods and Applications, Hrsg.: M.A.Hayat, 1995, CRC Press; Eur J Immunogenet 1991 Feb-Apr;18(1-2):33-55 HLA-DR, DQ and DP typing using PCR amplification and immobilized probes. Erlich H, Bugawan T, Begovich AB, Scharf S, Griffith R, Saiki R, Higuchi R, Walsh PS. Department of Human Genetics, Cetus Corp., Emeryville, California 94608; Mol Cell Probes 1993 Jun;7(3):199-207 A combined modified reverse dot-blot and nested PCR assay for the specific non-radioactive detection of Listeria monocytogenes. Bsat N, Batt CA. Department of Food Science, Comell University, Ithaca, NY 14853. Immunogenetics 1990;32(4):231-41 Erratum in: Immunogenetics 1991;34(6):413 Rapid HLA-DPB typing using enzymatically amplified DNA and nonradioactive sequence-specific oligonucleotide probes. Bugawan TL, Begovich AB, Erlich HA. Department of Human Genetics, Cetus Corporation, Emeryville, CA 94608. Hum Immunol 1992 Dec;35(4):215-22 Generic HLA-DRB1 gene oligotyping by a nonradioactive reverse dot-blot methodology. Eliaou JF, Palmade F, Avinens O, Edouard E, Ballaguer P, Nicolas JC, Clot J. Laboratory of Immunology, Saint Eloi Hospital, CHU Montpellier, France. J Immunol Methods 1984 Nov 30;74(2):353-60 Sensitive visualization of antigen-antibody reactions in dot and blot immune overlay assays with immunogold and immunogold/silver staining. Moeremans M, Daneels G, Van Dijck A, Langanger G, De Mey J. Histochemistry 1987;86(6):609-15 Von-radioaktive in situ hybridization. A comparison of several immunocytochemical detection systems using reflection-contrast and electron microscopy. Cremers AF, Jansen in de Wal N, Wiegant J, Dirks RW, Weisbeek P, van der Ploeg M, Landegent JE.

Im Rahmen der vorliegenden Erfindung sind bei den erfindungsgemäßen Verfahren u.a. folgende Varianten für den Nachweis der Sonde/Target-Wechselwirkungen über unlösliche Präzipitate denkbar.

Bei einer Ausführungsform der erfindungsgemäßen Verfahren werden die Targets mit einem Katalysator, vorzugsweise einem Enzym versehen, das die Umwandlung eines löslichen Substrats in ein unlösliches Produkt katalysiert. Die Reaktion, die zur Bildung eines Niederschlags an den Array-Elementen führt, ist in diesem Fall die Umwandlung eines löslichen Substrats bzw. Edukts in ein unlösliches Produkt in Gegenwart eines mit den Targets gekoppelten Katalysators, vorzugsweise Enzyms. Das Enzym wird vorzugsweise ausgewählt aus der Gruppe, bestehend aus Meerrettichperoxidase, alkalischer Phosphatase und Glucoseoxidase. Das lösliche Substrat bzw. Edukt wird vorzugsweise ausgewählt aus der Gruppe, bestehend aus 3,3'-Diaminobenzidin, 4-Chlor-1-naphthol, 3-Amino-9-ethylcarbazol, p-Phenylendiamin-HCl/Pyrocatechol, 3,3',5,5'-Tetramethylbenzidin, Naphthol/Pyronin, Bromchlorindoylphosphat, Nitrotetraazoliumblau und Phenazinmethosulfat. Beispielsweise wird ein farbloser löslicher Wasserstoffdonor, z.B. 3,3'-Diaminobenzidin, in Anwesenheit von Wasserstoffperoxid in ein unlösliches farbiges Produkt umgewandelt. Das Enzym Meerrettichperoxidase überträgt Wasserstoffionen aus den Donoren auf Wasserstoffperoxid unter Bildung von Wasser.

Bei einer bevorzugten Ausführungsform der vorliegenden Erfindung ist die Reaktion, die zur Bildung eines Niederschlags an den Array-Elementen führt, die Bildung eines metallischen Niederschlags ist. Besonders bevorzugt ist die zur Bildung eines Niederschlags an den Array-Elementen führende Reaktion die chemische Reduktion einer Silberverbindung, vorzugsweise Silbernitrat, Silberlactat, Silberacetat oder Silbertartrat, zu elementarem Silber. Als Reduktionsmittel wird vorzugsweise Formaldehyd und/oder Hydrochinon eingesetzt.

Eine weitere Möglichkeit des Nachweises molekularer Wechselwirkungen auf Arrays besteht somit im Einsatz von Metallmarkierungen. Hierbei werden beispielsweise kolloidales Gold oder definierte Goldcluster mit den Targets gekoppelt, ggf. über bestimmte Vermittlermoleküle wie Streptavidin. Die durch die Goldmarkierung entstehende Färbung wird vorzugsweise durch nachfolgende Reaktion mit unedleren Metallen wie z.B. Silber verstärkt, wobei die mit den Targets gekoppelte Goldmarkierung als Kristallisationskeim bzw. Katalysator beispielsweise für die Reduktion von Silberionen zu einem Silberniederschlag wirkt. Die mit Goldmarkierungen gekoppelten Targets werden im Folgenden auch als Goldkonjugate bezeichnet.

Weitere Möglichkeiten des Nachweis von Sonde/Target-Wechselwirkungen über unlösliche Präzipitate sind insbesondere in WO 02/02810 beschrieben.

Bei dieser Ausführungsform des erfindungsgemäßen Verfahrens kann auch eine relative Quantifizierung der Sonden-/Target-Wechselwirkung erfolgen. Die relative Quantifizierung der Konzentration der gebundenen Targets auf einem Sonden-Array durch Nachweis eines Präzipitats bzw. eines Niederschlags erfolgt über die Konzentration der mit den Targets gekoppelten Markierungen, die die Reaktion eines löslichen Substrats bzw. Edukts zu einem schwer löslichen Niederschlag auf dem Array-Element, an dem eine Sonden/Target-Wechselwirkung stattgefunden hat, katalysieren bzw. als Kristallisationskeim für derartige Reaktionen wirken. Beispielsweise beträgt im Fall von mit Nanogold markierten HPLC-gereinigten Oligonukleotidsonden das Verhältnis von gebundenem Target zu Goldpartikel 1:1. In anderen Ausführungsformen der vorliegenden Erfindung kann es ein Vielfaches oder auch einen Bruchteil davon betragen.

Die Detektion bei dieser Ausführungsform des erfindungsgemäßen Nachweisverfahrens erfolgt somit durch Messung der Transmissionsänderung, Reflexion oder Streuung, die durch den Niederschlag hervorgerufen wird, der auf den Array-Elementen, an denen eine Sonden/Target-Wechselwirkung stattgefunden hat, durch die katalytische Wirkung der mit den gebundenen Targets gekoppelten Markierung erzeugt wird.

Die Lichtabsorption wird im Fall der Kopplung von kolloidalem Gold oder definierten Goldcluster mit den Targets bereits durch die Gegenwart dieser metallischen Markierungen hervorgerufen. Zur Verstärkung der Lichtabsorption wird allerdings vorzugsweise katalytisch durch derartige Wechselwirkungshybride, d.h. die mit einer Markierung wie beispielsweise kolloidalem Gold oder definierten Goldclustern versehene Targets, ein nicht transparentes Präzipitat abgeschieden. Als besonders vorteilhaft hat sich im Fall von Goldkonjugaten die Verwendung von Silber als Präzipitat herausgestellt.

Bei einer weiteren bevorzugten Ausführungsform des erfindungsgemäßen Verfahrens wird somit in Schritt c) der zeitliche Verlauf der Niederschlagsbildung an den Array-Elementen in Form von Signalintensitäten detektiert. Auf diese Weise kann eine genaue Bestimmung der relativen quantitativen Menge an gebundenen Targets gewährleistet werden. Eine derartige Vorgehensweise ist ausführlich in der internationalen Patentanmeldung WO 02/02810 beschrieben, auf deren diesbezüglichen Inhalt hiermit ausdrücklich Bezug genommen wird.

Der qualitative und/oder quantitative Nachweis der Sonden-/Target-Wechselwirkung durch Messung der Durchlichtabsorption kann bei diesem Aspekt der vorliegenden Erfindung analog dem vorstehend beschriebenen Beispiel für ein erfindungsgemäßes Verfahren unter Verwendung einer offenbarten Vorrichtung, die ein optisches System umfasst, mit dem der zeitliche Verlauf von Niederschlagsbildungen auf der Detektionsfläche detektierbar ist, durchgeführt werden.

Voraussetzung für die Bindung eines beispielsweise mit einer Fluoreszenzgruppe markierten Targetmoleküls in Form eines DNA- oder RNA-Moleküls an eine Nukleinsäuresonde des Mikroarrays ist, dass sowohl Targetmolekül als auch Sondenmolekül in Form einer einzelsträngigen Nukleinsäure vorliegen. Nur zwischen solchen Molekülen kann eine effiziente und spezifische Hybridisierung stattfinden. Einzelsträngige Nukleinsäureziel- und Nukleinsäuresondenmoleküle erhält man in der Regel durch Hitzedenaturierung und optimale Wahl von Parametern wie Temperatur, Ionenstärke und Konzentration helixdestabilisierender Moleküle. Somit wird gewährleistet, dass nur Sonden mit nahezu perfekt komplementären, d.h. einander entsprechenden Sequenzen mit der Zielsequenz gepaart bleiben (siehe z.B. A.A. Leitch, T. Schwarzacher, D. Jackson, I. J. Leitch, 1994, In vitro Hybridisierung, Spektrum Akademischer Verlag, Heidelberg/ Berlin/Oxford).

Wird die nachzuweisende Nukleinsäure zunächst durch eine PCR amplifiziert, wird der Reaktion zu Anfang bei einer weiteren bevorzugten Ausführungsform mindestens ein Kompetitor zugesetzt, der die Bildung eines der beiden durch die PCR amplifizierten Template-Stränge inhibiert. Insbesondere wird bei der PCR ein DNA-Molekül zugesetzt, das mit einem der zur PCR-Amplifikation des Templates verwendeten Primer um die Bindung an das Template konkurriert, und nicht enzymatisch verlängert werden kann. Die durch die PCR amplifizierten einzelsträngigen Nukleinsäuremoleküle werden dann durch Hybridisierung mit einer komplementären Sonde nachgewiesen. Alternativ wird die nachzuweisende Nukleinsäure zunächst im Einzelstrangüberschuss durch eine PCR amplifiziert und durch eine anschließende Hybridisierung mit einer komplementären Sonde nachgewiesen, wobei der PCR-Reaktion zu Anfang ein Kompetitor zugesetzt wird, bei dem es sich um ein DNA-Molekül oder ein Molekül eines Nukleinsäure-Analogons handelt, das an einen der beiden Stränge des Templates hybridisieren kann, aber nicht an den Bereich, der durch die Sonden-Hybridisierung nachgewiesen wird, und das enzymatisch nicht verlängerbar ist.

Als Kompetitor in der PCR kann jedes Molekül eingesetzt werden, das eine bevorzugte Amplifikation nur eines der beiden in der PCR-Reaktion vorhandenen Template-Stränge bewirkt. Bei Kompetitoren kann es sich daher erfindungsgemäß um Proteine, um Peptide, um DNA-Liganden, um Interkalatoren, um Nukleinsäuren oder deren Analoga handeln. Als Kompetitoren werden bevorzugt Proteine bzw. Peptide eingesetzt, die in der Lage sind, einzelsträngige Nukleinsäuren mit Sequenz-Spezifität zu binden und über die oben definierten Eigenschaften verfügen. Besonders bevorzugt werden als Sekundärstrukturbrecher Nukleinsäuremoleküle und Nukleinsäure-Analoga-Moleküle eingesetzt.

Durch anfängliche Zugabe des Kompetitors zur PCR während der Amplifikation wird die Bildung eines der beiden Template-Stränge im Wesentlichen inhibiert. "Im Wesentlichen inhibiert" bedeutet, dass im Rahmen der PCR ein ausreichender Einzelstrangüberschuss und eine ausreichende Menge des anderen Template-Strangs hergestellt werden, um einen effizienten Nachweis des amplifizierten Strangs durch die Hybridisierung zu gewährleisten. Die Amplifikation erfolgt damit nicht einer exponentiellen Kinetik der Form $2^n$ (mit n = Anzahl der Zyklen), sondern einer gedämpften Amplifikationskinetik der Form $<2^n$.

Der durch die PCR erzielte Einzelstrangüberschuss beträgt gegenüber dem nicht-amplifizierten Strang den Faktor 1,1 bis 1000, bevorzugt den Faktor 1,1 bis 300, ebenfalls bevorzugt den Faktor 1,1 bis 100, besonders bevorzugt den Faktor 1,5 bis 100, ebenfalls besonders bevorzugt den Faktor 1,5 bis 50, insbesondere bevorzugt den Faktor 1,5 bis 20 und am meisten bevorzugt den Faktor 1,5 bis 10.

Typischerweise wird die Funktion eines Kompetitors darin bestehen, dass er selektiv an einen der beiden Template-Stränge bindet und damit die Amplifikation des entsprechenden komplementären Stranges behindert. Als Kompetitoren kommen daher einzelsträngige DNA- oder RNA-bindende Proteine mit Spezifität für einen der beiden in einer PCR zu amplifizierenden Template-Stränge in Frage. Ebenso kann es sich um Aptamere handeln, die Sequenzspezifisch nur an bestimmte Bereiche eines der beiden zu amplifizierenden Template-Stränge binden.

Bevorzugt werden Nukleinsäuren oder Nukleinsäure-Analoga als Kompetitoren eingesetzt. Üblicherweise werden die Nukleinsäuren bzw. Nukleinsäure-Analoga dadurch als Kompetitor der PCR wirken, dass sie entweder mit einem der zur PCR verwendeten Primer um die Primer-Bindungsstelle konkurrieren oder, aufgrund einer Sequenz-Komplementarität mit einem Bereich eines nachzuweisenden Template-Strangs hybridisieren können. Bei diesem Bereich handelt es sich nicht um die Sequenz, die durch die Sonde nachgewiesen wird. Solche Nukleinsäure-Kompetitoren sind enzymatisch nicht verlängerbar.

Bei den Nukleinsäure-Analoga kann es sich z.B. um sogenannte Peptid-Nukleinsäuren (peptide nucleic acids, PNA) handeln. Bei Nukleinsäure-Analoga kann es sich aber auch um Nukleinsäuremoleküle handeln, bei denen die Nukleotide über eine Phosphothioat-Bindung anstelle einer Phosphat-Bindung miteinander verknüpft sind. Ebenso kann es sich um Nukleinsäure-Analoga handeln, bei denen die natürlich vorkommenden Zuckerbausteine Ribose bzw. Desoxyribose gegen alternative Zucker wie z.B. Arabinose oder Trehalose etc. ausgetauscht wurden. Weiterhin kann es sich bei dem Nukleinsäurederivat um "locked nucleic acid" (LNA) handeln. Weitere übliche Nukleinsäure-Analoga sind dem Fachmann bekannt. Bevorzugt werden als Kompetitoren DNA- oder RNA-Moleküle, insbesondere bevorzugt DNA- oder RNA-Oligonukleotide bzw. deren Analoga eingesetzt.

Abhängig von der Sequenz der als Kompetitoren eingesetzten Nukleinsäuremoleküle bzw. Nukleinsäure-Analoga beruht die Inhibierung der Amplifikation eines der beiden Template-Stränge im Rahmen der PCR-Reaktion auf unterschiedlichen Mechanismen. Dies wird im Folgenden beispielhaft anhand eines DNA-Moleküls diskutiert.

Wenn als Kompetitor z.B. ein DNA-Molekül verwendet wird, kann dies eine Sequenz aufweisen, die mit der Sequenz eines der zu PCR verwendeten Primer zumindest teilweise derart identisch ist, dass eine spezifische Hybridisierung des DNA-Kompetitor-Moleküls mit dem entsprechenden Template-Strang unter stringenten Bedingungen möglich ist. Da das zur Kompetition verwendete DNA-Molekül erfindungsgemäß in diesem Fall nicht durch eine DNA-Polymerase verlängerbar ist, kompetiert das DNA-Molekül mit dem jeweiligen Primer während der PCR-Reaktion um die Bindung an das Template. Je nach Mengenverhältnis des DNA-Kompetitor-Moleküls zum Primer kann auf diese Weise die Amplifikation des durch den Primer definierten Template-Strangs derart inhibiert werden, dass die Herstellung dieses Template-Strangs deutlich reduziert ist. Die PCR verläuft dabei nach einer exponentiellen Kinetik, die höher ist, als bei den verwendeten Kompetitor-Mengen zu erwarten wäre. Auf diese Weise entsteht ein Einzelstrangüberschuss in einer Menge, die ausreichend für einen effizienten Nachweis der amplifizierten Target-Moleküle durch Hybridisierung ist.

Bei dieser Ausführungsform dürfen die zur Kompetition verwendeten Nukleinsäuremoleküle bzw. Nukleinsäureanaloga enzymatisch nicht verlängerbar sein. "Enzymatisch nicht verlängerbar" bedeutet, dass die zur Amplifikation verwendete DNA- oder RNA-Polymerase den Nukleinsäure-Kompetitor nicht als Primer verwenden kann, d.h. nicht in der Lage ist, 3' von der durch den Kompetitor definierten Sequenz den jeweiligen Gegenstrang zum Template zu synthetisieren.

Alternativ zu der oben dargestellten Möglichkeit kann das DNA-Kompetitor-Molekül auch über eine Sequenz verfügen, die zu einem Bereich des nachzuweisenden Template-Strangs komplementär ist, der nicht durch eine der Primer-Sequenzen adressiert wird, und die enzymatisch nicht verlängerbar ist. Im Rahmen der PCR wird das DNA-Kompetitor-Molekül dann an diesem Template-Strang hybridisieren und die Amplifikation dieses Stranges entsprechend blockieren.

Dem Fachmann ist bekannt, dass die Sequenzen von DNA-Kompetitor-Molekülen oder allgemein Nukleinsäure-Kompetitor-Molekülen entsprechend gewählt werden können. Wenn die Nukleinsäure-Kompetitor-Moleküle eine Sequenz aufweisen, die nicht mit der Sequenz eines der zur PCR verwendeten Primer im Wesentlichen identisch, sondern zu einem anderen Bereich des nachzuweisenden Template-Strangs komplementär ist, ist diese Sequenz so zu wählen, dass sie nicht in den Bereich der Template-Sequenz fällt, der im Rahmen der Hybridisierung mit einer Sonde nachgewiesen wird. Dies ist deswegen notwendig, da zwischen der PCR und der Hybridisierungsreaktion keine Aufarbeitungsreaktion stattfinden muss. Würde als Kompetitor ein Nukleinsäuremolekül verwendet, das in den nachzuweisenden Bereich fällt, würde dies mit dem einzelsträngigen TargetMolekül um die Bindung an die Sonde kompetieren.

Bevorzugt hybridisieren solche Kompetitoren in der Nähe der Template-Sequenz, die durch die Sonde nachgewiesen wird. Die Positionsangabe "in der Nähe" ist dabei erfindungsgemäß so zu verstehen, wie sie für Sekundärstrukturbrecher angegeben ist. Allerdings können die erfindungsgemäßen Kompetitoren auch in unmittelbarer Nachbarschaft der nachzuweisenden Sequenz hybridisieren, d.h. exakt ein Nukleotid von der nachzuweisenden Target-Sequenz entfernt.

Wenn als kompetitierende Moleküle enzymatisch nicht verlängerbare Nukleinsäuren oder Nukleinsäure-Analoga verwendet werden, sind diese hinsichtlich ihrer Sequenz oder Struktur so zu wählen, dass sie nicht enzymatisch durch DNA- oder RNA-Polymerasen verlängert werden können. Bevorzugt ist das 3'-Ende eines Nukleinsäure-Kompetitors so ausgelegt, dass es keine Komplementarität zum Template aufweist und/oder anstelle der 3-OH-Gruppe am 3'-Ende einen anderen Substituenten trägt.

Weist das 3'-Ende des Nukleinsäure-Kompetitors keine Komplementarität zum Template auf, unabhängig davon, ob der Nukleinsäure-Kompetitor an eine der Primer-Bindungsstellen des Templates oder an eine der durch die PCR zu amplifizierenden Sequenzen des Templates bindet, kann der Nukleinsäure-Kompetitor wegen der fehlenden Basen-Komplementarität am 3'-Ende nicht durch die gängigen DNA-Polymerasen verlängert werden. Diese Art der Nicht-Verlängerbarkeit von Nukleinsäure-Kompetitoren durch DNA-Polymerasen ist dem Fachmann bekannt. Bevorzugt weist der Nukleinsäure-Kompetitor an seinem 3'-Ende bezüglich der letzten 4 Basen, besonders bevorzugt bezüglich der letzten 3 Basen, insbesondere bevorzugt bezüglich der letzten 2 Basen und am meisten bevorzugt bezüglich der letzten Base keine Komplementarität zu seiner Zielsequenz auf. Solche Kompetitoren können an den genannten Positionen auch nicht-natürliche Basen aufweisen, die keine Hybridisierung erlauben.

Nukleinsäure-Kompetitoren, die enzymatisch nicht verlängerbar sind, können auch eine 100%-ige Komplementarität zu ihrer Zielsequenz aufweisen, wenn sie in ihrem Rückgrat oder an ihrem 3'-Ende derart modifiziert sind, dass sie enzymatisch nicht verlängerbar sind.

Weist der Nukleinsäure-Kompetitor an seinem 3'-Ende eine andere Gruppe als die OH-Gruppe auf, handelt es sich bei diesen Substituenten bevorzugt um eine Phosphat-Gruppe, um ein Wasserstoff-Atom (Dideoxynukleotid), eine Biotingruppe oder eine Aminogruppe. Diese Gruppen können durch die gängigen Polymerasen nicht verlängert werden.

Besonders bevorzugt wird bei einem derartigen Verfahren als Kompetitor ein DNA-Molekül verwendet, das mit einem der beiden zur PCR verwendeten Primer um die Bindung an das Template kompetiert und welches am 3'-Ende während der chemischen Synthese mit einem Aminolink versehen wurde. Solche Kompetitoren können 100%-ige Komplementarität zu ihrer Zielsequenz haben.

Nukleinsäure-Analoga-Kompetitoren wie z.B. PNAs müssen dagegen nicht über eine blockierte 3'-OH-Gruppe oder eine nicht-komplementäre Base an ihrem 3'-Ende verfügen, da sie aufgrund des durch die Peptid-Bindung veränderten Rückgrats nicht durch die DNA-Polymerasen erkannt und somit auch nicht verlängert werden. Entsprechende andere Modifikationen der Phosphatgruppe, die durch die DNA-Polymerasen nicht erkannt werden, sind dem Fachmann bekannt. Dazu gehören u.a. Nukleinsäuren mit Rückgratmodifikationen wie z.B. 2'-5' Amid-Bindungen (Chan et al. (1999) J. Chem. Soc., Perkin Trans. 1, 315-320), Sulfid-Bindungen (Kawai et al. (1993) Nucleic Acids Res., 1 (6), 1473-1479), LNA (Sorensen et al. (2002) J. Am. Chem. Soc., 124 (10), 2164-2176) und TNA (Schoning et al. (2000) Science, 290 (5495), 1347-1351).

Es können auch mehrere Kompetitoren, die an unterschiedliche Bereiche des Templates (z.B. u.a. die Primer-Bindungsstelle) hybridisieren, gleichzeitig in einer PCR eingesetzt werden. Wenn die Kompetitoren über Sekundärstrukturbrechereigenschaften verfügen, kann dadurch die Effizienz der Hybridisierung zusätzlich gesteigert werden.

In einer alternativen Ausführungsform kann das DNA-Kompetitor-Molekül über eine zu einem der Primer komplementäre Sequenz verfügen. Solche z.B. Antisense-DNA-Kompetitor-Moleküle können dann je nach Mengenverhältnis zwischen Antisense-DNA-Kompetitor-Molekül und Primer dazu verwendet werden, den Primer in der PCR-Reaktion zu titrieren, so dass dieser nicht mehr mit dem jeweiligen Template-Strang hybridisiert und entsprechend nur der durch den anderen Primer definierte Template-Strang amplifiziert wird. Dem Fachmann ist bewusst, dass bei dieser Ausführungsform der Erfindung der Nukleinsäure-Kompetitor enzymatisch verlängerbar sein kann, aber nicht muss.

Wenn im Rahmen dieser Erfindung von Nukleinsäure-Kompetitoren gesprochen wird, schließt dies Nukleinsäure-Analoga-Kompetitoren mit ein, wenn sich nicht aus dem Kontext etwas anderes ergibt. Der Nukleinsäure-Kompetitor kann an den entsprechenden Strang des Templates reversibel oder irreversibel binden. Die Bindung kann durch kovalente bzw. nicht kovalente Wechselwirkungen erfolgen.

Bevorzugt erfolgt die Bindung des Nukleinsäure-Kompetitors über nichtkovalente Wechselwirkungen und ist reversibel. Insbesondere bevorzugt erfolgt die Bindung an das Template durch Ausbildung von Watson-Crick Basenpaarungen.

Die Sequenzen der Nukleinsäure-Kompetitoren richten sich in der Regel nach der Sequenz des Template-Strangs, der nachgewiesen werden soll, bei antisense-Primern dagegen nach den zu titrierenden Primer-Sequenzen, die aber wiederum durch die Template-Sequenzen definiert sind.

Bei der PCR-Amplifikation von Nukleinsäuren handelt es sich um eine Labor-Standardmethode, mit deren vielfältigen Variations- und Ausgestaltungsmöglichkeiten der Fachmann vertraut ist. Prinzipiell ist eine PCR dadurch charakterisiert, dass das doppelsträngige Nukleinsäure-Template, üblicherweise ein doppelsträngiges DNA-Molekül, zuerst einer Hitze-Denaturierung für 5 Minuten bei 95° C unterworfen wird, wodurch die beiden Stränge voneinander getrennt werden. Nach einer Abkühlung auf die sogenannte "annealing"-Temperatur (definiert durch den Primer mit der niedrigeren Schmelztemperatur) lagern sich die in der Reaktionslösung vorhandenen "forward"- und "reverse"-Primer an die zu ihrer Sequenz komplementären Stellen in den jeweiligen Template-Strängen an. Die "annealing"-Temperatur der Primer richtet sich dabei nach der Länge und Basenzusammensetzung der Primer. Sie kann aufgrund theoretischer Überlegungen kalkuliert werden. Angaben zur Kalkulation von "annealing"-Temperaturen finden sich z.B. in Sambrook et al. (*vide supra*).

Nach dem Annealen der Primer, das typischerweise in einem Temperaturbereich von 40-75 °C, bevorzugt von 45-72 °C und insbesondere bevorzugt von 50-72 °C erfolgt, folgt ein Elongationsschritt, bei dem durch die Aktivität der in der Reaktionslösung vorhandenen DNA-Polymerase Desoxyribonukleotide mit dem 3'-Ende der Primer verknüpft werden. Die Identität der eingefügten dNTPs richtet sich dabei nach der Sequenz des mit dem Primer hybridisierten Template-Strangs. Da in der Regel thermostabile DNA-Polymerasen eingesetzt werden, läuft der Elongationsschritt üblicherweise zwischen 68-72° C ab.

Bei der symmetrischen PCR wird durch eine Wiederholung dieses beschriebenen Zyklus aus Denaturierung, Annealing der Primer und Elongation der Primer eine exponentielle Vermehrung des durch die Primersequenzen definierten Nukleinsäureabschnitts des Targets erreicht. Hinsichtlich der Pufferbedingungen bei der PCR, der verwendbaren DNA-Polymerasen, der Herstellung von doppelsträngigen DNA-Templates, des Designs von Primern, der Wahl der Annealing-Temperatur und Variationen der klassischen PCR steht dem Fachmann zahlreiche Literatur zur Verfügung.

Dem Fachmann ist geläufig, dass als Template auch z.B. einzelsträngige RNA, wie z.B. mRNA, eingesetzt werden kann. Diese wird in der Regel vorher durch eine Reverse Transkription in eine doppelsträngige cDNA überführt.

In einer bevorzugten Ausführungsform wird als Polymerase eine thermostabile DNA-abhängige DNA-Polymerase verwendet. In einer besonders bevorzugten Ausführungsform wird eine thermostabile DNA-abhängige DNA-Polymerase ausgewählt aus der Gruppe bestehend aus Taq-DNA-Polymerase (Eppendorf, Hamburg, Deutschland sowie Qiagen, Hilden, Deutschland), PFu-DNA-Polymerase (Stratagene, La Jolla, USA), Tth-DNA-Polymerase (Biozym Epicenter Technol., Madison, USA), Vent-DNA-Polymerase, DeepVent-DNA-Polymerase (New England Biolabs, Beverly, USA), Expand-DNA-Polymerase (Roche, Mannheim, Deutschland) verwendet.

Die Verwendung von Polymerasen, die aus natürlich vorkommenden Polymerasen durch gezielte oder evolutive Veränderung optimiert worden sind, ist ebenfalls bevorzugt. Bei der Durchführung der PCR in Gegenwart des Substanzbibliothekenträgers ist insbesondere die Verwendung der Taq-Polymerase der Firma Eppendorf (Deutschland) bzw. des Advantage-cDNA-Polymerase-Mix von Clontech (Palo Alto, CA, USA) bevorzugt.

Bei einem weiteren Aspekt der vorliegenden Erfindung wird eine Vorrichtung zur Verfügung gestellt, die insbesondere zur Amplifikation und zum qualitativen und quantitativen Nachweis von Nukleinsäuren mittels einem wie vorstehend beschriebenen erfindungsgemäßen Verfahren geeignet ist.

Bei diesem Aspekt der vorliegenden Erfindung umfasst die offenbarte Vorrichtung eine Temperatursteuerungs- und/oder -regeleinheit; und eine Reaktionskammer, die zwischen einem Kammerträger und einem Mikroarray gebildet ist, wobei der Mikroarray ein Substrat mit darauf auf Array-Elementen immobilisierten Nukleinsäuresonden umfasst und die Temperatur in der Reaktionskammer durch die Temperatursteuerungs- und -regeleinheit steuerbar und/oder regelbar ist. Die offenbarte Vorrichtung ist ferner derart ausgestaltet, dass die Hybridisierung zwischen nachzuweisenden Nukleinsäuren und auf dem Substrat immobilisierten Nukleinsäuresonden detektierbar ist, ohne dass Moleküle aus der Reaktionskammer entfernt werden, die nicht mit den auf dem Substrat immobilisierten Nukleinsäuren hybridisiert sind.

Ein in der Reaktionskammer befindlicher Chip bzw. Mikroarray, der einen Träger mit einer Detektionsfläche umfasst, auf der eine Substanzbibliothek immobilisiert ist, gewährleistet die Möglichkeit der Bereitstellung einer sehr hohen Sondendichte in der Reaktionskammer.

Die Reaktionskammer der offenbarten Vorrichtung ist bei diesem Aspekt der vorliegenden Erfindung vorzugsweise als Kapillarspalt ausgestaltet. Der Kapillarspalt weist vorzugsweise eine Dicke im Bereich von 10 μm bis 200 μm, besonders bevorzugt im Bereich von 25 μm bis 150 μm und am meisten bevorzugt im Bereich von 50 μm bis 100 μm auf. Bei speziellen Ausgestaltungen weist der Kapillarspalt eine Dicke von 60 μm, 70 μm, 80 μm oder 90 μm auf.

Bei einer alternativen Ausführungsform der offenbarten Vorrichtung weist der Reaktionsraum bzw. die Reaktionskammer beispielsweise eine Dicke von 0,7 mm bis 2,5 mm, vorzugsweise von 1,0 mm bis 2,0 mm und besonders bevorzugt von 0,8 mm bis 1,8 mm auf. Bei einer speziellen Ausgestaltung beträgt die Dicke des Reaktionsraums 1,1 mm.

Die elektrokalorische Steuerung bzw. Regelung durch die Temperatursteuerungs- und/oder -regeleinheit erlaubt die Einstellung von definierten Temperaturen sowohl während der Prozessierung der zu untersuchenden Probe in der Reaktionskammer als auch während der Detektion der Hybridisierungsereignisse. Somit wird sowohl eine verbesserte Kontrolle als auch eine Optimierung der Nachweisreaktion gewährleistet. Ferner erlaubt die Einstellung definierter Temperaturen über die Temperatursteuerungs- bzw. -regelungseinheit die Durchführung von komplexen Reaktionen wie zum Beispiel von Amplifikationsreaktionen durch PCR.

Allgemein erlaubt die offenbarte Vorrichtung eine nahezu gleichzeitige, zeiteffiziente und wenig störanfällige Durchführung von Aufarbeitungs- bzw. Konditionierungsreaktionen und die Chip-basierte Charakterisierung von Nukleinsäuren. Dabei wird unter einer Aufarbeitungs- bzw. Konditionierreaktion erfindungsgemäß eine Reaktion verstanden, deren Reaktionsprodukte durch Chip-basierte Experimente charakterisiert werden können.

Eine offenbarte Vorrichtung zur Detektion von molekularen Wechselwirkungen in geschlossenen Reaktionskammern besteht vorzugsweise aus vier funktionellen Hauptelementen (siehe Abbildung 1). Die mechanische, elektrische und fluidische Aufnahme der Reaktionskammer erfolgt in einem Aufnahmemodul (1). Die Reaktionskammer wird im folgenden auch als Mikroreaktor bezeichnet. Für die Detektion der Reaktionsergebnisse wird ein optisches System (2) bereitgestellt. Die Verarbeitung der Reaktionsergebnisse zu einem Analyseergebnis kann in einem Controller (3) erfolgen. Das Analyseergebnis wird gegebenenfalls durch geeignete Verbindungselemente (4) der Speicherung und/oder Weiterverarbeitung zur Verfügung gestellt.

Eine Reaktionskammer, die vorteilhaft als Bauteil der offenbarten Vorrichtung eingesetzt werden kann, ist in der internationalen Patentanmeldung WO 01/02094 ausführlich beschrieben, auf deren diesbezüglichen Inhalt hiermit ausdrücklich Bezug genommen wird.

Die ggf. durch einen Barcode identifizierbare Reaktionskammer ist in einem fluidischen Aufnahmemodul eingebracht, wo sie mit einer oder mehreren Reaktionslösungen befüllt werden kann. Die Reaktionskammer weist ferner gegebenenfalls elektrische Kontakte auf, wodurch zum Beispiel über integrierte Sensor- und/oder Heizelemente eine thermische Steuerung bzw. Regelung von Reaktionen in der Reaktionskammer gewährleistet ist. Dies ist insbesondere vorteilhaft für die Durchführung von thermisch empfindlichen Amplifikationsreaktionen für DNA oder RNA, Hybridisierungen von DNA oder RNA oder Reaktionen zur Signalverstärkung wie zum Beispiel durch Metallfällungen an entsprechend markierten und an die Substanzbibliothek gebundenen Target-Molekülen.

Die für die Durchführung der Vervielfältigungs- und Nachweisreaktionen erforderlichen Lösungen, wie Reaktions- und/oder Spüllösungen, sind über geeignete Verbindungselemente wie zum Beispiel Kanäle in die Reaktionskammer einbringbar. Geeignete Controller können der Überwachung des Reaktionsverlaufs dienen.

Die offenbarten Vorrichtungen gewährleisten ferner über gegebenenfalls vorhandene elektronische Schnittstellen die Übergabe der Rohdaten oder Analyseergebnisse an externe Rechner- oder Rechnernetze zum Beispiel zur Speicherung dieser Daten.

Vorzugsweise umfasst die Vorrichtung ein Detektionssystem, insbesondere ein optisches System, besonders bevorzugt ein fluoreszenzoptisches System.

Bei einer weiteren bevorzugten Ausführungsform ist das fluoreszenzoptische System ein das gesamte Volumen der Reaktionskammer abbildendes System. Derartige Systeme haben gegenüber konfokalen Fluoreszenzsysteme oder Systemen zur Detektion mittels evaneszenter Feldanregung (siehe z.B. Biosensors and Bioelectronics, 18 (2003) 489-497) den Vorteil, dass sie einfacher handhabbar sowie wesentlich kostengünstiger sind.

Beispiele für das gesamte Volumen der Reaktionskammer abbildende fluoreszenzoptische Systeme sind epifluoreszenztechnische Aufbauten mit bildgebender Detektionstechnik, z.B. auf Basis von CCD, CMOS, JFIT oder scannender PMT, sowie auf Basis von wellenlängenselektierter flächiger oder punktförmig scannender Beleuchtung, gz.B. mittels Weißlichtquellen, LED, organischen LED (OLED) und dgl., besonders geeignet.

Daneben sind selbstverständlich auch fokiselektive Detektionsmethoden bei dem erfindungsgemäßen Verfahren einsetzbar, wie z.B. konfokale Techniken oder auf der Anwendung einer tiefenselektiven Beleuchtung aufgrund der z.B. auf totaler Reflexion beruhenden evaneszenten Auskopplung von Anregungslicht (TIRF) im Probensubstrat oder der Verwendung von Wellenleitern beruhende Methoden. Derartige fokiselektive Verfahren sind insbesondere dann zu bevorzugen, wenn eine weitere Ausgrenzung der durch die in der Flüssigkeit vorhandenen, d.h. nicht hybridsierten Fluoreszenzmoleküle verursachten Hintergrundsignale erforderlich ist, um die Sensitivität zu erhöhen.

Bei der Verwendung von sehr dünnen Reaktionsräumen bzw. Reaktionskammern, insbesondere in der Form eines Kapillarspalts, sind somit alle herkömmlichen Vorrichtungen bzw. Verfahren zur bildgebenden Fluoreszenzdetektion, die für die Messungen von Fluoreszenzsignalen auf planaren Oberflächen beschrieben sind, einsetzbar.

In einer weiteren bevorzugten Ausführungsform dieses Aspekts der vorliegenden Offenbarung umfasst eine Vorrichtung zur Vervielfältigung und zum Nachweis von Nukleinsäuren ein optisches System, vorzugsweise ein fluoreszenzoptisches System oder ein optisches System, mit dem der zeitliche Verlauf von Niederschlagsbildungen auf der Detektionsfläche detektierbar ist.

Die offenbarte Vorrichtung in dieser Ausführungsform zeichnet sich dadurch aus, dass aufgrund des integrierten optischen Systems bzw. des Readersystems eine Detektion von molekularen Wechselwirkungen auch im Handbetrieb möglich ist. Dies ist insbesondere in Bereichen wie der medizinischen Diagnostik vorteilhaft. Dadurch, dass die offenbarte Vorrichtung in dieser Ausführungsform ein integriertes optisches System enthält, mit dem der zeitliche Verlauf von Niederschlagsbildungen auf der Detektionsfläche detektierbar ist, wird eine exakte Bestimmung der relativen quantitativen Menge von an die Substanzbibliothek gebundenen Nukleinsäuren gewährleistet.

Das optische System gewährleistet die bildgebende Abbildung der Substanzbibliothek während oder nach Abschluss der Vervielfältigungs- und/oder Nachweisreaktionen auf einen geeigneten Detektor, der beispielsweise als zweidimensionales elektrisch auslesbares Detektionselement ausgeführt ist. In einer Ausführungsform der offenbarten Vorrichtung wird die Probe mittels eines Beleuchtungsmoduls bzw. einer Lichtquelle des optischen Systems beleuchtet und die entstehenden Signale entsprechend der verwendeten Markierungen gefiltert abgebildet.

Das optische System gewährleistet ferner eine kinetische, d.h. dynamische Aufnahme der Reaktionsergebnisse. Insbesondere ist das optische System der offenbarten Vorrichtung dazu geeignet, den zeitlichen Verlauf eines Silberniederschlags zur Verstärkung von Hybridisierungssignalen zwischen Gold-markierten Target-Molekülen und der Substanzbibliothek aufzuzeichnen. Der hochintegrierte Aufbau der offenbarten Vorrichtung erlaubt die Übergabe von mehreren Bildern während des Reaktionsverlaufs zur Verarbeitung in einem geeigneten Datenverarbeitungsmodul oder Controller.

Die durch den zeitlichen Verlauf der Niederschlagsbildung entstehenden Veränderungen auf den jeweiligen Array-Elementen können in der offenbarten Vorrichtung, wie u.a. in der internationalen Patentanmeldung WO 02/02810 ausführlich beschrieben ist, ausgewertet werden. Auf den diesbezüglichen Inhalt der internationalen Patentanmeldung WO 02/02810 wird hiermit ebenfalls ausdrücklich Bezug genommen.

Das optische System, mit dem der zeitliche Verlauf von Niederschlagsbildungen auf der Detektionsfläche des Chips detektierbar ist, umfasst vorzugsweise einen zweidimensional auslesbaren Detektor. Der Detektor ist vorzugsweise eine Kamera, insbesondere eine CCD- oder CMOS-Kamera oder eine ähnliche Kamera. Durch Verwendung von Kameras mit elektrischen Bildwandlern wie zum Beispiel CCD- oder CMOS-Chips können hohe örtliche Auflösungen realisiert werden.

Die im optischen System der offenbarten Vorrichtung eingesetzten Kameras gewährleisten, dass die Beleuchtungsintensität homogen auf der abzubildenden Fläche verteilt ist und die zu detektierenden Signale durch Reflexion, Transmissionsmodulation, Streuung, Polarisationsmodulation und dergleichen mit der eingesetzten Detektionstechnik im Rahmen der zur Verfügung stehenden Dynamik abbildbar ist. Derartige Beleuchtungsverfahren sind beispielsweise in der internationalen Patentanmeldung WO 00/72018 beschrieben sowie auch kommerziell verfügbar (zum Beispiel von Vision & Control GmbH (Suhl, Deutschland) für Dunkelfeldbeleuchtungen und von Edmund Industrieoptik GmbH (Karlsruhe, Deutschland) für LED-Ringlicht).

Eine hohe örtliche Auflösung der zu detektierenden Fläche kann beispielsweise auch durch die Abbildung auf Detektoren wie Spiegel-Arrays oder LCD-Elemente und deren Verstellung gemäß eines zu detektierenden Musters oder einer zu definierenden Fläche erreicht werden, wie es beispielsweise für Fluoreszenzanwendungen in der deutschen Offenlegungsschrift DE 199 14 279 beschrieben ist. Der Vorteil eines derartigen Detektors bei der Messung von Reflexions- oder Transmissionsmodulationen besteht in der Integration der thermischen, elektrischen und fluidischen Steuerung bzw. Regelung in der Möglichkeit der optischen Signalverarbeitung und somit in geringeren technischen Anforderungen an die involvierte Rechentechnik.

Die Detektoren zeichnen üblicherweise den gesamten Bereich des SondenArrays auf.

Alternativ können auch scannende Detektoren zum Auslesen des Chips eingesetzt werden. Bei der Verwendung von scannenden Punktlichtquellen und/oder scannenden Detektoren umfasst die offenbarte Vorrichtung bewegliche optische Komponenten zur Lichtführung bzw. bewegliche mechanische Komponenten zur Halterung der Reaktionskammern, so dass die Führung der jeweiligen Komponenten über die einzelnen abzutastenden Positionen, das heißt die jeweiligen Messpunkte, gewährleistet ist. Die Bildaufnahme erfolgt bei dieser Ausführungsform durch eine rechnerische Rekonstruktion des Bildes aus den jeweiligen Messpunkten. Insbesondere ist die Kamera bei dieser Ausführungsform eine bewegbare Zeilenkamera.

Ferner umfasst das optische System vorzugsweise zusätzlich eine Lichtquelle, besonders bevorzugt eine multispektrale oder eine kohärente Lichtquelle. Beispiele für Lichtquellen im Rahmen der vorliegenden Erfindung sind Laser, Licht-emittierende Dioden (LED) und/oder Hochdrucklampen. Die Lichtquelle des optischen Systems gewährleistet vorzugsweise eine homogene Beleuchtung des Trägers.

Neben punktförmigen Lichtquellen können auch Lichtquellen in Form von Beleuchtungs-Arrays in der offenbarten Vorrichtung Verwendung finden. Eine homogene Beleuchtung des Trägers kann in dieser Ausgestaltung beispielsweise dadurch gewährleistet werden, dass die Lichtquelle mehrere diffus strahlende Lichtquellen umfasst, deren Überlagerung in einer homogenen Beleuchtung resultiert. So ermöglichen beispielsweise diffus streuende LED, die matrixförmig angeordnet sind, auf kurze Entfernungen zur Probe eine homogene Beleuchtung.

Wie bereits vorstehend erwähnt, kann die offenbarte Vorrichtung derart ausgeführt sein, dass die Detektionsfläche durch die Lichtquelle zeilenförmig abtastbar ist. Falls eine rasterförmige bzw. scannende Führung des Lichtstrahls über die Detektionsfläche gewünscht ist, sind folgende Ausführungsmöglichkeiten für die offenbarte Vorrichtung denkbar:

Z.B. kann die Detektionsfläche bzw. die Reaktionskammer beweglich ausgeführt sein und an einer ortsfesten Lichtquelle vorbeigeführt werden. Ist die Lichtquelle ein Laser, ist der Laser dabei in Ruhestellung. Ferner kann die Detektionsfläche in Ruhestellung vorliegen und ein beweglicher Laserstrahl über die Detektionsfläche geführt werden. Schließlich ist es auch möglich, dass die Lichtquelle in einer Achse und die Detektionsfläche in der anderen Achse bewegt wird.

Bei einer weiteren vorteilhaften Ausgestaltung der offenbarten Vorrichtung umfasst die Vorrichtung zusätzlich Linsen, Spiegel und/oder Filter. Der Einsatz von Filtern ermöglicht zum einen die spektrale Eingrenzung der homogenen Beleuchtung und zum anderen die Beleuchtung der Proben mit verschiedenen Wellenlängen. Bei einer weiteren Variante umfasst die offenbarte Vorrichtung zusätzlich Filterwechsler. Mit diesen Filterwechslern können die optischen Filter schnell gewechselt werden und somit mögliche Fehlinformationen, die zum Beispiel durch Verunreinigungen auftreten, eindeutig erkannt und eliminiert werden.

Wie bereits vorstehend erwähnt, ist das optische System vorzugsweise derart ausgestaltet, dass die Detektionsfläche homogen beleuchtbar ist, vorzugsweise mit einer Beleuchtungsintensitäts-Homogenität von mindestens 50%, besonders bevorzugt von mindestens 60% und am meisten bevorzugt von mindestens 70%.

Bei einer weiteren bevorzugten Ausführungsform der offenbarten Vorrichtung ist das optische System derart ausgestaltet, dass der zeitliche Verlauf der Änderung von Transmissionseigenschaften der Detektionsfläche detektierbar ist. Dies kann beispielsweise dadurch gewährleistet werden, dass Lichtquelle und Detektor auf entgegengesetzten Seiten in der Reaktionskammer angeordnet sind und die Reaktionskammer einschließlich des Trägers für die Detektionsfläche zumindest im Bereich des Strahlengangs von der Lichtquelle zum Detektor optisch transparent ist.

Bei einer weiteren Ausführungsform ist das optische System derart angeordnet, dass der zeitliche Verlauf der Änderung von Reflexionseigenschaften der Detektionsfläche detektierbar ist. Bei einer bevorzugten Ausführungsform zur Messung der Reflektivität befindet sich zusätzlich ein Oberflächenspiegel auf der Unterseite des Trägerelements.

Der Nachteil der schlechten Reflexion der Probe wird in dieser Ausgestaltung durch Transmissionseffekte ergänzt, in denen das Beleuchtungslicht über eine Spiegelschicht hinter der Probe, entweder als eigenständiger Spiegel oder als auf der Rückseite des Probenträgers aufgetragene Schicht, reflektiert. Dabei kann beispielsweise ein Flächenstrahler auf der gegenüberliegenden Seite des Trägerelements und damit auch zum Sensor beispielsweise einer CCD-Kamera angeordnet werden. Auf diese Weise wird eine sehr kompakte Anordnung ermöglicht. Bei einer weiteren bevorzugten Ausgestaltung, insbesondere wenn die Reflektivität des Trägerelements gemessen wird, umfasst die Vorrichtung zusätzlich einen halbdurchlässigen Spiegel zwischen Lichtquelle und Trägerelement. Bei dieser Ausführungsform gelangt das Licht der Lichtquelle durch einen halbdurchlässigen Spiegel auf die Probe und das Bild wird in Reflexion durch den halbdurchlässigen Spiegel und gegebenenfalls eine Ausleseoptik auf eine Kamera abgebildet.

Bei einer besonders bevorzugten Ausführungsform der offenbarten Vorrichtung ist das optische System derart angeordnet, dass der zeitliche Verlauf der Änderung von Streuungseigenschaften der Detektionsfläche detektierbar ist. Dabei sind Lichtquelle und Detektor vorzugsweise auf derselben Seite der zu detektierenden Fläche angeordnet. Das optische System kann bei dieser Ausführungsform beispielsweise derart angeordnet sein, dass die Probe bzw. der Chip in einem bestimmten Winkel, der vorzugsweise kleiner 45°C und besonders bevorzugt kleiner 30°C ist, beleuchtbar ist. Der Beleuchtungswinkel wird so gewählt, dass das eingestrahlte Licht ohne das Vorhandensein lokaler Streuzentren, d.h. z.B. vor einer Niederschlagsbildung auf der Detektionsfläche, nicht direkt in den Detektionsstrahlengang reflektiert wird und somit kein Signal detektierbar ist. Treten lokale Streuzentren auf der Detektionsfläche auf, z.B. durch Bildung eines Niederschlags, gelangt ein Teil des eingestrahlten Lichtes in den Detektionsstrahlengang und führt somit zu einem messbaren Signal in dem optischen System der offenbarten Vorrichtung.

Besonders bevorzugt ist der Kammerträger oder der Substanzbibliothekenträger zumindest im Bereich der Detektionsfläche bei dieser Ausführungsform optisch nicht transparent. Geeignete nicht optisch transparente Materialien sind beispielsweise Silizium, keramische Werkstoffe oder Metalle. Der Einsatz eines nicht optisch transparenten Kammerträgers hat den Vorteil, dass aufgrund von vorteilhaften physikalischen Eigenschaften der Trägermaterialien eine leichtere, exaktere und homogenere Temperatursteuerung der Reaktionskammer gewährleistet ist, so dass eine erfolgreiche Durchführung von temperatursensitiven Reaktionen wie eine PCR gewährleistet ist.

Bei einer weiteren bevorzugten Ausführungsform der offenbarten Vorrichtung ist der Anregungsstrahlengang der Lichtquelle derart gestaltet, dass Bereiche parallelen Lichtes vorliegen und somit Interferenzfilter ohne Verschiebung ihrer Transmissionsfenster in das optische System eingebracht werden können.

Bei einer weiteren bevorzugten Ausführungsform der offenbarten Vorrichtung ist der Detektionsstrahlengang derart gestaltet, dass Bereiche parallelen Lichtes vorliegen und somit Interferenzfilter ohne Verschiebung ihrer Transmissionsfenster in das optische System einbringbar sind.

Interferenzfilter verändern ihre spektrale Selektivität bei nichtparallelen Strahlengängen stark. Ermöglicht das optische System durch das Vorhandensein von Bereichen parallelen Lichtes die Einbringung bzw. Anordnung von Interferenzfiltern in der offenbarten Vorrichtung, ohne deren spektrale Selektivität zu verändern, so ist die offenbarte Vorrichtung auch zur Detektion molekularer Wechselwirkungen von mit Fluorochromen markierten Substanzen geeignet. Somit kann eine universelle CCD-basierte Reaktions- und Detektionsvorrichtung realisiert werden.

Bei dieser Ausführungsform der offenbarten Vorrichtung, die auch zur Detektion von Fluoreszenzmarkierung geeignet ist, kann das optische System, bei der Verwendung von weißem oder multispektralem Licht wie z.B. Halogenbeleuchtung, Xenon, Weißlicht-LED und dergleichen, z.B. zwei Filter im Beleuchtungs- und Detektionsstrahlengang oder, bei der Verwendung monochromer Lichtquellen wie z.B. LED oder Laser, z.B. einen Filter im Detektionstrahlengang aufweisen.

Die offenbarte Vorrichtung kann bei diesem Aspekt der vorliegenden Erfindung beispielsweise so ausgeführt sein, dass der Kammerkörper der Reaktionskammer, der den Chip mit der Detektionsfläche enthält, dichtend auf einem Kammerträger so aufgebracht ist, dass ein Probenraum mit einem Kapillarspalt zwischen dem Kammerträger und der Detektionsfläche bzw. dem Substrat des Chips gebildet wird, der temperaturregulierbar und durchflusssteuerbar ist. Diese Art der Konstruktion erlaubt es, Reaktionen, die effizient nur in bestimmten Temperaturbereichen ablaufen, durchzuführen und die Reaktionsprodukte vorzugsweise gleichzeitig durch Chip-basierte Experimente zu detektieren.

Die offenbarte Vorrichtung kann somit zum Beispiel verwendet werden, um nahezu gleichzeitig durch PCR Nukleinsäuremoleküle zu vervielfältigen und die PCR-Produkte durch Chip-basierte Experimente nachzuweisen. Die Probenflüssigkeit für derartige Reaktionen kann durch entsprechende Mittel zur Temperaturregulation effizient beheizt und gekühlt werden.

Die offenbarte Vorrichtung kann auch verwendet werden, um eine reverse Transkription-Reaktion durchzuführen und auf diese Weise mRNA in cDNA zu überführen und die Reaktionsprodukte durch Hybridisierung am Chip zu charakterisieren. Auf diese Weise kann ein so genanntes "gene profiling" durchgeführt werden. Da sowohl die reverse Transkription als auch die Hybridisierung in einer Kammer durchgeführt werden, ist dieses Verfahren äußerst zeiteffizient und wenig störanfällig.

Mit der offenbarten Vorrichtung kann ferner zum Beispiel ein Restriktionsverdau bei gewünschten Temperaturen in der Reaktionskammer durchgeführt werden und die Reaktionsprodukte durch Hybridisierung an einem Chip charakterisiert werden. Die Denaturierung der Enzyme kann durch Hitzedeaktivierung erfolgen. Damit ermöglicht die offenbarte Vorrichtung eine zeiteffiziente Restriktions-Fragment-Längen-Polymorphismus-Kartierung (RFLP-Kartierung).

Mit einer offenbarten Vorrichtung kann ferner zum Beispiel auch eine Ligation durchgeführt werden.

Des Weiteren kann mit der offenbarten Vorrichtung das Schmelzverhalten von Nukleinsäuretarget-/Nukleinsäuresonde-Komplexen in Abhängigkeit von der Temperatur untersucht werden.

Offenbarte Vorrichtungen können ferner verwendet werden, um das Bindungsverhalten von Proteinen in Abhängigkeit von der Temperatur durchzuführen. Zum Beispiel kann auf diese Weise getestet werden, ob Antikörper nach Erhitzen über einen längeren Zeitraum noch in der Lage sind, ihre entsprechenden Antigene zu binden. Voraussetzung hierfür ist, dass in diesem Fall der Chip nicht durch Nukleinsäuremoleküle, sondern durch die entsprechenden Proteine bzw. Peptide funktionalisiert ist.

Der Kammerkörper der Reaktionskammer der offenbarten Vorrichtung bei diesem Aspekt der vorliegenden Erfindung besteht vorzugsweise aus Materialien wie Glas, Kunststoff und/oder Metallen wie Edelstahl, Aluminium und Messing. Zu seiner Herstellung können beispielsweise Spritzguss-geeignete Kunststoffe verwendet werden. Unter anderem sind Kunststoffe wie Makrolon, Nylon, PMMA und Teflon denkbar. Alternativ kann der Reaktionsraum zwischen Substanzbibliothekenträger und Kammerträger aber auch durch Septen abgeschlossen sein, die beispielsweise ein Befüllen des Reaktionsraums mittels Spritzen ermöglichen. Bei einer bevorzugten Ausführungsform besteht der Kammerkörper aus optisch durchlässigen Materialien wie Glas, PMMA, Polycarbonat, Polystyrol und/oder Topas. Dabei ist die Wahl der Materialien dem Verwendungszweck der Vorrichtung anzupassen. Zum Beispiel sind die Temperaturen, denen die Vorrichtung ausgesetzt sein wird, bei der Wahl der Materialien zu beachten.

Soll die Vorrichtung zum Beispiel für die Durchführung einer PCR verwendet werden, dürfen z.B. nur solche Kunststoffe eingesetzt werden, die über längere Zeiträume bei Temperaturen wie 95°C stabil sind.

Der Kammerträger besteht vorzugsweise aus Glas, Kunststoffen, Silizium, Metallen und/oder keramischen Materialien. Zum Beispiel kann der Kammerträger aus Aluminiumoxid-Keramiken, Nylon und/oder Teflon bestehen.

Bei einer Ausführungsform besteht der Kammerträger aus transparenten Materialien wie Glas und/oder optisch durchlässigen Kunststoffen, z.B. PMMA, Polycarbonat, Polystyrol oder Acryl.

Vorzugsweise ist der Kammerträger und/oder das Substrat mit in der offenbarten Vorrichtung integrierten Mitteln zur Temperaturbeaufschlagung verbunden und sollte dann bevorzugt aus Materialien bestehen, die gut wärmeleitend sind. Derartige wärmeleitfähige Materialien bieten den wesentlichen Vorteil, dass sie ein homogenes Temperaturprofil über die gesamte Fläche des Reaktionsraums gewährleisten und somit temperaturabhängige Reaktionen wie beispielsweise eine PCR in der gesamten Reaktionskammer homogen, mit hoher Ausbeute und mit hoher Genauigkeit steuerbar bzw. regelbar durchführbar sind.

Somit bestehen der Kammerträger und/oder das Substrat bei einer bevorzugten Ausführungsform aus Materialien mit einer hohen Wärmeleitfähigkeit, vorzugsweise mit einer Wärmeleitfähigkeit im Bereich von 15 bis 500 $Wm^{-1}K^{-1}$, besonders bevorzugt im Bereich von 50 bis 300 $Wm^{-1}K^{-1}$ und am meisten bevorzugt im Bereich von 100 bis 200 $Wm^{-1}K^{-1}$, wobei die Materialien üblicherweise nicht optisch transparent sind. Beispiele für geeignete wärmeleitfähige Materialien sind Silizium, keramische Materialien wie Aluminiumoxid-Keramiken und/oder Metalle wie Edelstahl, Aluminium oder Messing.

Bei einer besonders bevorzugten Ausführungsform besteht das Substrat aus Materialien mit einer hohen Wärmeleitfähigkeit wie beispielsweise keramischen Materialien. Bei dieser Ausführungsform wird das Substrat mit einem Mittel zur Temperaturbeaufschlagung verbunden, wodurch die gegenüberliegende Seite, der Kammerträger, aus einem Material ausgeführt sein kann, dass nicht über eine ausgeprägte Wärmeleitfähigkeit verfügt, wie z.B. einem Material, das auch für den übrigen Kammerkörper eingesetzt wird. Somit wird im Gegensatz zu einer Ausführungsform, bei der sowohl der Kammerträger als auch das Substrat aus einem kostenintensiven Material besteht, bei dieser Ausführungsform ein kostenintensives Bauteil eingespart.

Ist das Substrat bzw. der Träger der offenbarten Vorrichtung ein Substrat im Wesentlichen aus keramischen Materialien, so werden vorzugsweise Aluminiumoxid-Keramiken eingesetzt. Beispiele für derartige Aluminiumoxid-Keramiken sind die Keramiken A-473, A-476 sowie A-493 der Firma Kyocera (Neuss, Deutschland). Die Keramiken unterscheiden sich im Wesentlichen im jeweiligen Anteil an Aluminiumoxid (A-473: 93%, A-476: 96% und A-493: 99,%) sowie in ihrer Oberflächenrauigkeit. Besonders bevorzugt werden Aluminium-Oxid-Keramiken eingesetzt, die eine möglichst geringe Oberflächenrauigkeit aufweisen.

Vorzugsweise ist der Kammerträger und/oder das Substrat auf seiner Rückseite, d.h. der der Reaktionskammer abgewandten Seite mit ggf. miniaturisierten Temperaturfühlern und/oder Elektroden versehen bzw. weist dort Heizerstrukturen auf, so dass ein Temperieren der Probenflüssigkeit sowie eine Durchmischung der Probenflüssigkeit durch einen induzierten elektroosmotischen Fluss möglich ist.

Die Temperaturfühler können beispielsweise als Nickel-Chrom-Dünnfilm-Widerstandstemperaturfühler ausgeführt sein.

Die Elektroden können beispielsweise als Gold-Titan-Elektroden und insbesondere als Quadrupol ausgeführt sein.

Die Mittel zur Temperaturbeaufschlagung können vorzugsweise so gewählt werden, dass ein schnelles Erhitzen und Abkühlen der Flüssigkeit im Kapillarspalt möglich ist. Unter schnellem Erhitzen und Abkühlen wird dabei verstanden, dass durch die Mittel zur Temperaturbeaufschlagung Temperaturänderungen in einem Bereich von 0,2°K/s bis 30°K/s, vorzugsweise von 0,3°K/s bis 15°K/s, besonders bevorzugt von 0,5°K/s bis 12° K/s und am meisten bevorzugt von 2°K/s bis 10°K/s vermittelt werden können. Vorzugsweise können durch die Mittel zur Temperaturbeaufschlagung auch Temperaturänderungen von 5°K/s bis 11°K/s vermittelt werden.

Die Mittel zur Temperaturbeaufschlagung, zum Beispiel in Form von Heizern, können beispielsweise als Nickel-Chrom-Dünnfilm-Widerstandsheizer ausgeführt sein.

Für weitere Einzelheiten über die Spezifikation und Dimension der Temperaturfühler, Mittel zur Temperaturbeaufschlagung und der Elektroden wird auf den Inhalt der internationalen Patentanmeldung WO 01/02094 verwiesen.

Der Chip bzw. das Substrat kann vorzugsweise aus Borofloat-Gläsern, Quarzglas, einkristallinem CaF$_2$, Saphir-Scheiben, Topas, PMMA, Polycarbonat und/oder Polystyrol bestehen. Die Wahl der Materialien ist ebenfalls am späteren Verwendungszweck der Vorrichtung bzw. des Chips auszurichten. Wird der Chip zum Beispiel für die Charakterisierung von PCR-Produkten verwendet, dürfen nur solche Materialien eingesetzt werden, die einer Temperatur von 95°C standhalten können.

Die Chips sind bevorzugt durch Nukleinsäuremoleküle, insbesondere durch DNA- oder RNA-Moleküle funktionalisiert. Sie können aber auch durch Peptide und/oder Proteine, wie zum Beispiel Antikörper, Rezeptormoleküle, pharmazeutisch aktive Peptide und/oder Hormone funktionalisiert werden.

Erfolgt die Detektion eines zeitlichen Verlaufs von Niederschlagsbildungen auf der Detektionsfläche im Dunkelfeld, d.h. werden Änderungen der Streuungseigenschaften der Detektionsfläche detektiert, sind bevorzugte Materialien für den Substanzbibliothekenträger optische transparente Materialien wie Glas, besonders bevorzugt Borosilikatglas, und transparente Polymere wie z.B. PMMA, Polycarbonat und/oder Acryl; für den Kammerträger optisch transparente Materialien, wie Glas und/oder Kunststoffe, und insbesondere optisch nicht transparente Materialien wie Silizium, keramische Materialien; und für die Reaktionskammer Kunststoffe wie Makrolon, PMMA, Polycarbonat, Teflon und dergleichen, Metalle wie Edelstahl, Aluminium, und/oder Messing sowie Glas. Alternativ kann bei Durchführung von Dunkelfeldmessungen der offenbarten Vorrichtung der Kammerträger aus optisch transparenten Materialien bestehen, während der Substanzbibliothekenträger aus nicht transparenten Materialien besteht.

Bei einer Ausführungsform umfasst die offenbarte Vorrichtung zusätzlich mindestens einen Fluidbehälter, der mit der Reaktionskammer verbunden ist, sowie gegebenenfalls eine Einheit zur Steuerung des Be- und Entladens der Reaktionskammer mit Fluiden. Unter Fluiden werden im Rahmen der vorliegenden Erfindung Flüssigkeiten oder Gase verstanden. Die Verbindung der Fluidbehälter mit der Reaktionskammer kann beispielsweise wie in der internationalen Patentanmeldung WO 01/02094 ausgeführt sein.

Bei einer weiteren Ausführungsform umfasst die offenbarte Vorrichtung eine mit dem Detektionssystem verbundene Einheit zur Verarbeitung von durch das optische System aufgenommenen Signalen. Diese Kopplung von Detektiereinheit und Verarbeitungseinheit, die die Umwandlung der Reaktionsergebnisse in das Analyseergebnis gewährleistet, erlaubt u.a. den Einsatz der offenbarten Vorrichtung als Handgerät beispielsweise in der medizinischen Diagnostik.

Vorzugsweise umfasst die Vorrichtung ferner eine Schnittstelle für externe Rechner. Dies erlaubt die Übertragung von Daten zur Speicherung außerhalb der Vorrichtung.

Bei einer weiteren bevorzugten Ausführungsform ist die Reaktionskammer über eine Datenmatrix individuell gekennzeichnet. Dazu wird bei der Herstellung der offenbarten Vorrichtung ein Datensatz in einer Datenbank gespeichert, welcher Informationen über die Substanzbibliothek, die Durchführung der Nachweisreaktion und dergleichen enthält. So kann der Datensatz insbesondere Informationen über die Anordnung der Sonden auf dem Array sowie Informationen darüber enthalten, wie die Auswertung am vorteilhaftesten zu erfolgen hat. Der Datensatz bzw. die Datenmatrix kann ferner Informationen über das Temperatur-Zeit-Regime einer ggf. durchzuführenden PCR zur Vervielfältigung der Zielmoleküle enthalten. Der so erstellte Datensatz erhält vorzugsweise eine Nummer, die in Form der Datenmatrix auf der Halterung angebracht wird. Über die in der Datenmatrix verzeichnete Nummer kann dann ggf. beim Auslesen der Substanzbibliothek der angelegte Datensatz aufgerufen werden. Schließlich kann die Datenmatrix von der Temperatursteuerungs- bzw. -regeleinheit und anderen Controllern wie z.B. einer Steuerung für die Be- und Entfüllung der Reaktionskammer über die Fluidbehälter ausgelesen werden und so eine automatische Durchführung von Vervielfältigungs- und Nachweisreaktion gewährleistet werden.

Bei einer weiteren Ausführungsform der vorliegenden Offenbarung wird eine Vorrichtung zur Vervielfältigung und zum Nachweis von Nukleinsäuren bereit gestellt, die ebenfalls eine wie vorstehend beschriebene Temperatursteuerungs- und/oder -regeleinheit; sowie eine wie vorstehend beschriebene Reaktionskammer enthält, die einen Träger mit einer Detektionsfläche, auf der eine Substanzbibliothek immobilisiert ist, umfasst, wobei die Temperatur in der Reaktionskammer durch die Temperatursteuerungs- und -regeleinheit steuerbar und/oder regelbar ist.

Anstelle eines optischen Systems weist die Vorrichtung bei diesem Aspekt der vorliegenden Offenbarung jedoch elektrische Kontakte an den jeweiligen Array-Spots auf. Diese elektrischen Kontakte können beispielsweise über Elektroden kontaktiert werden. Durch die Bildung eines metallischen Niederschlags auf den Array-Elementen zur Signalverstärkung der an die Substanzbibliothek gebundenen, beispielsweise Gold-markierten Targets wächst auf den Array-Spots, an denen eine derartige Bindung stattgefunden hat, ein leitfähiges Material auf, das zu einer Veränderung des lokalen Widerstands führt. Somit ist über die elektrischen Kontakte an den Array-Spots eine Modulation bestimmter elektrischer Parameter wie beispielsweise Leitfähigkeit, Widerstand und Permeabilität möglich.

Vorzugsweise weist der Substanzbibliothekenträger der offenbarten Vorrichtung bei diesem Aspekt der vorliegenden Erfindung eine dreidimensionale Struktur auf, die zum Beispiel durch Erhebungen, Grund- und/oder Durchgangsbohrungen gebildet wird, wodurch der Effekt in der Verschmelzung des aufwachsenden leitfähigen Materials durch den sich bildenden Niederschlag mit den elektrischen Kontakten und die daraus resultierende Änderung elektrischer Parameter unterstützt wird.

Die auf der optischen Detektion basierende offenbarte Vorrichtung weist vorzugsweise eine Fluidikeinheit zum Austausch von Lösungen in der Reaktionskammer, eine Temperatursteuer- oder -regeleinheit, sowie ein für dynamische Messungen geeignetes optisches System auf. Die vorstehend genannten Einheiten können gegebenenfalls gerätetechnisch durch die Realisierung entsprechender Schnittstellen auch separat ausgeführt sein.

Substanzbibliotheken, die auf den Microarrays oder Chips immobilisiert sind, sind insbesondere Proteinbibliotheken wie Antikörper-, Rezeptorprotein- oder Membranproteinbibliotheken, Peptidbibliotheken wie Rezeptorligandenbibliotheken, Bibliotheken pharmakologisch aktiver Peptide oder Bibliotheken von Peptidhormonen, und Nukleinsäurebibliotheken wie DNA- oder RNA-Molekülbibliotheken. Besonders bevorzugt sind es Nukleinsäurebibliotheken.

Wie bereits vorstehend erwähnt, ist die Substanzbibliothek vorzugsweise in Form eines Microarrays, besonders bevorzugt mit einer Dichte von 2 bis 10.000 Array-Spots pro $cm^2$, am meisten bevorzugt mit einer Dichte von 50 bis 5000 Array-Spots pro $cm^2$, auf dem Substanzbibliothekenträger bzw. der Detektionsfläche immobilisiert.

Ferner ist bei sämtlichen vorstehend beschriebenen Ausführungsformen der offenbarten Vorrichtung eine Voramplifikation des zu analysierenden Materials nicht erforderlich. Von dem aus Bakterien, Blut oder anderen Zellen extrahierten Probenmaterial können gezielte Teilbereiche mit Hilfe einer PCR (Polymerase-Kettenreaktion) insbesondere in Anwesenheit der offenbarten Vorrichtung bzw. des Substanzbibliothekenträgers wie in DE 102 53 966 beschrieben amplifiziert und an den Träger hybridisiert werden. Dies stellt eine wesentliche Vereinfachung des Arbeitsaufwands dar.

Die offenbarten Vorrichtungen sind somit insbesondere zur Verwendung bei der parallelen Durchführung von Amplifikation der zu analysierenden Zielmoleküle durch PCR und Nachweis durch Hybridisierung der Zielmoleküle mit dem Substanzbibliothekenträger geeignet.

Bei einem weiteren unabhängigen Aspekt der vorliegenden Erfindung wird ein Mikroarray, umfassend ein Substrat bzw. einen Träger mit darauf auf vorbestimmten Bereichen immobilisierten molekularen Sonden, zur Verfügung gestellt, wobei das Substrat bzw. der Träger im Wesentlichen keramische Materialien umfasst.

Unter einem Trägerelement bzw. Träger bzw. Substanzbibliothekenträger bzw. Substrat wird im Rahmen der vorliegenden Erfindung ein Festkörper verstanden, auf dem das Sonden-Array aufgebaut ist.

Die Gesamtheit aus in Array-Anordnung auf dem Substrat bzw. der Detektionsfläche abgelegten Molekülen bzw. der in Array-Anordnung auf dem Substrat bzw. der Detektionsfläche abgelegten Substanzbibliothek und dem Träger bzw. Substrat wird auch als Mikroarray oder Sondenarray bezeichnet.

Substanzbibliotheken, die auf den offenbarten Substraten immobilisiert sind, sind insbesondere Proteinbibliotheken wie Antikörper-, Rezeptorprotein- oder Membranproteinbibliotheken, Peptidbibliotheken wie Rezeptorligandenbibliotheken, Bibliotheken pharmakologisch aktiver Peptide oder Bibliotheken von Peptidhormonen, und Nukleinsäurebibliotheken wie DNA- oder RNA-Molekülbibliotheken. Besonders bevorzugt sind es Nukleinsäurebibliotheken.

Wie bereits vorstehend erwähnt, ist die Substanzbibliothek vorzugsweise in Form eines Mikroarrays, besonders bevorzugt mit einer Dichte von 2 bis 10.000 Array-Spots bzw. Array-Elemente pro $cm^2$, am meisten bevorzugt mit einer Dichte von 50 bis 5000 Array-Spots bzw. Array-Elemente pro $cm^2$, auf dem Substrat bzw. dem Substanzbibliothekenträger bzw. der Detektionsfläche immobilisiert.

Ein Substrat, das vorzugsweise im Wesentlichen aus keramischen Materialien besteht, bietet den wesentlichen Vorteil, dass derartige Substrate eine gute Wärmeleitfähigkeit aufweisen und somit bei der Durchführung von temperaturabhängigen Reaktionen wie beispielsweise einer PCR ein homogenes Temperaturprofil über die gesamte Fläche des Reaktionsraums, der üblicherweise auf einer Seite durch das Substrat mit der darauf angeordneten Substanzbibliothek begrenzt wird, gewährleisten. Somit können temperaturabhängige Reaktionen mit hoher Ausbeute und hoher Genauigkeit steuerbar bzw. regelbar durchgeführt werden. Dabei ist es bevorzugt, dass das Substrat des Mikroarrays mit Mitteln zur Temperaturbeaufschlagung verbunden ist, wie sie vorstehend bereits im Zusammenhang mit den offenbarten Vorrichtungen beschrieben wurden.

Somit besteht das Substrat des offenbarten Mikroarrays vorzugsweise im Wesentlichen aus keramischen Materialien mit einer hohen Wärmeleitfähigkeit, vorzugsweise einer Wärmeleitfähigkeit im Bereich von 15 bis 500 $Wm^{-1}K^{-1}$, besonders bevorzugt im Bereich von 50 bis 300 $Wm^{-1}K^{-1}$ und am meisten bevorzugt im Bereich von 100 bis 200 $Wm^{-1}K^{-1}$.

Unter keramischen Materialien versteht man im Rahmen der vorliegenden Erfindung insbesondere Materialien, welche durch Glühen bzw. Brennen von feinteiligen, meist feuchten, geformten Tonen bei Temperaturen von beispielsweise 1000 bis 1500°C hergestellt worden sind.

Vorzugsweise besteht umfassen die keramischen Materialien einen Bestandteil, d.h. ein keramisches Material. Es sind aber bei alternativen Ausführungsformen auch Gemische aus keramischen Materialien denkbar, die beispielsweise als Laminate eingesetzt werden können.

Vorzugsweise umfasst das Substrat im Wesentlichen ein oder mehrere Aluminiumoxid-Keramiken. Bei einer besonders bevorzugten Ausführungsform besteht das Substrat zu mindestens 90%, vorzugsweise mindestens 95% und besonders bevorzugt zu mindestens 99,5% aus einem oder mehreren Aluminiumoxid-Keramiken. Beispiele für derartige Aluminiumoxid-Keramiken sind die Keramiken A-473, A-476 sowie A-493 der Firma Kyocera (Neuss, Deutschland).

Ferner ist es bevorzugt, dass das Substrat eine Oberflächenrauigkeit von 0,04 $\mu$m bis 0,12 $\mu$m, vorzugsweise von 0,06 $\mu$m bis 0,1 $\mu$m und besonders bevorzugt von etwa 0,08 $\mu$m aufweist.

Ferner kann es in Abhängigkeit der Konstruktion der Vorrichtung, in die das Mikroarray eingebracht ist, sowie in Abhängigkeit von der verwendeten Detektionsmethode, bevorzugt sein, dass das Substrat optisch transparent ist.

Die optische Transparenz des Substrats kann zum einen unabhängig vom Material dadurch gewährleistet werden, dass das Substrat entsprechend geringe Dicke aufweist.

Zum anderen können optisch transparente Materialien wie Glaskeramiken eingesetzt werden. Vorzugsweise werden Glaskeramiken verwendet, die nicht zu grosse Brechwertunterschiede zwischen Glas und Kristallphase aufweisen. Ein Beispiel für ein optisch transparentes Material ist Ceran® (Schott; Deutschland). Ebenfalls möglich ist die Verwendung von Lithium-Alumosilicat-Glaskeramiken.

Bei einer weiteren bevorzugten Ausführungsform sind die molekularen Sonden über einen Polymer-Linker, beispielsweise eine modifizierte Silanschicht auf der Substratoberfläche immobilisiert. Ein derartiger polymerer Linker kann der Derivatisierung der Substratoberfläche und somit der Immobilisierung der molekularen Sonden dienen. Im Falle einer kovalenten Anbindung der Sonden finden Polymere, z.B. Silane, Verwendung, die mit reaktiven Funktionalitäten wie Epoxiden oder Aldehyden funktionalisiert bzw. modifiziert sind. Des Weiteren ist dem Fachmann auch die Aktivierung einer Oberfläche durch Isothiocyanat, Succinimidester und Imidoester bekannt. Hierfür werden häufig aminofunktionalisierte Oberflächen entsprechend derivatisiert. Ferner können durch die Zugabe von Kupplungsreagenzien, wie z.B. Dicyclohexylcarbodiimid, entsprechende Immobilisierungen der molekularen Sonden gewährleistet werden.

Die molekularen Sonden sind insbesondere ausgewählt aus Antikörpern, Protein-Rezeptoren, Peptiden und Nukleinsäuren.

Für den Aufbau des Mikroarrays wird auf die vorhergehende Beschreibung im Zusammenhang mit den offenbarten Vorrichtungen verwiesen.

Bei einem weiteren Aspekt der vorliegenden Offenbarung wird ein Verfahren zur Herstellung eines wie vorstehend beschriebenen erfindungsgemäßen Mikroarrays zur Verfügung gestellt, welches das Immobilisieren von molekularen Sonden auf vorbestimmten Bereichen der Substratoberfläche eines Substrats umfasst, das im Wesentlichen aus keramischen Materialien besteht.

Vorzugsweise besteht das Substrat im Wesentlichen aus Aluminiumoxid-Keramiken.

Bei einer weiteren bevorzugten Ausführungsform des offenbarten Verfahrens zur Herstellung eines Mikroarrays wird die Substratoberfläche mit einem Polymer-Linker beschichtet und die molekularen Sonden über den Polymer-Linker auf der Substratoberfläche immobilisiert. Besonders bevorzugt ist der Polymer-Linker eine modifizierte Silanschicht.

Das offenbarte Mikroarray kann in beliebigen Verfahren zum qualitativen und/oder quantitativen Nachweis von Target-Molekülen in einer Probe durch molekulare Wechselwirkung zwischen Target-Molekülen und den molekularen Sonden auf dem Mikroarray verwendet werden. Insbesondere wird das offenbarte Array zur Untersuchung des genotypischen und/oder physiologischen Zustands von Zellen verwendet.

Des Weiteren ist das offenbarte Mikroarray insbesondere in den vorstehend beschriebenen erfindungsgemäßen Verfahren zur Vervielfältigung und/oder zum Nachweis von Nukleinsäuren einsetzbar.

Ein weiterer Aspekt der vorliegenden Offenbarung betrifft die Verwendung eines Substrats zur Herstellung eines Mikroarrays mit auf vorbestimmten Bereichen des Substrats immobilisierten molekularen Sonden, wobei das Substrat im Wesentlichen keramische Materialien umfasst. Die keramischen Materialien können bei diesem Aspekt der vorliegenden Erfindung so wie vorstehend im Rahmen der Beschreibung des erfindungsgemäßen Mikroarrays beschrieben ausgeführt sein.

Selbstverständlich sind Ausführungsformen, die für bestimmte Aspekte der vorliegenden Erfindung beschrieben sind, auch mögliche Alternativen für die jeweils anderen Aspekte der vorliegenden Erfindung, auch wenn nicht explizit darauf hingewiesen ist.

Im Folgenden werden besonders bevorzugte Ausführungsformen der vorliegenden Erfindung beschrieben:

In Abbildung 1 ist eine bevorzugte Konfiguration einer offenbarten Vorrichtung schematisch dargestellt. Eine Reaktionskammer (6) bzw. ein Mikroreaktor (6) mit einer auf einer Detektionsfläche angeordneten Substanzbibliothek (5) ist in geeigneter Weise in der Vorrichtung gehalten. Die Kammer (6) ist elektrisch und fluidisch mit einer Temperatur-Prozessierungseinheit (1.1) und einer Fluid-Prozessierungseinheit (1.2) verbunden, so dass eine Temperatursteuerung bzw. -regelung und/oder der Austausch von Flüssigkeiten oder Gasen zwischen Kammer (6) und den Behältern der Fluid-Prozessierungseinheit (1.2) realisierbar ist. Durch ein Identifikationssystem (2.5), wie z.B. ein Barcodereader, ist die Reaktionskammer (6) einem in einem Prozess-Controller (3) definierten Prozessablauf zugeordnet. Somit können zur Prozessierung eines Tests die entsprechenden Parameter an die Prozessierungseinheiten (1.1) und (1.2) übergeben werden. In Abhängigkeit der testspezifischen Erfordernisse ist das optische System durch den Prozess-Controller (3) während oder nach der fluidischen und/oder thermischen Prozessierung ansteuerbar, so dass ein, vorzugsweise dynamischer, optischer Detektionsvorgang erfolgen kann.

Bei der in Abbildung 1 gezeigten Ausführungsform erfolgt die Detektion durch Detektion der Änderung der Transmissionseigenschaften der Probenbereiche in einer Durchlichteinrichtung mittels einer Leuchtquelle (2.4), die durch eine Beleuchtungsoptik (2.3) auf die Probe mit einer Intensitätsverteilungshomogenität von vorzugsweise mindestens 30% beleuchtbar und mittels einer Detektionsoptik (2.2) auf einen geeigneten Detektor (2.1), wie z.B. eine Kamera, abbildbar sind. Die so erzeugten Bilder sind im Detektionssystem oder im Prozess-Controller (3) digitalisierbar und in letzterem auch analysierbar. Alternativ sind die erzeugten Bilder auch über eine Datenschnittstelle (4) an externe Computer oder Netzwerke von Computern weiterleitbar.

Der modulartige Aufbau dieser Komponenten erlaubt die Prozessierung verschiedener Tests mit verschiedenen Temperatur-, Fluidführungs- und Detektionsparametern. Durch eine Verbindung mit externen Datenbanken über die Datenschnittstelle (4) können jederzeit neue Prozessführungsparameter-Protokolle implementiert werden. Wenn bestimmte Tests insbesondere im Bereich der medizinischen Diagnostik ohne eine Datenanbindung nach außen erfolgen sollen, ist die Schnittstelle (4) vorzugsweise für den Nutzer nicht zugänglich, so dass alle benötigten Prozessführungsprotokölle als auch die notwendigen Analysen im Prozess-Controller (3) realisiert werden.

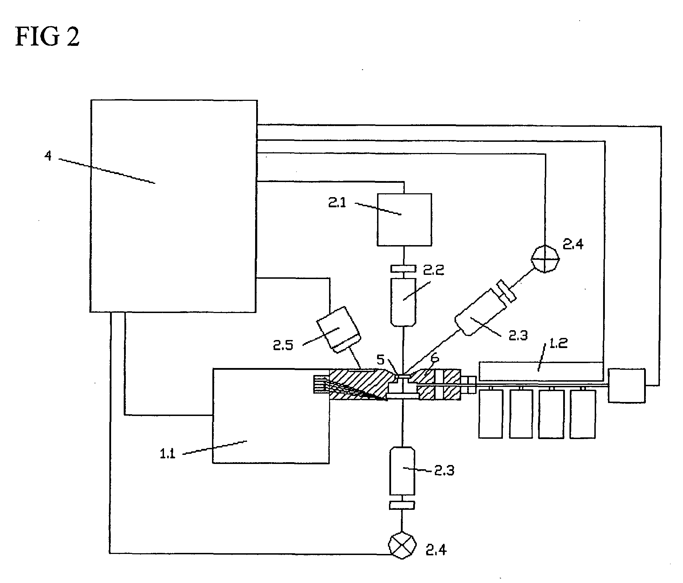

Bei einer alternativen, in Abbildung 2 dargestellten Ausführungsform der offenbarten Vorrichtung ist die Prozesssteuerung über einen externen Computer durchführbar. Über die Schnittstelle (4) ist die Verteilung der Datenflüsse auf die einzelnen technischen Einheiten bzw. Module der offenbarten Vorrichtung realisierbar. Bei dieser Ausführungsform sind ferner optional verschiedene Beleuchtungssysteme (2.3) und (2.4) dargestellt, mit denen die Detektionsfläche von unten und schräg oben beleuchtbar ist. Somit ist es bei dieser Ausführungsform möglich, verschiedene Detektionsmethoden je nach der Art des durch einen Detektor zur Identifizierung (2.5), z.B. einen Datenmatrix-Reader ermittelten Chips zu aktivieren. Beispielsweise ist bei dieser Ausführungsform der zeitliche Verlauf der Änderung von optischen Transmissionseigenschaften sowie der Änderung von im Auflicht-Dunkelfeld induzierbaren Streuungseigenschaften detektierbar.

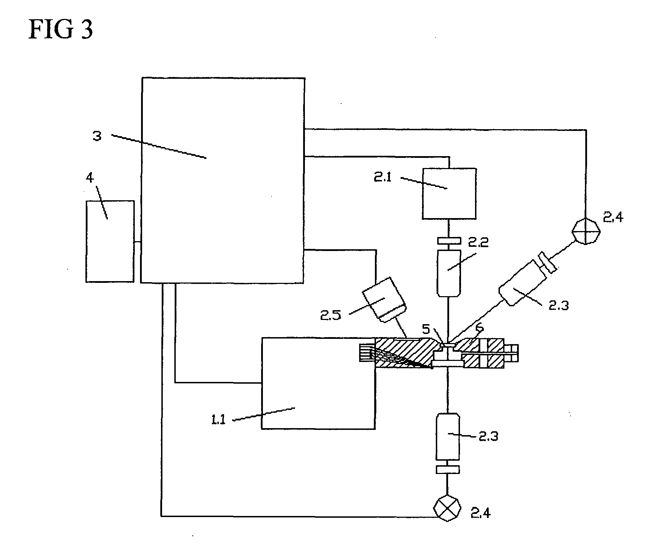

Bei einer weiteren Ausführungsform der vorliegenden Erfindung weist die offenbarte Vorrichtung keine Fluidprozessierungseinheit auf (siehe Abbildung 3). Diese Ausführungsform ist vorteilhaft, falls es für bestimmte Tests nicht erforderlich ist, während der Prozessierung Flüssigkeiten auszutauschen und eine Befüllung des Reaktionsraumes auch vor Einbringung der Reaktionskammer (6) in die offenbarte Vorrichtung in einer externen manuellen oder automatisierten Befüllstation erfolgen kann.

Die folgenden Beispiele dienen der Erläuterung der Erfindung und sollen in nicht einschränkender Weise ausgelegt werden.

Beispiele

In den folgenden Beispielen wird im Wesentlichen auf die mit der offenbarten Vorrichtung durchführbaren Detektionsmethoden eingegangen. Die Kontrolle thermischer Parameter und der Austausch von Flüssigkeiten kann mittels dem Fachmann bekannter und auch kommerziell verfügbarer Module technisch realisiert werden. Dabei ist in der technischen Realisation vor allem die Ansteuerung und Datenübertragung von besonderem Interesse, die insbesondere durch schwachstromige Verbindungen wie TTL-Pegel sowie mittels beschriebener Transferprotokolle erfolgen kann.

Beispiel 1:

Optische Detektion kinetisch verlaufender Signalverstärkungsreaktionen

Die optische Detektion kinetisch verlaufender Signalverstärkungsreaktionen erfolgt bei den folgenden Varianten des Ausführungsbeispiels durch die Aufnahme von Modulationen bestimmter optischer Parameter, insbesondere von Transmission, Reflexion, Streuung, Beugung und Interferenz.

Durch die Anlagerung von Silber während einer Silberfällungsreaktion an z.B. mit Goldpartikeln markierten Targetmolekülen nach einer spezifischen Hybridisierung mit auf festen Oberflächen immobilisierten oder synthetisierten Probenmolekülen wachsen Schichten auf, welche die optischen Eigenschaften des Gesamtsystems signifikant verändern. Die Signalverstärkung von Gold-markierten Targetmolekülen durch Silber ist z.B. in der internationalen Patentanmeldung WO 02/02810 ausführlich beschrieben, auf deren Inhalt hiermit ausdrücklich Bezug genommen wird.

a) Transmission

Die Detektion der Änderung von Transmissionseigenschaften erfolgt in einer wie in Abbildung 1 gezeigten Durchlichtanordnung. Die Lichtquelle (2.4) ist dabei als eine weißlichtquelle wie z.B. eine Halogenlampe, Weißlicht-LED oder als eine schmalbandige Lichtquelle wie z.B. LED, Laserdiode, organische LED ausgeführt. Das optische System (2.3) bestehend aus Linsen, Spiegeln und Filtern ist derart ausgeführt, dass eine gleichmäßige Beleuchtung der zu detektierenden Substratfläche mit mindestens 70% Beleuchtungsintensitäts-Homogenität erfolgt.

Die Substratfläche wird durch ein weiteres optisches System (2.2) bestehend aus Linsen, Spiegeln und Filtern auf einen Detektor abgebildet. Dieser kann eine zweidimensionale CCD- oder CMOS-Kamera oder eine sich bewegende Zeilenkamera sein.

Die Änderung der Transmissionseigenschaften wird als Sequenz aufgezeichnet und die Kurven der Abnahme der Transmission an verschiedenen Punkten verglichen. Abhängig von der Steigung der Transmissionsänderung an den jeweiligen Array-Spots können die Targetkonzentrationen, wie in der internationalen Patentanmeldung WO 02/02810 beschrieben, quantitativ bestimmt werden.

Die Reaktionskammer ist aus einem für die bei der Detektion verwendeten Wellenlängen transparenten Substrat ausgeführt. Beispielsweise ist die Reaktionskammer bei der Verwendung von Licht im sichtbaren Wellenlängenbereich aus Glas und bei der Verwendung von Licht im infraroten Bereich aus Silizium.

b) Reflexion

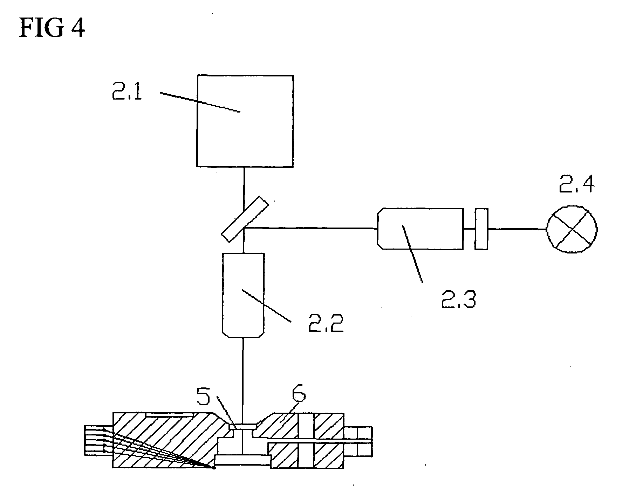

Eine Detektion der Änderung von Reflexionseigenschaften erfolgt bei diesem Ausführungsbeispiel in einer wie in Abbildung 4 dargestellten Auflichtanordnung. Dabei ist die Optik (2.3) derart ausgestaltet, dass eine gleichmäßige Beleuchtung der zu detektierenden Substratfläche mit mindestens 70% Beleuchtungsintensitätshomogenität gewährleistet ist. Die Substratfläche wird durch das optische System (2.2) auf einen Detektor abgebildet. Dieser ist eine zweidimensionale Kamera wie z.B. eine CCD- oder CMOS-Kamera oder eine sich bewegende Zeilenkamera.

Die Änderung der Reflexionseigenschaften wird als Sequenz aufgezeichnet und die Kurven der Zunahme der Reflexion an verschiedenen Punkten verglichen. Abhängig von der Steigung der Reflexionsänderung an den jeweiligen Array-Spots können die Targetkonzentrationen, wie in der internationalen Patentanmeldung WO 02/02810 beschrieben, quantitativ bestimmt werden. Die Berechnung erfolgt invers zu der bei der Detektion der Transmissionsänderung, da bei der Anreicherung mit Silberpartikeln an Targetmolekülen die lokale Reflektivität steigt.

Die Reaktionskammer ist aus einem für die bei der Detektion verwendeten Wellenlängen transparenten Substrat ausgeführt. Beispielsweise ist die Reaktionskammer bei der Verwendung von Licht im sichtbaren Wellenlängenbereich aus Glas und bei der Verwendung von Licht im infraroten Bereich aus Silizium.

c) Streuung

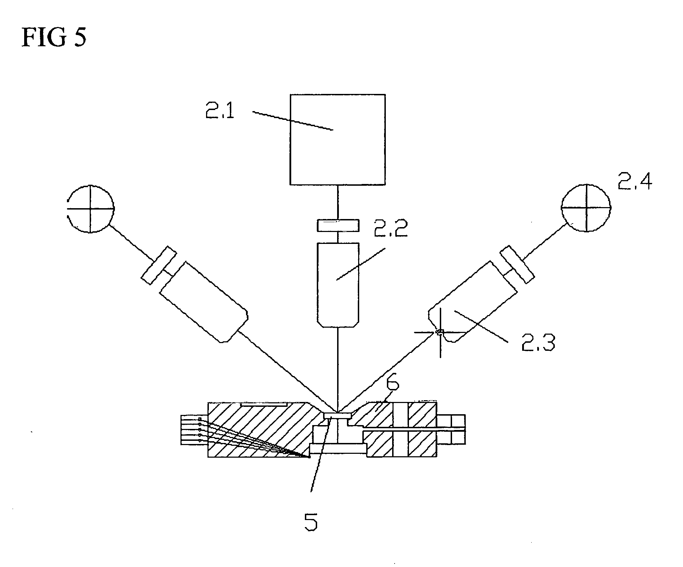

Eine Detektion der Änderung von Streueigenschaften erfolgt bei diesem Beispiel in einer wie in Abbildung 5 dargestellten Dunkelfeldanordnung. Das optische System (2.3) bestehend aus Linsen, Spiegeln und Filtern ist derart ausgeführt, dass eine gleichmäßige Beleuchtung der zu detektierenden Substratfläche mit mindestens 60%, vorzugsweise mindestens 70% Beleuchtungsintensitätshomogenität erfolgt. Die Substratfläche wird durch das optische System (2.2) auf einen Detektor abgebildet. Dieser kann eine zweidimensionale Kamera (z.B. CCD, CMOS) oder eine sich bewegende Zeilenkamera sein.

Die Änderung der Streueigenschaften wird als Sequenz aufgezeichnet und die Kurven der Zunahme der Streuung an verschiedenen Punkten verglichen. Abhängig von der Steigung der Reflexionsänderung an den jeweiligen Array-Spots können die Targetkonzentrationen, wie in der internationalen Patentanmeldung WO 02/02810 beschrieben, quantitativ bestimmt werden. Die Berechnung erfolgt invers zu der bei der Detektion der Transmissionsänderung, da bei der Anreicherung mit Silberpartikeln an Targetmolekülen die Anzahl lokaler Streuzentren und damit die Streuung steigt.

Wird der Anstieg entsprechend klassifizierter Probenbereiche ausgewertet, kann bei vorzugsweise homogener Temperaturverteilung in der Reaktionskammer ein exakter qualitativer und quantitativer Nachweis der hybridisierten Targetmoleküle durchgeführt werden.

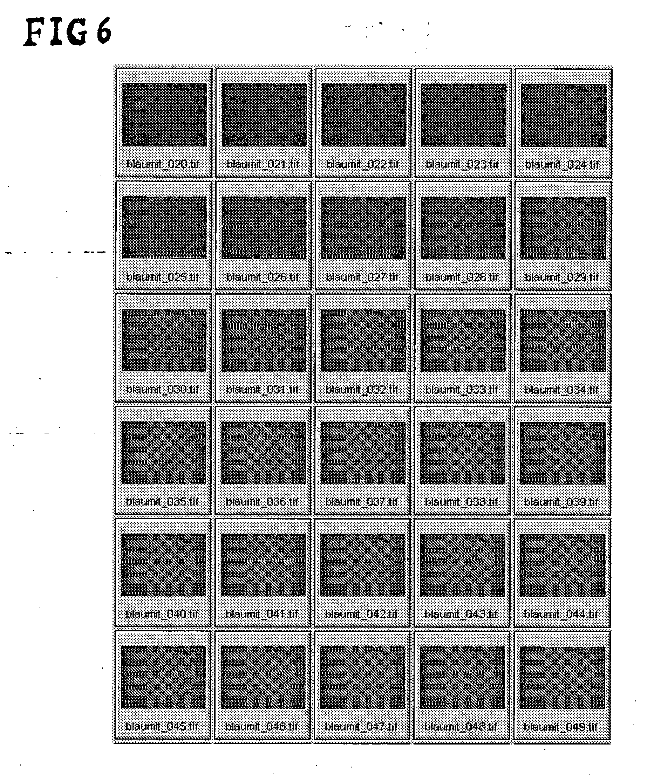

In Abbildung 6 ist eine typische Bildfolge für die Detektion der Silberaufwachsreaktion nach der Hybridisierung spezifischer Goldmarkierter Targetmoleküle auf einer DNA-basierten Substanzbibliothek dargestellt.

Die Reaktionskammer ist aus einem für die bei der Detektion verwendeten Wellenlängen transparenten Substrat ausgeführt. Beispielsweise ist die Reaktionskammer bei der Verwendung von Licht im sichtbaren Wellenlängenbereich aus Glas und bei der Verwendung von Licht im infraroten Bereich aus Silizium.

Beispiel 2:

Elektrische Detektion kinetisch verlaufender Signalverstärkungsreaktionen

Die elektrische Detektion kinetisch verlaufender Signalverstärkungsreaktionen erfolgt bei den folgenden Varianten des Ausführungsbeispiels durch die Aufnahme von Modulationen bestimmter elektrischer Parameter, insbesondere von Leitfähigkeit, Widerstandsänderungen und Permeabilität.

Durch die Anlagerung von Silber während einer Silberfällungsreaktion an z.B. mit Goldpartikeln markierten Targetmolekülen nach einer spezifischen Hybridisierung mit auf festen Oberflächen immobilisierten oder synthetisierten Probenmolekülen wachsen Schichten auf, welche die optischen Eigenschaften des Gesamtsystems signifikant verändern. Die Signalverstärkung von Gold-markierten Targetmolekülen durch Silber ist z.B. in der internationalen Patentanmeldung WO 02/02810 ausführlich beschrieben, auf deren Inhalt hiermit ausdrücklich Bezug genommen wird.

Bei der in diesem Ausführungsbeispiel der vorliegenden Offenbarung beschriebenen Vorrichtung sind die einzelnen Array-Spots elektrisch kontaktierbar und die dort erzeugten Signale parallel zu einem Messgerät abführbar.

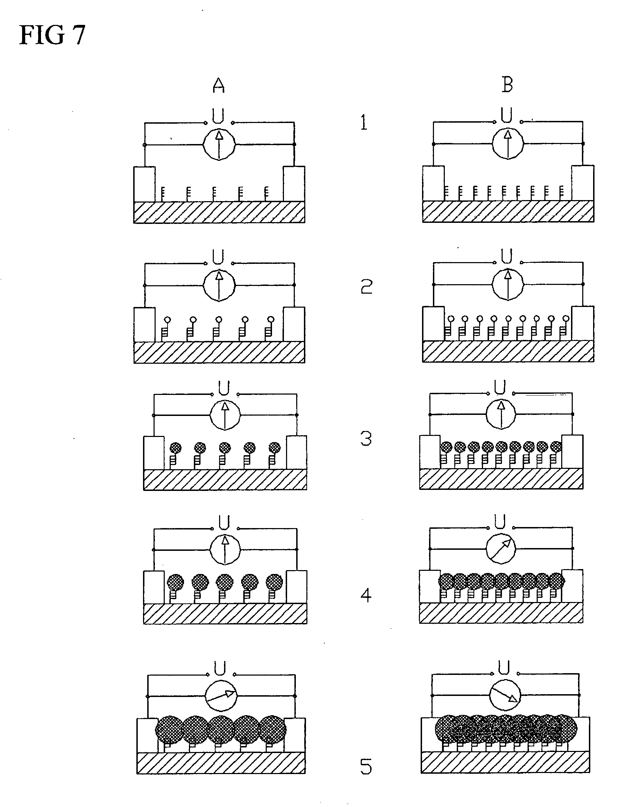

Zur Messung der Widerstandsänderung an den jeweiligen Array-Spots sind die Array-Spots wie in Abbildung 7 dargestellt über Elektroden elektrisch kontaktiert. Durch die Verschmelzung mit aufwachsendem leitfähigem Material, wie z.B. Silber, ist eine Veränderung des lokalen Widerstandes messbar. Durch dreidimensionale Strukturen auf der Detektionsfläche wie z.B. Erhebungen, Grund- und Durchgangsbohrungen, wird der Effekt der Verschmelzung und die daraus resultierende Widerstandsänderung unterstützt.

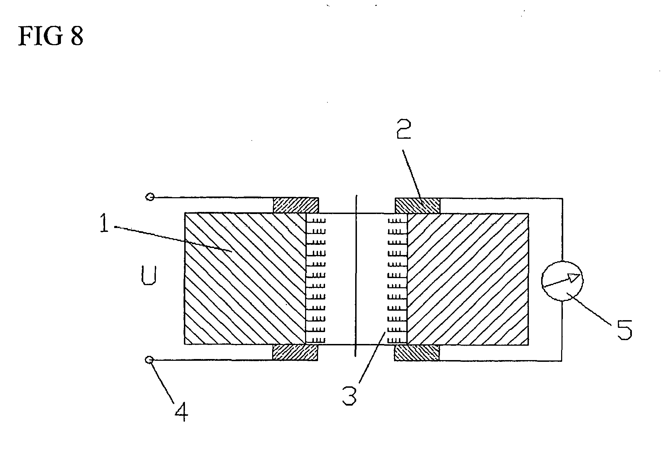

Abbildung 8 zeigt schematisch eine Anordnung zur Messung dieser Widerstandsänderungen an einem einzelnen dreidimensionalen Array-Spot.

Beispiel 3:

Amplifikation und Nachweis von Nukleinsäuren in dünnen Reaktionskammern

Eine Möglichkeit, das Signal in der Lösung im Vergleich zum Signal auf bzw. in der Oberfläche gering zu halten, besteht in der Verwendung besonders dünner Reaktionskammern. Die durch spezifische Bindung von Sonde und Target bedingte Anreicherung der Targetmoleküle auf der Array-Oberfläche ermöglicht es, bei entsprechend dünner Gestaltung der Reaktionskammer, die Signale auf dem Sonden-Array auch mit einer herkömmlichen das gesamte Volumen ausleuchtenden bzw. abbildenden Fluoreszenzoptik darzustellen.

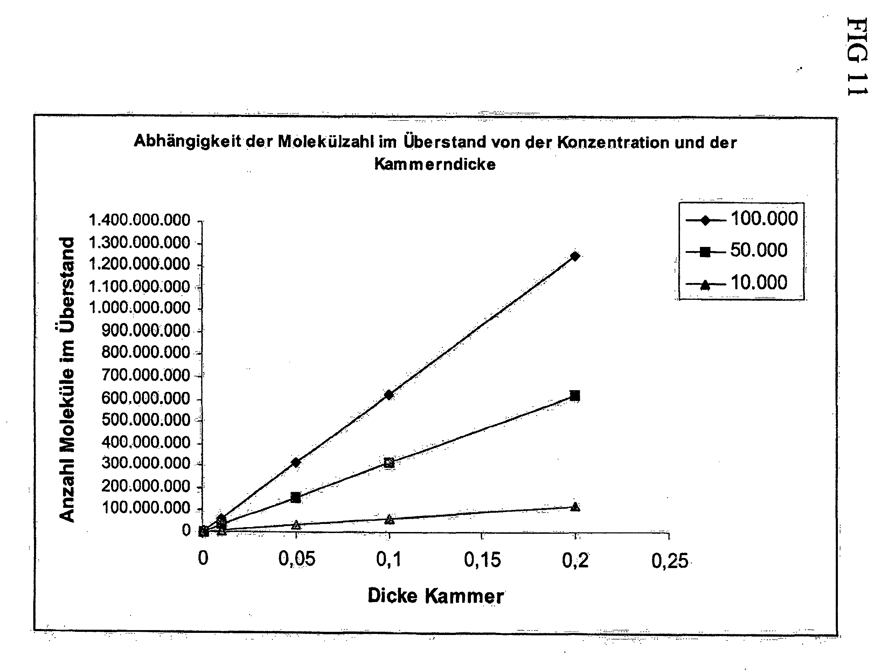

In Abbildung 11 ist der Zusammenhang zwischen Schichtdicke bzw. Kammerdicke und der Zahl der im Überstand unmittelbar über dem Spot befindlichen, mit einem Fluoreszenzmarker versehenen Moleküle gezeigt.

Es wurde ermittelt, dass die im Rahmen der vorliegenden Erfindung eingesetzten Mikroarrays bei Verwendung eines Detektors mit 8 Bit-Auflösung wie beispielsweise eines Epifluoreszenzmikroskops (Zeiss, Jena, Deutschland) die in der folgenden Tabelle dargestellte Charakteristik der Signalentwicklung zeigen.

| Anzahl Moleküle/Spot | Signalintensität | Konzentration der Lösung (pM) |
|---|---|---|
| 1.000.000.000 | 255 | 10.000.000 |
| 1.000.000.000 | 255 | 1.000.000 |
| 833.333.333 | 212,5 | 100.000 |
| 666.666.667 | 170 | 10.000 |
| 500.000.000 | 127,5 | 1.000 |
| 333.333.333 | 85 | 100 |
| 166.666.667 | 42,5 | 10 |
| 0 | 0 | 1 |
| 0 | 0 | 0,1 |

Die Anzahl der auf einem Spot bzw. Array-Element mit typischer Größe vorliegenden gebundenen Moleküle bei Sättigung der Oberfläche kann mit etwa $10^9$ angenommen werden, dies entspricht einem Raumbedarf pro Molekül von 10 nm$^2$.

In eine offenbarte Vorrichtung mit einer Dicke der Reaktionskammer von 100 $\mu$m und einem geeigneten Sonden-Array wurde eine ein fluoreszenzmarkiertes Target (Cy3) enthaltende Lösung eingefüllt. Die Konzentration des Targets betrug 10 nM, als geeigneter Puffer wurde 2x SSPE mit 0.1%SDS verwendet. Nach fünfminütiger Inkubation bei 30°C wurde ein Fluoreszenzbild aufgenommen. Hierzu wurde ein Epifluoreszenzmikroskop (Zeiss, Jena, Deutschland) verwendet und zwar ein Axioskop, das mit einer PCO-CCD-Kamera ausgestattet ist und eine Quecksilberdampflampe zur Anregung der Fluoreszenz aufweist. Sukzessive wurde die Temperatur in Schritten von 5 °C bis auf95°C erhöht. Nach jedem Inkrement wurde ebenfalls fünf Minuten inkubiert und ein Bild aufgenommen. Die Bilddaten wurden mit der Software Iconoclust® (Clondiag) ausgewertet.

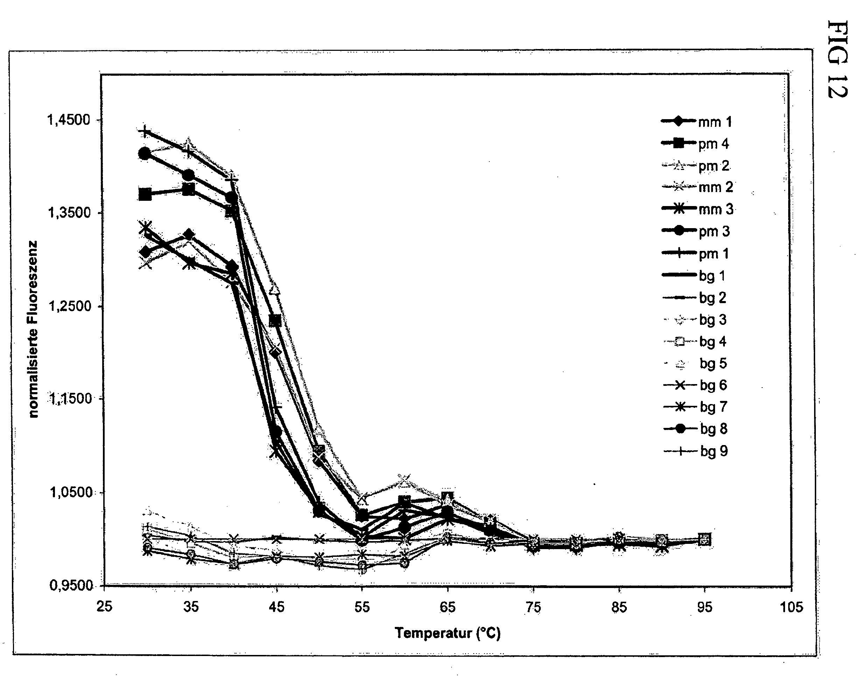

Nach Abzug von temperaturabhängigen Effekten sind die Daten in Abbildung 12 veranschaulicht. Abbildung 12 zeigt jeweils eine charakteristische Schmelzkurve für die unterschiedlichen Sonden. Ferner wird der spezifische Verlauf der Duplex-Dissoziation in Abhängigkeit von der Temperatur und der jeweiligen Sequenz deutlich.

Beispiel 4:

Nachweis von Nukleinsäuren während der Amplifikationsreaktion durch zyklische Detektion von Hybridisierungsereignissen

Da die Amplifikation in der offenbarten Vorrichtung vorzugsweise mit Hilfe exponentieller Amplifikationstechniken wie PCR erfolgt, ist es zur Quantifizierung der in der Probe enthaltenen Targetmenge erforderlich, eine kontinuierliche Detektion der Signalzunahme auf dem Sonden-Array zu ermöglichen.

Es wurde derselbe Assay wie in Beispiel 3 beschrieben durchgeführt.

Als zu amplifizierendes Targetmaterial wurde genomische DNA aus *E. coli* in zwei unterschiedlichen Verdünnungen eingesetzt. Nach einer bestimmten Anzahl von Zyklen wurden auf in Beispiel 3 beschriebene Art und Weise Bilder aufgenommen. Diese wurden einer Analyse mit der Software Iconoclust® (Clondiag, Jena) unterzogen.

Die Ergebnisse sind in Abbildung 10 veranschaulicht. Deutlich zu erkennen ist der zeitliche Versatz der Amplifikation zwischen den zwei unterschiedlichen eingesetzten Verdünnungen. Ebenso ist deutlich der Unterschied zwischen Match- und Mismatch-Signalen zu erkennen.

Beispiel 5:

Hybridisierung und anschließender Nachweis der Hybridisierung mittels enzymatischer Fällung eines organischen Moleküls auf einer Keramikoberfläche

In der Literatur sind Mutationen in mindestens 6 Genen des humanen Genoms beschrieben, welche als Risikofaktoren für die Entstehung von Thrombosen identifiziert wurden.

Die Firma Ogham (Münster) hat einen diagnostischen Assay zum Nachweis von Thrombose-relevanten Mutationen in humaner DNA entwickelt. Anhand eines für diesen Test eingesetzten Oligonukleotidsondenmodellsystems sollte der Prinzipnachweis für eine Hybridisierung und den anschließenden Nachweis durch enzymatische Präzipitation eines organischen Farbstoffes auf einer Keramikoberfläche erbracht werden.

a) Herstellung des Sondenarrays

Sämtliche in diesem Beispiel für die Herstellung des Arrays und für die Hybridisierung verwendeten Oligonukleotide, wurden von der Firma Ogham Diagnostics (Münster, Deutschland) zur Verfügung gestellt.

Auf einer epoxidierten Keramikoberfläche (A-493, KYOCERA Fineceramics GmbH, Neuss) mit einer Objektträgergröße von 75 mm x 25 mm wurden mit einem MicroGrid II-Arrayer (Fa. BioRobotics) 25 Oligonukleotide (Sonden) an definierten Stellen, den sog. Arrayelementen, abgelegt und kovalent immobilisiert. Die Sonden teilen sich auf sich in Paare, wobei die erste jeweils den Wildtyp und die zweite die Mutation darstellt. Zusätzlich wurden Marken sowie Kontrollsonden auf das Array aufgebracht.

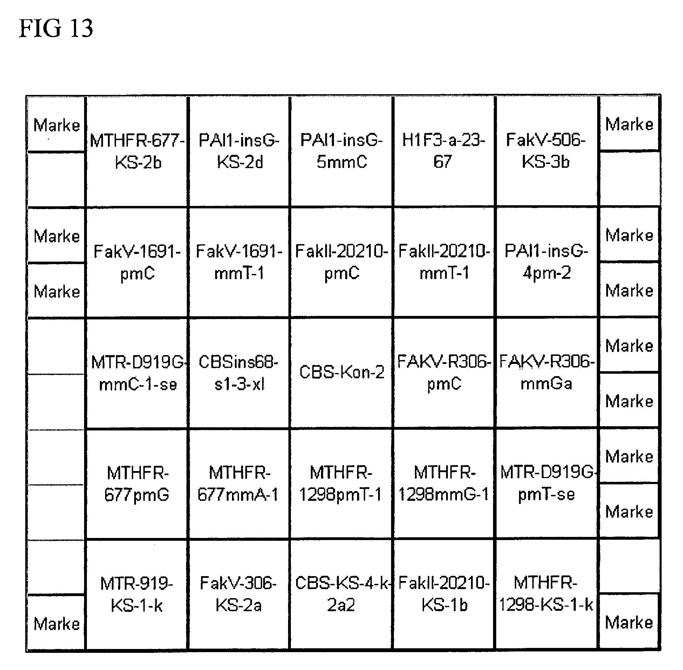

Ein einzelnes komplettes (rechteckiges) Sondenarray auf der Objektträger-Oberfläche bestand aus insgesamt 10 x 10 = 100 abgelegten Sonden und 12 Marken. Jede der 25 Oligonukleotid-Sonden wurde dabei in vierfacher Wiederholung auf dem Sondenarray abgelegt. Der Array-Aufbau ist in Abbildung 13 gezeigt. Die Sonden hatten einen Abstand von 0,18 mm, das gesamte Sondenarray bedeckte eine Fläche von 2,16 mm x 1,8 mm.

Das Ablegen der Sonden auf die Objektträger erfolgte aus einer jeweils 10 $\mu$M-Lösung der Oligonukleotide in 0,1 M Phosphatpuffer/2,2%-Natriumsulfat. Anschließend wurden die Sonden durch 30-minütiges Backen bei 60 °C kovalent mit den Epoxid-Gruppen auf der Keramikoberfläche verknüpft. Es folgte ein mehrteiliger Waschprozess in folgender Reihenfolge:

- 5 min in 600 ml $H_2O$ bidest + 600 $\mu$l Triton x 100
- 2 x 2 min in 600 ml $H_2O$ bidest + 60 $\mu$l HCL (konz.)

- 30 min in 100 mM KCl-Lösung
- 1 min in H$_2$O bidest spülen
- mit Druckluft trocknen

b) Hybridisierung und Konjugation der Sondenarrays im ArrayTube® (Clondiag)

Die von Ogham für die Hybridisierung in Form eines Gemisches von sechs verschiedenen Oligonukleotiden bereitgestellten Oligonukleotide wurden in einer Endkonzentration von 100pM und in einem Endvolumen von 50 μl in 6x SSPE-Puffer (52,59 g NaCl, 8,28 g NaH$_2$PO$_4$ x H$_2$O, 2,22 g EDTA x 2H$_2$O in 11H$_2$O bidest, auf pH 7,4 mit NaOH eingestellt)/0,005 % Triton aufgenommen.

Das Sondenarray wurde mit einem Hybri-slip (Z36.590-4, Sigma, Taufkirchen, Deutschland) abgedeckt, so dass über den Sondenarray ein Reaktionsraum mit einem Volumen von ca. 20 μl entstand.

Nach einer Denaturierung der Hybridisierungslösung (5 min 95 °C) wurde diese in den Reaktionsraum über dem Sondenarray gegeben und das Sondenarray anschließend unter leichtem Schütteln für 60 min bei 50°C inkubiert.

Danach wurde das Hybri-slip von der Keramikoberfläche abgezogen. Es schlossen sich zwei Waschschritte von je 5 min bei Raumtemperatur in 2xSSC/0.01 % Triton und 2xSSC an. Danach wurden 200 μl einer vorbereiteten Blockierungslösung (Milchpulver, Fa. Ogham, Münster, in 6xSSPE/0,005% Triton) auf das Sondenarray gegeben, dieses mit einem Deckglas abdeckt und anschließend 10 min bei Raumtemperatur inkubiert. Anschließend wurde das Deckglas entfernt und die Blockierungslösung mit 500 μl einer vorbereiteten Konjugationslösung (Streptavidin-poly HRP, N200, Pierce, Verdünnung 1:10.000 in 6xSSPE/0,005% Triton) abgespült. Nun wurden nochmals 200 μl der Konjugationslösung auf das Sondenarray gegeben, dieses wiederum mit einem Deckglas abgedeckt und für 15 min bei Raumtemperatur inkubiert. Nach dieser Zeit wurde das Deckglas abgenommen und das Array jeweils 5min bei RT in SSC/0,01 % Triton, 2x SSC und 0,2x SSC unter leichtem Schütteln gewaschen und anschließend im Luftstrom getrocknet.

c) Enzymatische Fällung, Detektion und Auswertung

Zum Nachweis der Hybridisierung wurden 100μl einer HRP-Substratlösung (TrueBlue, 71-00-64, KPL, Gaithersburg, USA; HRP = horseradish peroxidase) auf das Sondenarray gegeben, dieses mit einem Deckglas abgedeckt und anschließend 5 min bei RT inkubiert. Danach wurde das Deckglas vorsichtig abgenommen, das Array mit Bidest gespült und im Luftstrom getrocknet.

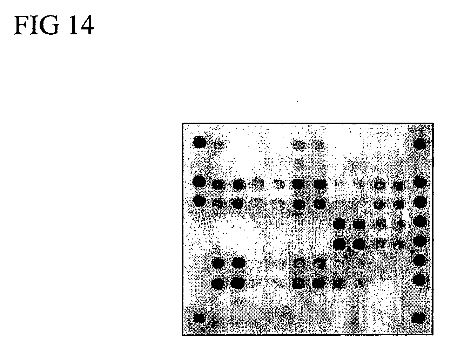

Die Detektion erfolgte im Durchlicht mit einem Mikroskop (Axioskop 2, Zeiss, Jena, Deutschland). Ein Bild des gefärbten Arrays ist in Abbildung 14 dargestellt.

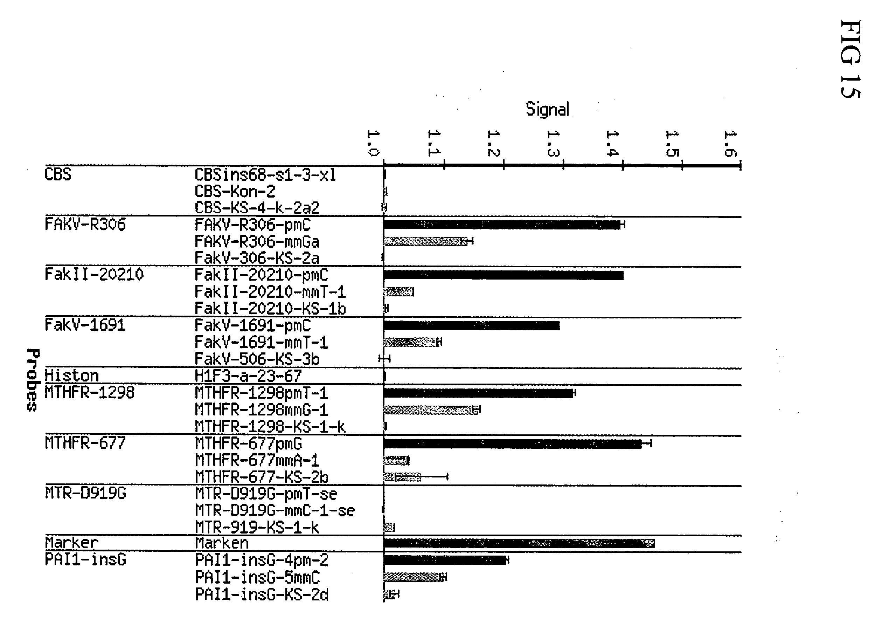

Das aufgenommene Bild wurde mit der Bildauswertungs-Software IconoClust (Clondiag) ausgewertet. Die hintergrundbereinigten Ergebnisse sind in Abb. 15 dargestellt. Die spezifische Hybridisierung aller sechs eingesetzten Oligonukleotide konnte erfolgreich nachgewiesen werden.

<u>Abbildungen</u>

Abbildung 1: Schematische Darstellung einer offenbarten Prozessierungs- und Detektionsvorrichtung zur Vervielfältigung und zum Nachweis von Nukleinsäuren.

Abbildung 2: Schematische Darstellung einer offenbarten Prozessierungs- und Detektionsvorrichtung zur Vervielfältigung und zum Nachweis von Nukleinsäuren mit einem externen Prozeßkontroller und je nach Individualisierung des Chips variabel wählbaren Detektionssystemen.

Abbildung 3: Schematische Darstellung einer offenbarten Prozessierungs- und Detektionsvorrichtung zur Vervielfältigung und zum Nachweis von Nukleinsäuren ohne Fluid-Prozessierungseinheit.

Abbildung 4: Auflichtanordnung der offenbarten Vorrichtung.

Abbildung 5: Dunkelfeldanordnung der offenbarten Vorrichtung.

Abbildung 6: Darstellung einer Bilderfolge zur Dokumentation des Aufwachsens von Silberpartikeln bei der Hybridisierung von Gold-markierten Targetmolekülen mit auf der Detektionsfläche in Form einer Substanzbibliothek immobilisierten Sondenmolekülen.

Abbildung 7: Schematische Darstellung einer offenbarten Prozessierungs- und Detektionsvorrichtung zur Vervielfältigung und zum Nachweis von Nukleinsäuren durch elektrische Detektion der Kinetik des Silberniederschlags an einem einzelnen mit Sondenmolekülen belegten planaren Array-Spot.

Abbildung 8: Schematische Darstellung einer offenbarten Prozessierungs- und Detektionsvorrichtung zur Vervielfältigung und zum Nachweis von Nukleinsäuren durch elektrische Detektion der Kinetik des Silberniederschlags an einem einzelnen mit Sondenmolekülen belegten mit Durchgangsbohrungen versehenen Array-Spot.

Abbildung 9: Verlauf der exponentiellen Amplifikation eines Targets bei unterschiedlichen Ausgangskonzentrationen von nachzuweisenden Nukleinsäuren in der Probe.

Dargestellt ist die Abhängigkeit der Konzentration der hybridisierten Target-Nukleinsäuren von der Zyklenzahl der Amplifikationsreaktion für unterschiedliche Ausgangskonzentrationen.

Abbildung 10: Entwicklung eines Hybridisierungssignals bei Verwendung eines 8-Bit-Detektors in Abhängigkeit von der Anzahl an Amplifikationszyklen sowie von der Ausgangskonzentration der Target-Nukleinsäuren in Lösung in Folge der exponentiellen Amplifikation (siehe Beispiel 4).

Abbildung 11: Darstellung des Zusammenhangs zwischen Kammerdicke und der Zahl der im Überstand unmittelbar über dem Spot befindlichen, mit einem Fluoreszenzmarker versehenen Moleküle. Die Linien stehen für unterschiedliche Konzentrationen von in Lösung befindlichen Targetmolekülen (in pM), berechnet für ein Volumen von 10.000 $\mu m^2$ (entsprechend der Fläche eines Spots bzw. Array-Elements) multipliziert mit der Dicke der Kammer.

Abbildung 12: Charakteristische Schmelzkurve für unterschiedliche Sonden und spezifischer Verlauf der Duplex-Dissoziation in Abhängigkeit von der Temperatur und der jeweiligen Sequenz (siehe Beispiel 3).

Abbildung 13: Schematische Darstellung der Anordnung der Sonden auf dem in Beispiel 5 eingesetzten Array. Ein Kästchen repräsentiert dabei vier redundante Sonden.

Abbildung 14: Sondenarray auf einer Keramik-Oberfläche nach Hybridisierung und Nachweis mittels enzymatischer Fällung eines organischen Moleküls (siehe Beispiel 5). Das Layout des Arrays ist in Abb. 13 dargestellt.

Abbildung 15: Ergebnisse der Hybridisierung eines Oligonukleotidgemisches gegen ein Sondenarray auf einer Keramikoberfläche mit anschließendem Nachweis durch enzymatische Fällung eines organischen Moleküls (siehe Beispiel 5).

Abbildung 16: Darstellung einer Ausführungsform des erfindungsgemäßen Keramiksubstrates zur definierten Temperaturführung in einer offenbarten Vorrichtung, einem sog. Assay- Prozessor.

Das Keramiksubstrat und der Assay-Prozessor weisen folgende Spezifikation auf:

| | |
|---|---|
| Abmessungen: | 12,0 mm x 12,4 mm x 0,635 mm |
| Trägermaterial: | Keramikträger |
| Sensor-/Heizerstrukturen: | Pt-Dünnfilmstrukturen |
| Passivierung: | glaspassiviert |
| Anschluss | Pt-Paste, siebgedruckt |
| Sensor | Pt 100, Kl. A; TK = 3850 ppm/K |
| Heizer | 125 Ohm $\pm$ 8 Ohm |

Ebenso sind Sensoren der Typen Pt 1000, Pt 10 000 usw. denkbar.

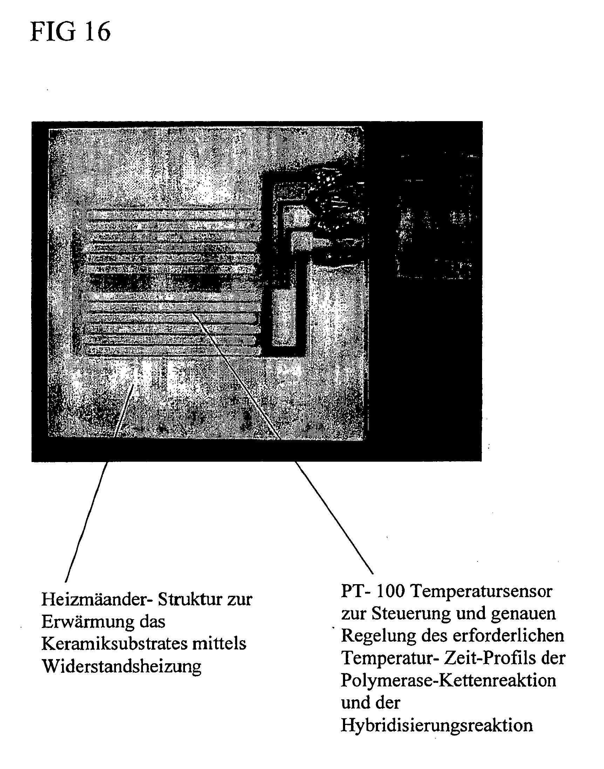

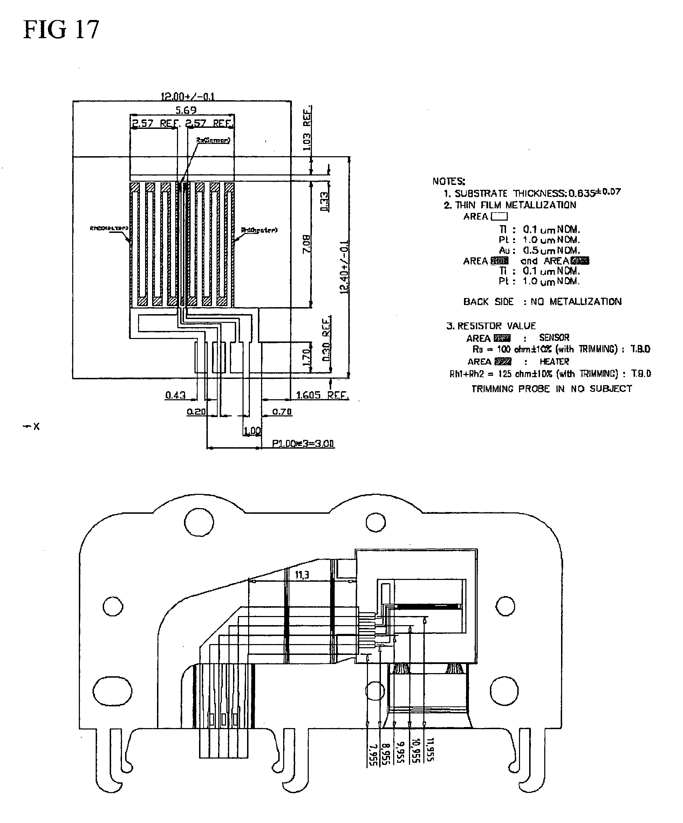

Abbildung 17: Schematische Darstellung des Assay-Prozessors aus Abbildung 16.

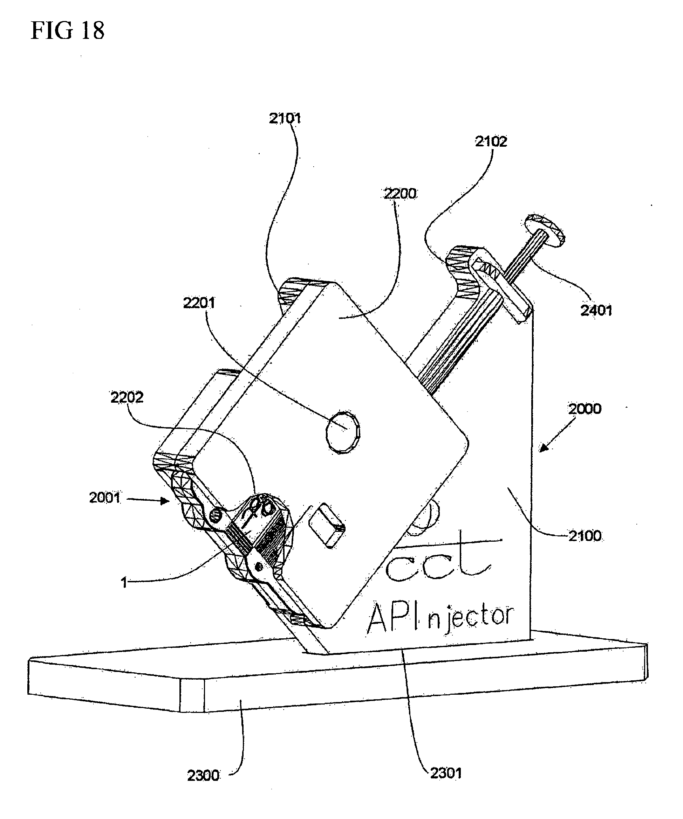

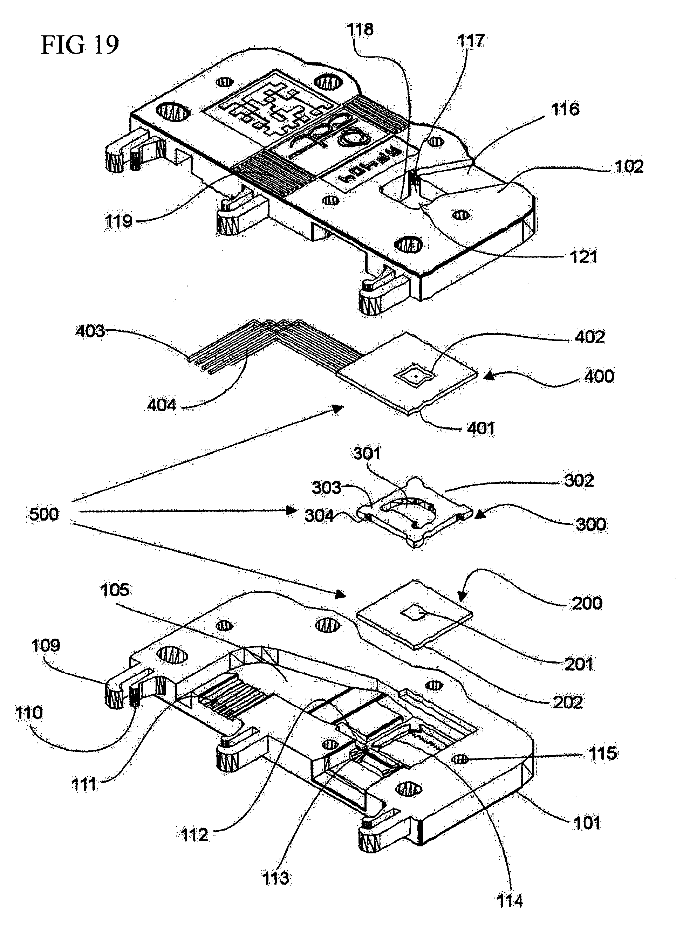

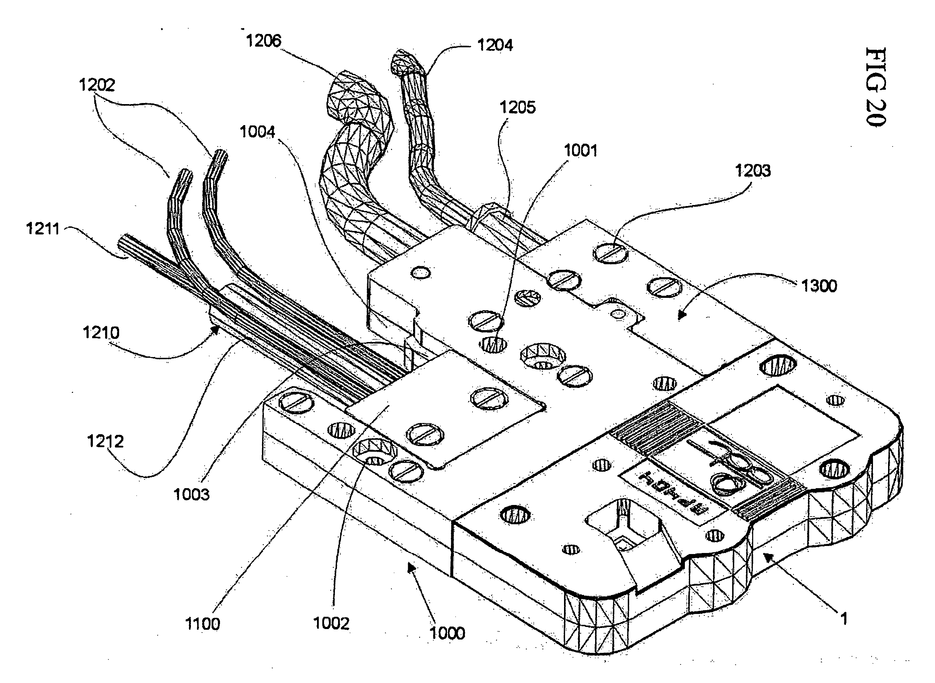

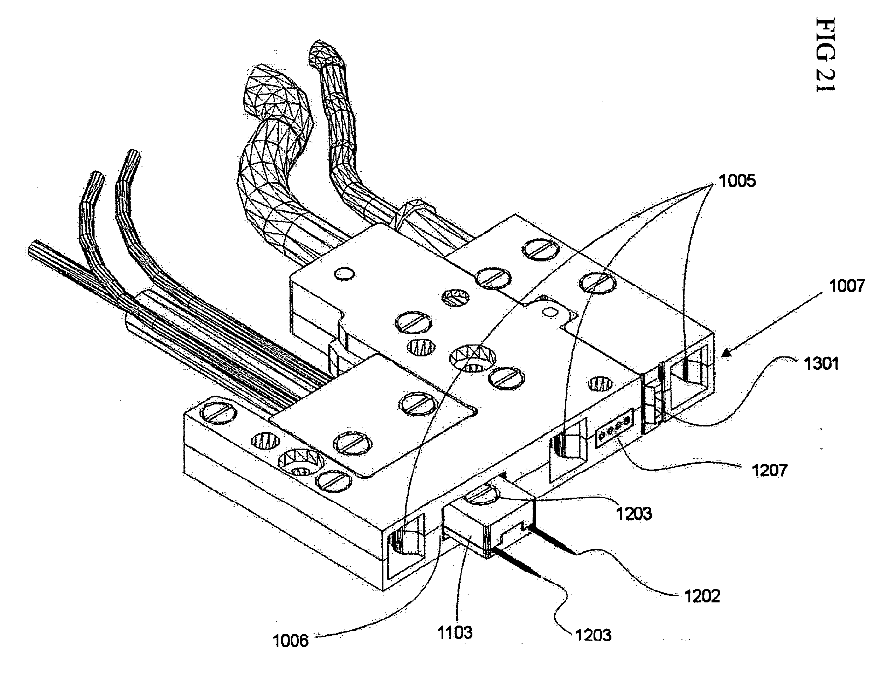

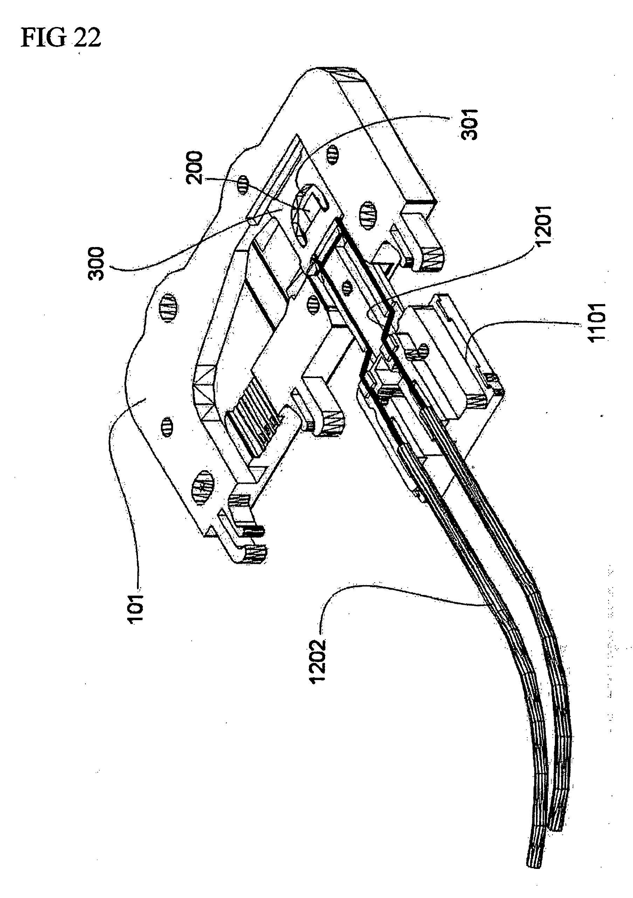

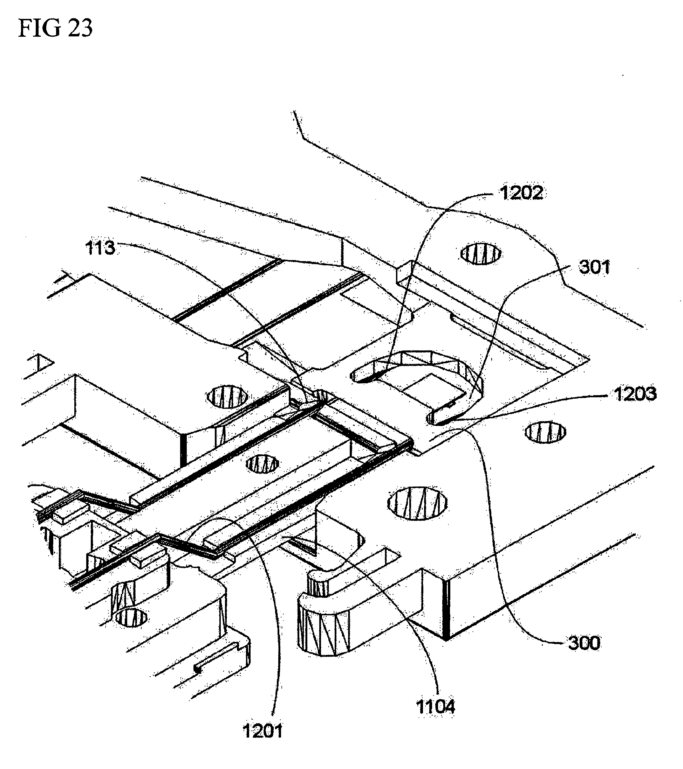

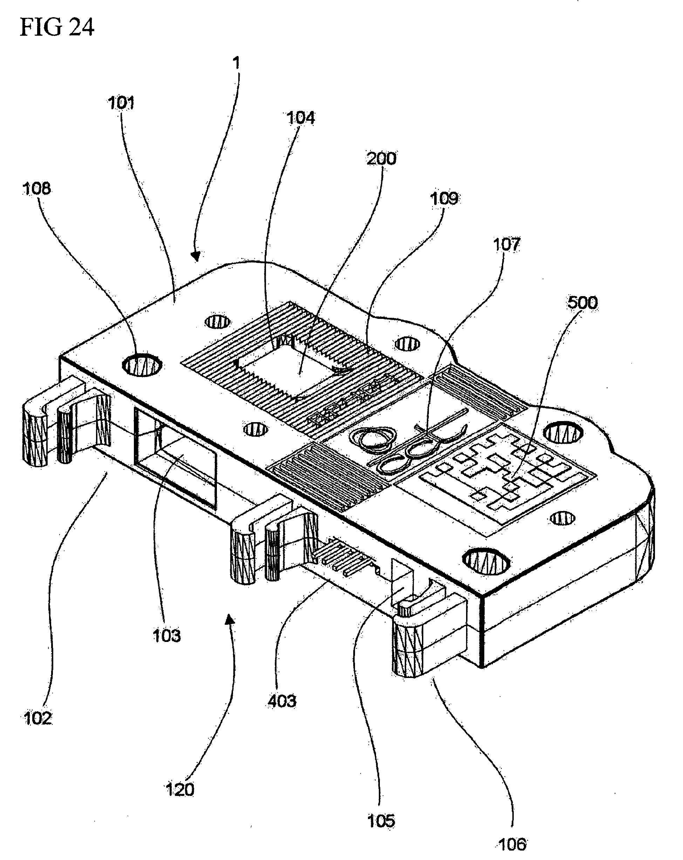

Abbildungen 18 bis 24: Schematische Darstellungen von bevorzugten Ausführungsformen der offenbarten Vorrichtungen.

Im Folgenden ist die Bezugszeichenliste für die Abbildungen 18 bis 24 angegeben:

| | |
|---|---|
| 1 | Kartusche |
| 101 | oberes Halterelement |
| 102 | unteres Halterelement |
| 103 | Aussparung zur Aufnahme einer Nase/Schiebers |
| 104 | Sichtfenster |
| 105 | Mediumanschluss für Kühlflüssigkeiten |
| 106 | Schnapphaken |
| 108 | Paßstiftlöcher |
| 403 | Kontakte für Heizelement |
| 120 | Medienanschlußseite |
| 109 | Antireflexionsstruktur |
| 600 | Datamatrix |
| 117 | Kühlkanalauslass |
| 118 | Widerlager |
| 400 | Bodenelement mit integriertem Heizer/Sensorsubstrat |
| 401 | Träger des integrierten Heizer/Sensorsubstrates |
| 402 | optisch durchlässige Aussparung |
| 403 | Kontakte für Heizer/Sensorsubstrat |
| 404 | Kontakte für Heizer/Sensorsubstrat |
| 300 | dichtendes, elastisches, wiederholbar durchstechbares Zwischenelement |

| 301 | umschlossene Aussparung in 300, definiert Reaktionsraum |
|---|---|
| 302 | Dehnleisten |
| 304 | Justierohren |
| 200 | Deckelelement |
| 202 | deckelndes Trägerelement |
| 201 | Substanzbibliothek bzw. Substanzbibliothek tragender Chip |
| 500 | Kerneinheit bzw. Kammer bzw. Reaktionskammer bzw. Probenkammer |
| 105 | Kühlkanal |
| 109 | Schnapphaken |
| 110 | Schnapphaken |
| 111 | Aussparung für Heiz/Sensorsubstratkontakte (403) |
| 112 | Kühlmitteleinlass |
| 116 | Kühlmittelauslass |
| 117 | Kühlmitteleinlass |
| 115 | Presspassung |
| 1000 | Stecker |
| 1100 | Schieber |
| 1103 | Führungsnase |
| 1001 | Paßstiftlöcher |
| 1002 | Befestigungslöcher |
| 1206 | Elektrokabel |
| 1207 | Elektroanschluss |
| 1202 | Befüllschläuche |
| 1210 | Schieberschubstange |
| 1211 | Gewinde |
| 1212 | Dämpfung |
| 1204 | Kühlmittelschlauch |
| 1205 | Kühlmittelanschluss |
| 1300 | Kühlkanal |
| 1201 | Einstechkanülen |
| 2000 | Handbefiillstation |
| 2106 | Schnellverschlußstecker |
| 2401 | Einwegspritze |
| 2404 | Kanüle |
| 2403 | Entlüftungskanüle |
| 2402 | Spitze einer Kanüle |
| 2403 | Spitze einer Kanüle |
| 2100 | Handbefüllstation-Grundkörper |
| 2200 | Handbefüllstation-Deckel |
| 2101 | Griffmulde |
| 2102 | Griffmulde |

**Patentansprüche**

**1.** Verfahren zur Amplifikation und zum qualitativen und quantitativen Nachweis von Nukleinsäuren in einer Probe, umfassend die folgenden Schritte:

a) Einbringen der Probe in eine Reaktionskammer, die zwischen einem Kammerträger und einem Mikroarray gebildet ist, wobei der Mikroarray ein Substrat mit darauf auf Array- Elementen immobilisierten Nukleinsäuresonden umfasst;
b) Amplifizieren der nachzuweisenden Nukleinsäuren in der Reaktionskammer mittels einer zyklischen Amplifikationsreaktion;
c) Detektieren einer Hybridisierung zwischen den nachzuweisenden Nukleinsäuren und den auf dem Substrat immobilisierten Nukleinsäuresonden,

wobei die nachzuweisenden Nukleinsäuren mit einem detektierbaren Marker versehen werden,
**dadurch gekennzeichnet, dass** die Detektion bei oder unterhalb einer Annealing-Temperatur eines Amplifikationszyklus während der zyklischen Amplifikationsreaktion erfolgt.

**2.** Verfahren nach Anspruch 1,
wobei die Annealing-Temperatur 40°C bis 75°C, optional 55°C bis 65°C und weiter optional etwa 60°C beträgt.

**3.** Verfahren nach Anspruch 1,
wobei eine Temperatur unterhalb der Annealing-Temperatur 25°C bis 50°C und optional 30°C bis 40°C beträgt.

**4.** Verfahren nach einem der vorhergehenden Ansprüche,
wobei bei jedem Amplifikationszyklus oder jedem zweiten Amplifikationszyklus oder jedem dritten Amplifikationszyklus oder in beliebigen anderen Intervallen detektiert wird.

**5.** Verfahren nach einem der vorhergehenden Ansprüche,
wobei die Detektion erfolgt, ohne dass Moleküle aus der Reaktionskammer entfernt werden, die nicht mit den auf dem Substrat immobilisierten Nukleinsäuren hybridisiert sind.

**6.** Verfahren nach einem der vorhergehenden Ansprüche,
wobei die Reaktionskammer ein Kapillarspalt zwischen dem Kammerträger und dem Mikroarray mit einer Dicke von höchstens 500 $\mu$m und optional mit einer Dicke im Bereich von 50 $\mu$m bis 100 $\mu$m ist.

**7.** Verfahren nach einem der vorhergehenden Ansprüche,
wobei die Detektion auch nach Abschluss der zyklischen Amplifikationsreaktion erfolgt.

**8.** Verfahren nach einem der vorhergehenden Ansprüche,
wobei der detektierbare Marker ein Fluoreszenzmarker ist,
wobei das Detektieren der Fluoreszenzmarker optional mittels eines das gesamte Volumen der Reaktionskammer abbildenden fluoreszenzoptischen Systems erfolgt.

**9.** Verfahren nach einem der vorhergehenden Ansprüche,
wobei die Ausgangskonzentration einer nachzuweisenden Nukleinsäuren in der Probe durch Korrelation mit der Anzahl an Amplifikationszyklen bestimmt wird, die erforderlich ist, damit die Hybridisierung zwischen der nachzuweisenden Nukleinsäure und einer auf dem Substrat immobilisierten Nukleinsäuresonde detektierbar ist.

**10.** Verfahren nach einem der vorhergehenden Ansprüche,
wobei die Probe eine Nukleinsäure in bekannter Konzentration enthält, die mit einer Nukleinsäuresonde des Mikroarrays hybridisiert.

**11.** Verfahren nach einem der vorhergehenden Ansprüche,
wobei die Amplifikation der nachzuweisenden Nukleinsäuren durch eine PCR erfolgt.

**Claims**

**1.** Method for the amplification and for the qualitative and quantitative detection of nucleic acids in a sample comprising the following steps:

a) introducing the sample into a reaction chamber, which is formed between a chamber support and a microarray, wherein the microarray comprises a substrate on which nucleic acid probes are immobilized on array elements;
b) amplifying the nucleic acids to be detected in the reaction chamber by means of a cyclic amplification reaction;
c) detecting a hybridization between the nucleic acids to be detected and the nucleic acid probes immobilized on the substrate,

wherein the nucleic acids to be detected are provided with a detectable marker, **characterized in that** detection is performed at or below an annealing temperature of an amplification cycle during the cyclic amplification reaction.

**2.** Method according to claim 1,
wherein the annealing temperature is 40 °C to 75 °C, optionally 55°C to 65 °C and further optionally about 60 °C.

3. Method according to claim 1,
wherein a temperature below the annealing temperature is 25 °C to 50 °C and optionally 30 °C to 40 °C.

4. Method to any one of the preceding claims,
wherein in each amplification cycle or in every second amplification cycle or in every third amplification cycle or in any arbitrary other interval detection is performed.

5. Method according to any one of the preceding claims,
wherein detection is performed without removing molecules which are not hybridized to the nucleic acids immobilized on the substrate from the reaction chamber.

6. Method according to any one of the preceding claims,
wherein the reaction chamber is a capillary gap between the chamber support and the microarray having a thickness of at most 500 μm and optionally a thickness in the range from 50 μm to 100 μm.

7. Method according to any one of the preceding claims,
wherein detection is also performed after completion of the cyclic amplification reaction.

8. Method according to any one of the preceding claims,
wherein the detectable marker is a fluorescence marker,
wherein optionally the detection of the fluorescence marker is performed via a fluorescent-optical system displaying the total volume of the reaction chamber.

9. Method according to any one of the preceding claims,
wherein the starting concentration of the nucleic acids to be detected in the sample is determined by correlation with the amount of amplification cycles which are necessary in order to allow for a detection of a hybridization between the nucleic acids to be detected and a nucleic acid probe immobilized on the substrate.

10. Method according to any one of the preceding claims,
wherein the sample contains a nucleic acid in a known concentration which hybridizes with a nucleic acid probe on the microarray.

11. Method according to any one of the preceding claims,
wherein the amplification of the nucleic acids to be detected is performed via PCR.

**Revendications**

1. Procédé d'amplification et d'identification qualitative et quantitative d'acides nucléiques dans un échantillon, comportant les étapes suivantes :

   a) introduction de l'échantillon dans une chambre de réaction qui est formée entre un support de chambre et une micromatrice, la micromatrice comportant un substrat sur lequel des sondes d'acide nucléique sont immobilisées sur des éléments de matrice ;
   b) amplification des acides nucléiques à identifier dans la chambre de réaction moyennant une réaction d'amplification cyclique ;
   c) détection d'une hybridation entre les acides nucléiques à identifier et les sondes d'acide nucléique immobilisées sur le substrat,

les acides nucléiques à identifier étant pourvus d'un marqueur détectable,
**caractérisé en ce que** la détection s'effectue pendant la réaction d'amplification cyclique à ou sous une température de recuit d'un cycle d'amplification.

2. Procédé selon la revendication 1,
dans lequel la température de recuit est de 40°C à 75°C, facultativement de 55°C à 65°C et plus facultativement d'environ 60°C.

3. Procédé selon la revendication 1,

dans lequel une température sous la température de recuit est de 25°C à 50°C et facultativement de 30°C à 40°C.

4. Procédé selon l'une des revendications précédentes,
dans lequel la détection s'effectue à chaque cycle d'amplification ou tous les deux cycles d'amplification ou tous les trois cycles d'amplification ou à d'autres intervalles quelconques.

5. Procédé selon l'une des revendications précédentes,
dans lequel la détection s'effectue sans que des molécules non hybridées avec les acides nucléiques immobilisés sur le substrat ne soient retirées de la chambre de réaction.

6. Procédé selon l'une des revendications précédentes,
dans lequel la chambre de réaction est une fente capillaire entre le support de chambre et la micromatrice, d'une épaisseur de maximum 500 $\mu$m et facultativement d'une épaisseur comprise dans la plage de 50 $\mu$m à 100 $\mu$m.

7. Procédé selon l'une des revendications précédentes,
dans lequel la détection s'effectue aussi après achèvement de la réaction d'amplification cyclique.

8. Procédé selon l'une des revendications précédentes,
dans lequel le marqueur détectable est un marqueur à fluorescence,
dans lequel la détection des marqueurs à fluorescence s'effectue facultativement au moyen d'un système optique à fluorescence représentant tout le volume de la chambre de réaction.

9. Procédé selon l'une des revendications précédentes,
dans lequel la concentration de départ d'un acide nucléique à identifier dans l'échantillon est déterminée par corrélation avec le nombre de cycles d'amplification qui est nécessaire pour que l'hybridation entre l'acide nucléique à identifier et une sonde d'acide nucléique immobilisée sur le substrat soit détectable.

10. Procédé selon l'une des revendications précédentes,
dans lequel l'échantillon contient en concentration connue un acide nucléique qui s'hybride avec une sonde d'acide nucléique de la micromatrice.

11. Procédé selon l'une des revendications précédentes,
dans lequel l'amplification des acides nucléiques à identifier s'effectue via une PCR.

FIG 1

# FIG 2

# FIG 3

FIG 4

FIG 5

# FIG 6

# FIG 7

FIG 8

FIG 9

## FIG 10

FIG 11

Abhängigkeit der Molekülzahl im Überstand von der Konzentration und der Kammerndicke

EP 2 266 699 B1

FIG 12

EP 2 266 699 B1

FIG 13

| Marke | MTHFR-677-KS-2b | PAI1-insG-KS-2d | PAI1-insG-5mmC | H1F3-a-23-67 | FakV-506-KS-3b | Marke |
|---|---|---|---|---|---|---|
| Marke | FakV-1691-pmC | FakV-1691-mmT-1 | FakII-20210-pmC | FakII-20210-mmT-1 | PAI1-insG-4pm-2 | Marke |
| Marke | | | | | | Marke |
| | MTR-D919G-mmC-1-se | CBSins68-s1-3-xl | CBS-Kon-2 | FAKV-R306-pmC | FAKV-R306-mmGa | Marke |
| | | | | | | Marke |
| | MTHFR-677pmG | MTHFR-677mmA-1 | MTHFR-1298pmT-1 | MTHFR-1298mmG-1 | MTR-D919G-pmT-se | Marke |
| | | | | | | Marke |
| | MTR-919-KS-1-k | FakV-306-KS-2a | CBS-KS-4-k-2a2 | FakII-20210-KS-1b | MTHFR-1298-KS-1-k | |
| Marke | | | | | | Marke |

63

FIG 14

# FIG 15

## FIG 16

Heizmäander- Struktur zur
Erwärmung das
Keramiksubstrates mittels
Widerstandsheizung

PT- 100 Temperatursensor
zur Steuerung und genauen
Regelung des erforderlichen
Temperatur- Zeit-Profils der
Polymerase-Kettenreaktion
und der
Hybridisierungsreaktion

FIG 17

NOTES:
1. SUBSTRATE THICKNESS: 0.635±0.07
2. THIN FILM METALLIZATION
   AREA ☐
      Ti : 0.1 um NOM.
      Pt : 1.0 um NOM.
      Au : 0.5 um NOM.
   AREA ▨ and AREA ▨
      Ti : 0.1 um NOM.
      Pt : 1.0 um NOM.

   BACK SIDE : NO METALLIZATION

3. RESISTOR VALUE
   AREA ▨ : SENSOR
      Rs = 100 ohm±10% (with TRIMMING) : T.B.D
   AREA ▨ : HEATER
   Rh1+Rh2 = 125 ohm±10% (with TRIMMING) : T.B.D
      TRIMMING PROBE IN NO SUBJECT

FIG 18

FIG 19

FIG 20

**FIG 21**

FIG 22

FIG 23

EP 2 266 699 B1

FIG 24

74

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0012575 A
- US 5412087 A
- WO 9836827 A
- US 5143854 A
- US 5304810 A
- US 5459325 A
- US 5192980 A
- US 5834758 A
- US 5324633 A
- US 6027880 A
- US 5585639 A
- WO 0012759 A
- WO 0072018 A
- WO 0202180 A

- WO 0202810 A
- WO 0102094 A
- DE 19914279
- DE 10253966
- WO 9745559 A
- EP 0456782 A
- DE 10033334
- WO 0025113 A
- WO 9627025 A
- US 5760950 A
- WO 9857151 A
- WO 9927140 A

**In der Beschreibung aufgeführte Nicht-Patentliteratur**

- **D. J. LOCKHART ; E. A. WINZELER.** Genomics, gene expression and DNA arrays. *Nature,* 2000, vol. 405, 827-836
- **A. MARSHALL ; J. HODGSON.** DNA chips: An array of possibilities. *Nature Biotechnology,* 1998, vol. 16, 27-31
- **G. RAMSAY.** DNA Chips: State of the art. *Nature Biotechnology,* 1998, vol. 16, 40-44
- **F. LOTTSPEICH ; H. ZORBAS.** Bioanalytik. Spektrum Akademischer Verlag, 1998
- **A.A. LEITCH ; T. SCHWARZACHER ; D. JACKSON ; I. J. LEITCH.** In vitro Hybridisierung. Spektrum Akademischer Verlag, 1994
- **C. E. HOOPER et al.** Quantitative Photon Imaging in the Life Sciences Using Intensified CCD Cameras. *Journal of Biolumnescence and Chemiluminescence,* 1990, 337-344
- **A. MARSHALL ; J. HODGSON.** DNA Chips: An array of possibilities. *Nature Biotechnology,* 1998, vol. 16, 27-31
- **G. RAMSAY.** DNA Chips: State ofthe Art. *Nature Biotechnology,* 16. Januar 1998, 40-44
- **I. GRYCZCYNSKI et al.** Polarisation sensing with visual detection. *Anal. Chem.,* 1999, vol. 71, 1241-1251
- **M. KWIATOWSKI et al.** Solidphase synthesis of chelate-labelled oligonucleotides: application in triplecolor ligase-mediated gene analysis. *Nucleic Acids Research,* 1994, vol. 22, 13

- **M. P. BRUCHEZ.** Semiconductor nanocrystals as fluorescent biological labels. *Science,* 1998, vol. 281, 2013
- **VAN DE RIJKE et al.** Up-Converting Phosphors: A New Reporter Technology for Nucleic Acid Microarrays. *European EC Meeting on Cytogenetics,* 2000
- **SAMBROOK et al.** Molecular Cloning: A laboratory manual. Cold Spring Harbor Laboratory Press, 2001
- **CHAN et al.** *J. Chem. Soc., Perkin Trans.,* 1999, vol. 1, 315-320
- **KAWAI et al.** *Nucleic Acids Res.,* 1993, vol. 1 (6), 1473-1479
- **SORENSEN et al.** *J. Am. Chem. Soc.,* 2002, vol. 124 (10), 2164-2176
- **SCHONING et al.** *Science,* 2000, vol. 290 (5495), 1347-1351
- **LOTTSPEICH ; ZORBAS.** Bioanalytik. Spektrum Akademischer Verlag, 1998
- **E. LIDELL ; I. WEEKS.** Antibody Technology. BIOS Scientific Publishers Limited, 1995
- **GALLATI ; PRACHT.** *J. Clin. Chem. Clin. Biochem.,* 1985, vol. 23 (8), 454
- Immunogold-Silver Staining, Principles, Methods and Applications. CRC Press, 1995
- *Eur J Immunogenet,* Februar 1991, vol. 18 (1-2), 33-55

- **ERLICH H ; BUGAWAN T ; BEGOVICH AB ; SCHARF S ; GRIFFITH R ; SAIKI R ; HIGUCHI R ; WALSH PS.** *Department of Human Genetics*
- *Mol Cell Probes,* Juni 1993, vol. 7 (3), 199-207
- **BSAT N ; BATT CA.** *Department of Food Science*
- *Immunogenetics,* 1990, vol. 32 (4), 231-41
- *Immunogenetics,* 1991, vol. 34 (6), 413
- **BUGAWAN TL ; BEGOVICH AB ; ERLICH HA.** Department of Human Genetics. Cetus Corporation
- *Hum Immunol,* Dezember 1992, vol. 35 (4), 215-22
- **ELIAOU JF ; PALMADE F ; AVINENS O ; EDOUARD E ; BALLAGUER P ; NICOLAS JC ; CLOT J.** *Laboratory of Immunology*
- *J Immunol Methods,* 30. November 1984, vol. 74 (2), 353-60
- **MOEREMANS M ; DANEELS G ; VAN DIJCK A ; LANGANGER G ; DE MEY J.** *Histochemistry,* 1987, vol. 86 (6), 609-15
- **M.A. HAYAT.** Immunogold-Silver Staining. CRC Press, 1995
- **H.R. SCHWARZ.** Numerische Mathematik. Teubner Verlag, 1998
- **A. MARSHALL ; J. HODGSON.** DNA chips: An array ofpossibilities. *Nature Biotechnology,* 1998, vol. 16, 27-31

- **C. E. HOOPER et al.** Quantitative Photone Imaging in the Life Sciences Using Intensified CCD Cameras. *Journal of Bioluminescence and Chemoluminescence,* 1990, 337-344
- **LOTTSPEICH ; H. ZORBAS.** Bioanalytik. Spektrum Akademischer Verlag, 1998
- **ERLICH H ; BUGAWAN T ; BEGOVICH AB ; SCHARF S ; GRIFFITH R ; SAIKI R ; HIGUCHI R ; WALSH PS.** Department of Human Genetics. Cetus Corp,
- **BSAT N ; BATT CA.** *Immunogenetics,* 1990, vol. 32 (4), 231-41
- **BUGAWAN TL ; BEGOVICH AB ; ERLICH HA.** Hum Immunol. Department of Human Genetics, Cetus Corporation, Dezember 1992, vol. 35, 215-22
- **ELIAOU JF ; PALMADE F ; AVINENS O ; EDOUARD E ; BALLAGUER P ; NICOLAS JC ; CLOT J.** J Immunol Methods. Laboratory of Immunology, Saint Eloi Hospital, 30. November 1984, vol. 74, 353-60
- **MOEREMANS M ; DANEELS G ; VAN DIJCK A ; LANGANGER G ; DE MEY.** *J. Histochemistry,* 1987, vol. 86 (6), 609-15
- In vitro Hybridisierung. **A.A. LEITCH ; T. SCHWARZACHER ; D. JACKSON ; I. J. LEITCH.** In vitro Hybridisierung. Spektrum Akademischer Verlag, 1994
- *Biosensors and Bioelectronics,* 2003, vol. 18, 489-497